# EUROPEAN PATENT APPLICATION

(11) **EP 4 485 738 A1**
(43) Date of publication of application: **01.01.2025**
(21) Application number: 23759200.1
(22) Date of filing: 22.02.2023
(51) Int. Cl.: H02J 3/32, H02J 7/00

(54) **ENERGY STORAGE POWER SUPPLY, AND POWER SUPPLY SYSTEM AND POWER SUPPLY METHOD THEREOF**

(30) Priority: 22.02.2022 CN 202210162055; 22.02.2022 CN 202210163503; 08.03.2022 CN 202210220482; 08.03.2022 CN 202220491179 U
(71) Applicant: Zhejiang Litheli Technology Co., Ltd., Ningbo, Zhejiang 315016 (CN)
(72) Inventor: LI, Bin, Ningbo, Zhejiang 315016 (CN)
(74) Representative: Herrero & Asociados, S.L.
(86) International application number: PCT/CN2023/077628
(87) International publication number: WO 2023/160575

(57) **Abstract**

Provided is an energy storage power supply, which includes a housing, a power connection portion, a power supply main body, and an output portion. The power connection portion, the power supply main body, and the output portion are provided in the housing. The power connection portion is configured to provide electric energy from outside to the power supply main body. The power supply main body is configured to store the electric energy. The output portion is configured to provide the electric energy stored in the power supply main body to an electrical device in a form of a direct current (DC) or an alternating current (AC). The output portion includes at least one DC mating output unit. The electrical device is suitable for cordless electrical connection to the at least one DC mating output unit.

## Description

### TECHNICAL FIELD

The invention relates to the field of energy storage technologies, particularly to an energy storage power supply, and a power supply system and a power supply method thereof.

### BACKGROUND

An energy storage power supply is mainly used to store electric energy, and can supply power to an electrical device in emergency or during outdoor activities. The energy storage power supply is popular because of its larger capacity, providing various interfaces, providing different voltages of direct currents (DC) and alternating currents (AC).

An electric wires or data wire is usually used to connect the energy storage power supply and the electrical device, that is, the energy storage power supply and the electrical device are in wired electrical connection. Although the wired electrical connection is helpful to simplify a structure of the energy storage power supply, it will cause many inconveniences when it is used. For example, when multiple charging wires are connected to the energy storage power supply, the multiple charging wires are prone to tangling, the multiple charging wires may trip a user of the energy storage power supply, and the multiple charging wires may also greatly affect the appearance. In addition, the use of the charging wires to connect the energy storage power supply also limits a use range of electrical device during charging, and it is difficult to meet diverse requirements of users.

### SUMMARY

An objective of the invention is to provide an energy storage power supply, which can supply power to an electrical device that uses a larger current and can meet different electricity requirements of users.

Another objective of the invention is to provide a power supply system, and the energy storage power supply can output a larger current to the electrical device.

According to one aspect of the invention, an energy storage power supply is provided. The energy storage power supply includes a housing, a charging portion, a power supply main body, and a discharge portion. The charging portion, the power supply main body, and the discharge portion are disposed in the housing. The charging portion is configured to provide electric energy from outside to the power supply main body. The power supply main body is configured to store the electric energy. The discharge portion is configured to provide the electric energy stored in the power supply main body to an electrical device in a form of a direct current (DC) or an alternating current (AC). The discharge portion includes at least one first discharge interface suitable for outputting a DC, and an average discharge current of each of the at least one first discharge interface is greater than or equal to 20 amperes (A).

Many garden electric tools use the direct current, and a working current of each of the many garden electric tools is generally not less than 20 A. Since the garden electric tools are usually used outdoors, considering the convenience of using electricity of the garden electric tools, the garden electric tools are usually equipped with rechargeable batteries for power supply. However, once the rechargeable batteries are exhausted, it takes a long time to charge the rechargeable batteries, which brings inconvenience to users of the garden electric tools. The inventor of the invention suggested that an energy storage power supply which is widely used outdoors at present can be used to temporarily supply power to the garden electric tools, so as to ensure that the garden electric tools can be used continuously. However, a DC output interface of the existing energy storage power supply is usually only suitable for low-current electrical devices such as 3C products (i.e., computer, communication, and consumer electronics), and cannot supply power for high-current electrical device such as the garden electric tools. Based on this, the invention provides an energy storage power supply, which is equipped with a DC discharge interface capable of providing larger current, so that it can supply power to high-current electrical device such as the garden electric tools and various requirements of users can be meet.

In some embodiments, the housing is provided with a first connection structure thereon matching with a second connection structure of the electrical device, and the energy storage power supply can be held on (for example, fixed on) the electrical device through the first connection structure and the second connection structure, and the energy storage power supply is capable of being moved along with the electrical device.

Considering that garden electrical tools generally need to move constantly when working, in order to facilitate overall movement of the energy storage power supply and the electrical device, it is beneficial to arrange the energy storage power supply on the electrical device to supply power to the electrical device, which not only facilitates the overall movement, but also reduces the use of wires. Based on this, connection structures matched with each other are respectively arranged on the energy storage power supply and the electrical device, so that the energy storage power supply is held on the electrical device through the connection structures.

In some embodiments, the first connection structure may be a snap-fit connection structure, a latch connection structure, sliding groove connection structure, or a magnetic connection structure; or, the first connection structure may be an embedded connection structure; and the connection between the housing and the electrical device is realized by embedding at least a part of the housing into an installation groove of the electrical device.

The above explanations of the first connection structure are only illustrative, and it is not limited that the invention can only adopt the above-mentioned connection structures. Any structure that can fix the energy storage power supply on the electrical device is within the scope of protection of the invention.

In some embodiments, the at least one first discharge interface is exposed to an outer side of the housing, so as to allow the electrical device to directly mate with the at least one first discharge interface to realize electrical connection between the energy storage power supply and electrical device. In some embodiments, the at least one first discharge interface is arranged on the outer side of the housing, so as to facilitate direct mating with a corresponding interface on the electrical device, which further reduces the use of wires.

In some embodiments, the energy storage power supply further includes a grip portion, and the grip portion and the at least one first discharge interface are respectively located on different sides of the housing, so that the grip portion can still be operated by a user when the energy storage power supply is connected with the electrical device.

In some embodiments, the charging portion includes at least one charging interface, which is exposed the outer side of the housing, and the at least one charging interface and the at least one first discharge interface are located on different sides of the housing, so that the at least one charging interface can be used when the energy storage power supply is connected with the electrical device via one of the at least one first discharge interface.

In some embodiments, the discharge portion further includes at least one second discharge interface suitable for outputting an AC and at least one third discharge interface suitable for outputting a DC, an average discharge current of each of the at least one third discharge interface is less than 20 A, and the at least one first discharge interface, the at least one second discharge interface and the at least one third discharge interface are all exposed to the outer side of the housing. The at least one second discharge interface and/or the at least one third discharge interface and the at least one first discharge interface are located on different sides of the housing, so that at least one of the as least one second discharge interface and/or the at least one third discharge interface can be used when the at least one first discharge interface is electrically connected with the electrical device. It is worth mentioning that the at least one third discharge interface is mainly used to supply power to the 3C products.

In some embodiments, the energy storage power supply further includes an identification module for identifying the electrical device, and the identification module is configured to receive information from the electrical device and determine whether the electrical device matches the energy storage power supply based on the received information. In response to the electrical device matching the energy storage power supply, the energy storage power supply is allowed to supply power to the electrical device, or in response to the electrical device not matching the energy storage power supply, the energy storage power supply is prohibited from supplying power to the electrical device. The arrangement of the identification module can increase the safety of electricity use and avoid the danger of supplying power to mismatched devices from the energy storage power supply.

According to another aspect of the invention, a power supply system of an energy storage power supply and an electrical device is provided, and the power supply system includes: the aforementioned energy storage power supply; and at least one electrical device. Each of the at least one electrical device includes a device housing and a device charging interface disposed on the device housing, and the device charging interface is configured to be electrically connected with the first discharge interface to obtain electric energy of the energy storage power supply.

In some embodiments, the housing of the energy storage power supply is provided with a first connection structure, the device housing of the electrical device is provided with a second connection structure, and the first connection structure is detachably connected to the second connection structure. The energy storage power supply can be held on (for example, fixed on) the electrical device through the first connection structure and the second connection structure, and the energy storage power supply is capable of being moved along with the electrical device.

In some embodiments, the device charging interface and the first discharge interface are suitable for cordless electrical connection. The cordless electrical connection mentioned in the invention refers to a direct mating of two interfaces, and no wire is used between the two interfaces. The advantage of the cordless electrical connection is that it can reduce the use of wires, simplify the structure of the energy storage power supply and the electrical device, and avoid all kinds of inconvenience caused by using wires.

In other embodiments, the device charging interface and the first discharge interface are suitable for wired electrical connection. The wired electrical connection mentioned in the invention means that the two interfaces need to be electrically connected through a wire. The advantage of the wired electrical connection is that an installation accuracy of the energy storage power supply is lower, and if the energy storage power supply is slightly displaced when using the electrical device, the electric connection between the two interfaces will not be disconnected.

In some embodiments, the device housing of the electrical device is provided an open bin for placing the energy storage power supply therein, the energy storage power supply is suitable to be placed in the open bin along a first direction, and the device charging interface is disposed on a bottom surface of the open bin extended along the first direction, so that when the energy storage power supply moves along the first direction, the first discharge interface is capable of being directly mated with the device charging interface.

In some embodiments, when the electrical device is in operation, the first direction is a vertical direction, so that a tight contact between the first discharge interface and the device charging interface is achieved under the action of gravity of the energy storage power supply.

In some embodiments, the housing of the energy storage power supply and the device housing are respectively provided with locking structures matched with each other for connecting the housing and the device housing, so as to stably hold the energy storage power supply in the open bin.

In some embodiments, the housing of the energy storage power supply is provided with a grip portion, and when the energy storage power supply is disposed in the open bin, the grip portion is exposed outside the open bin. The charging portion includes at least one charging interface, and when that energy storage power supply is disposed in the open bin, at least one charging interface is expose outside the open bin. The discharge portion further includes at least one second discharge interface suitable for outputting an AC and at least one third discharge interface suitable for outputting a DC, and when the energy storage power supply is disposed in the open bin, at least one of the at least one second discharge interface and/or at least one of the at least one the third discharge interface is/are exposed outside the open bin.

In some embodiments, the device housing is provided with an open bin for placing the energy storage power supply, the device charging interface is arranged outside the open bin, and the first discharge interface is electrically connected with the charging interface through a wire.

In some embodiments, the electrical device includes a motor. The power supply system provided by the invention is particularly suitable for the electrical device with the motor, and when the electrical device is used, a main body of the electrical device inevitably vibrates under the influence of the motor, the energy storage power supply being stably held on the electrical device can ensure that the energy storage power supply can be effectively prevented from being separated from the electrical device when the electrical device vibrates.

A yet another objective of the invention is to provide an energy storage power supply suitable for cordless power supply to a DC electrical device.

In order to achieve the above objective, one aspect of the invention provides an energy storage power supply, which includes a housing, a power connection portion, a power supply main body, and an output portion. The power connection portion, the power supply main body, and the output portion are provided in the housing. The power connection portion is configured to provide electric energy from outside to the power supply main body. The power supply main body is configured to store the electric energy. The output portion is configured to provide the electric energy stored in the power supply main body to an electrical device in a form of a DC or an AC. The output portion includes at least two DC mating output units. At least one DC mating output unit of the at least two DC mating output units is arranged outside the housing, and a first electrical device is suitable for cordless electrical connection to the at least one DC mating output unit arranged outside the housing from the outside of the housing. At least one DC mating output unit of the at least two DC mating output units is disposed in the housing, and a second electrical device is suitable for being inserted into the housing and suitable for cordless electrical connection to the at least one DC mating output unit disposed in the housing.

In some embodiments, the housing includes a housing body and at least one mating portion disposed on the housing body, and the mating portion defines at least one accommodating cavity, and the at least one DC mating output unit disposed in the housing is disposed in the at least one accommodating cavity, and the second electrical device is suitable for being inserted into the at least one accommodating cavity and suitable for cordless electrical connection to the at least one DC mating output unit disposed in the at least one accommodating cavity.

In some embodiments, the first electrical device is a device that outputs energy in the form of non-electric energy, and the second electrical device is a device that outputs electric energy.

In some embodiments, each of the at least two DC mating output units includes at least one first DC mating output power supply terminal and at least one second DC mating output power supply terminal, and the electrical device is connected with the first DC mating output power supply terminal and the second DC mating output power supply terminal to realize cordless electrical connection. The DC mating output unit further includes at least one DC mating output communication terminal configured to realize communication connection with the electrical device, and the energy storage power supply is configured to send at least one power supply related information to the electrical device and/or receive at least one device related information through the at least one DC mating output communication terminal.

In some embodiments, the output portion further includes at least one DC connection output unit, and the at least one DC connection output unit is disposed outside the housing, and a third electrical device is suitable for being electrically connected with the at least one DC connection output unit through a wire.

In some embodiments, the power supply main body includes an inverter module configured to invert a DC into an AC, and the output portion further includes at least one AC connection module, and the at least one AC module is electrically connected with the inverter module to output the AC.

Another aspect of the invention provides an energy storage power supply. The energy storage power supply includes a housing, a power connection portion, a power supply main body, and an output portion. The power connection portion, the power supply main body, and the output portion are provided in the housing. The power connection portion is configured to provide electric energy from outside to the power supply main body. The power supply main body is configured to store the electric energy. The output portion is configured to provide the electric energy stored in the power supply main body to an electrical device in a form of a DC or an AC. The output portion includes at least one DC mating output unit. The at least one DC mating output unit is disposed outside the housing, and the energy storage power supply has at least one of a first feature and a second feature, so that the energy storage power supply is suitable for supplying power to a DC electrical device through cordless electrical connection:
the first feature: the at least one DC mating output unit is movably disposed on the housing, so that a position of the DC mating output unit on the housing is capable of being adjusted to adapt to charging interfaces in different locations on different electrical devices; and
the second feature: the housing is provided with a first connection structure detachably connected with a second connection structure of the electrical device, after one of the at least one DC mating output unit is mated with a charging interface of the DC electrical device, the housing is connected with the electrical device through the first connection structure and the second connection structure, and the energy storage power supply is capable of being moved along with the electrical device.

In some embodiments, a circumferential side surface of the housing is provided with a rail extending along a height direction of the energy storage power supply, and the at least one DC mating output unit is movably disposed on the rail to adjust a height of the at least one DC mating output unit.

In some embodiments, the first connection structure is a snap-fit connection structure, a latch connection structure, a sliding groove connection structure, or a magnetic connection structure; or, the first connection structure may be an embedded connection structure; and the connection between the housing and the electrical device is realized by embedding at least a part of the housing into a power supply bin of the electrical device.

According to a yet another aspect of the invention, a power supply system is provided, and the power supply system includes: the aforementioned energy storage power supply; and at least one electrical device. Each of the at least one electrical device includes a device housing and a device mating portion disposed on the device housing, an external DC power supply is suitable for supplying power to the electrical device through the device mating portion, and the device connection portion is suitable for cordless electrical connection to the DC mating unit disposed outside the housing.

In some embodiments, the electrical device is a non-motorized device or a motorized device, the non-motorized device is one selected from the group consisting of a mobile device, a power supply device, a projection device, a display, a communication device providing a local area networks, a charging device, an audio device, and a lamp, and the motorized device is one selected from the group consisting of a walking device, a garden device, a drinking water device, a fan and an AC/DC outdoor air conditioner.

In some embodiments, the number of the electrical device is at least two, the output portion includes at least two DC mating output units, and the at least two electrical devices are capable of being simultaneously and respectively cordless electrical connection to the at least two DC mating output units.

In some embodiments, the device mating portion is movably arranged on the device housing, and a position of the device mating portion on the device housing is capable of being adjusted to adapt to the DC mating output unit at different positions.

In some embodiments, the housing of the energy storage power supply is provided with a first connection structure, the device housing of the electrical device is provided with a second connection structure, and the first connection structure is detachably connected to the second connection structure. The energy storage power supply can be held on (for example, fixed on) the electrical device through the first connection structure and the second connection structure, and the energy storage power supply is capable of being moved along with the electrical device.

In some embodiments, the device housing of the electrical device is provided an open bin for placing the energy storage power supply therein, the energy storage power supply is suitable to be placed in the open bin along a first direction, and the device mating portion is arranged on a bottom surface of the open bin, so that after the energy storage power supply enters the open bin, the DC mating output unit is directly mated with the device mating portion.

In some embodiments, when the electrical device is in operation, the first direction is a vertical direction, so that a tight contact between the DC mating output unit and the device mating portion is achieved under the action of gravity of the energy storage power supply.

In some embodiments, the housing of the energy storage power supply and the device housing are respectively provided with locking structures matched with each other so as to stably hold the energy storage power supply in the open bin.

Compared with the related art, the invention has at least the advantages as follows:
(1) the energy storage power supply and the electrical device are mated in a cordless electrical connection manner, and thus the use of wires is reduced; and
(2) the energy storage power supply is strongly associated with the electrical device, thereby forming a whole that can move synchronously, and meeting the requirements of users in different positions.

A still another objective of the invention is to provide a power supply system and a power supply method of an energy storage power supply and an electrical device, which can effectively ensure the safety of electricity consumption.

In order to achieve the above objectives, according to one aspect of the invention, a power supply system is provided, and a power supply system includes an energy storage power supply and an electrical device. The energy storage power supply includes a battery module, a battery management module and a first output interface. The battery management module is configured to controllably output electric energy stored in the battery module through the first output interface. The electrical device includes an electric main body, an electric management module, and a first input interface. The electric management module is configured to controllably supply the electric energy input from the first input interface to the electric main body. The first input interface is suitable to be electrically connected with the first output interface to realize conductive connection and communication connection between the battery management module and the electric management module. The electric management module is configured to monitor a circuit state of the electrical device, and the battery management module is suitable for monitoring a circuit state of the energy storage power supply, so that when an internal circuit of the electrical device or an internal circuit of the energy storage power supply is abnormal, the electric management module and/or the battery management module disconnect/disconnects a connection between the battery module and the electric main body to prevent the electric main body from using electricity.

In some embodiments, the battery management module is configured to: when the energy storage power supply is in operation, detect the circuit state of the energy storage power supply and generate a working state code based on the circuit state of the energy storage power supply, and the battery management module is configured to: when the battery management module is in communication connection with the electric management module, continuously send the working state code to the electric management module.

In some embodiments, the electrical device further includes a device switch, and the device switch is configured to turn on/off an internal circuit of the electrical device. When the device switch is turned on, the electrical device is configured to send a level signal to the energy storage power supply through the first input interface to wake up the battery management module.

In some embodiments, the energy storage power supply further includes a power switch, and the power switch is configured to control the battery management module to be turned on/off; and when the power switch is turned on, the battery management module is awakened.

In some embodiments, the battery management module includes an identification unit. The identification unit is configured to send an identification signal to the electric management module through the first output interface when the battery management module is awakened by the electrical device, and the electric management module is configured to: in response to determining by the electric management module that a handshake is successful according to the identification signal, obtain the electric energy from the energy storage power supply and provides the electric energy to the electric main body.

In some embodiments, the electric management module includes at least one detection unit and at least one power protection switch. The at least one power protection switch is electrically connected with the electric main body, the at least one detection unit is configured to detect a circuit parameter of the electrical device, and the at least one power protection switch is configured to be turned off when the circuit parameter detected by the at least one detection unit exceeds a preset range, so as to cut off power supply to the electric main body.

In some embodiments, the electric management module includes a voltage detection unit for detecting a circuit voltage, a current detection unit for detecting a circuit current and a temperature detection unit for detecting a circuit temperature. In response to the detected circuit voltage, the detected circuit current or the detected circuit temperature exceeding a preset range, the power protection switch is turned off.

In some embodiments, the energy storage power supply includes at least two first output interfaces and an inverter module. The inverter module is electrically connected with the battery management module and is configured to convert a direct current into an alternating current, and the inverter is electrically connected with at least one of the at least two first output interfaces to output the alternating current.

According to a yet another aspect of the invention, a power supply method of an energy storage power supply and an electrical device is provided, and the power supply method includes the following steps:
a connecting step, including: electrically connecting the energy storage power supply and the electrical device, to make a battery management module of the energy storage power supply be conductively and communicatively connected to an electric management module of the electrical device;
a power supply step, including: obtaining, by an electric main body of the electrical device, electric energy of the energy storage power supply to work; and
a monitoring step, including: monitoring, by the battery management module, a circuit state of the energy storage power supply; monitoring, by the electric management module, a circuit state of the electrical device; in response to an internal circuit of the electrical device or an internal circuit of the energy storage power supply being abnormal, disconnecting, by the electric management module and/or the battery management module, a connection between the battery module and the electric main body to prevent the electric main body from using electricity.

In some embodiments, the power supply method further includes a handshake step between the connecting step and the power supply step, and the handshake step includes: sending, by the battery management module, an identification signal to the electric management module; determining, by the electric management module, whether a handshake is successful according to the identification signal; and in response to determining that the handshake is successful, entering the power supply step, or, in response to determining that the handshake is not successful, not entering the power supply step.

In some embodiments, the power supply method further includes a wake-up step between the connecting step and the handshake step, and the wake-up step includes: operating, by a user, a switch to wake up the battery management module, and in response to the battery management module having being waken up, entering the handshake step.

In some embodiments, the switch is disposed on the electrical device to turn on/off an internal circuit of the electrical device. In the wake-up step, the user turns on the switch, and the electrical device sends a level signal to the energy storage power supply to wake up the battery management module.

In some embodiment, that monitoring step includes the following steps:
monitoring, by the battery management module, the circuit state of the energy storage power supply and generating a working state code in real time;
continuously sending, by the battery management module, the working state code to the electric management module;
reading, by the electric management module, the working state code, and in response to the working state code being abnormal, disconnecting, by the electric management module, power supply to the electric main body; and
monitoring, by the electric management module, the circuit state of the electrical device, and in response to the circuit state of the electrical device being abnormal, disconnecting, by the electric management module, power supply to the electric main body.

Compared with the related art, the invention has the beneficial effects that the electricity safety between the energy storage power supply and the electrical device can be effectively guaranteed, and when the circuit of the energy storage power supply or the electrical device is abnormal, the circuit can be cut off in time to avoid the danger of electricity use.

An objective of the invention is to provide an energy storage power supply, which can safely supply power to an electrical device that uses a larger current and can meet different electricity requirements of users.

Another objective of the invention is to provide a power supply system, and the energy storage power supply can output a larger current to the electrical device.

In order to achieve the above objectives, one aspect of the invention provides an energy storage power supply. The energy storage power supply includes a housing, a charging portion, a power supply main body, and a discharge portion. The charging portion, the power supply main body, and the discharge portion are disposed in the housing. The charging portion is configured to provide electric energy from outside to the power supply main body. The power supply main body is configured to store the electric energy. The discharge portion is configured to provide the electric energy stored in the power supply main body to an electrical device in a form of a DC or an AC. The discharge portion includes at least one first discharge interface suitable for outputting a DC, and an average discharge current of each of the at least one first discharge interface is greater than or equal to 8 A. The discharge portion further includes at least one other discharge interface different from the at least one first discharge interface, and when the energy storage power supply is configured to output a current from one of the at least one first discharge interface, the at least one other discharge interface is configured to not output a current or is configured to be physically covered.

Many garden electric tools use the direct current, and a working current of each of the many garden electric tools is generally not less than 20 A. Since the garden electric tools are usually used outdoors, considering the convenience of using electricity of the garden electric tools, the garden electric tools are usually equipped with rechargeable batteries for power supply. However, once the rechargeable batteries are exhausted, it takes a long time to charge the rechargeable batteries, which brings inconvenience to users of the garden electric tools. The inventor of the invention suggested that an energy storage power supply which is widely used outdoors at present can be used to temporarily supply power to the garden electric tools, so as to ensure that the garden electric tools can be used continuously. However, a DC output interface of the existing energy storage power supply is usually only suitable for low-current electrical devices such as 3C products (i.e., computer, communication, and consumer electronics), and cannot supply power for high-current electrical device such as the garden electric tools. Based on this, the invention provides an energy storage power supply, which is equipped with a DC discharge interface capable of providing larger current, so that it can supply power to high-current electrical device such as the garden electric tools and various requirements of users can be meet. Further, considering electrical safety, efforts should be made to avoid supplying power to other electrical device while the energy storage power supply provides power to such higher-current electrical device.

In some embodiments, the discharge portion includes a control module, and the control module is configured to control an current output of each of the at least one first discharge interface and the at least one other discharge interface, and the control module is configured to control the at least one other discharge interface not to output an current when the at least one first discharge interface outputs a current.

In an embodiment, the control module includes a switch disposed on the housing, and the switch is capable of being operated by a user to manually control the control module to turn on/off.

In other embodiments, the control module includes a switch disposed on the housing, and the switch is capable of being operated by a user to manually control the control module to turn on/off.

In some embodiments, a surface of the housing is divided into a first area and a second area by a looped boundary line (that is to say, a starting point and an ending point of the looped boundary line coincide). The looped boundary line defines a boundary surface parallel to at least one surface of the housing, and the at least one other discharge interface of the energy storage power supply is disposed in the first area. When the at least one first discharge interface is electrically connected with the electrical device, the first area of the housing is surrounded by the device housing of the electrical device, and the at least one other discharge interface in the first area is physically covered.

In some embodiments, the boundary surface is parallel to a bottom surface of the housing, the at least one first discharge interface is disposed on the bottom surface or a top surface of the housing, and the first area is close to the bottom surface of the housing.

In some embodiments, the housing is provided with a grip portion in the second area.

According to another aspect of the invention, an energy storage power supply is provided, which including a housing, a charging portion, a power supply main body and a discharge portion. The charging portion, the power supply main body, and the discharge portion are disposed in the housing. The charging portion is configured to provide electric energy from outside to the power supply main body. The power supply main body is configured to store the electric energy. The discharge portion is configured to provide the electric energy stored in the power supply main body in a form of a DC or an AC to an electrical device. The discharge portion includes at least one first discharge interface suitable for outputting a DC, and the discharge portion is configured to output a current of not less than 8 A through one of the at least one first discharge interface. The housing is provided with at least one battery bin, and the discharge portion includes a second discharge interface disposed in the battery bin, and a battery pack is configured to be inserted into the battery bin and electrically connected with the second discharge interface to obtain electric energy. The discharge portion further includes at least one other discharge interface different from the at least one first discharge interface and the second discharge interface, and when the energy storage power supply is configured to output the current through the first discharge interface, the at least one other discharge interface does not output a current or is physically covered.

In some embodiments, the discharge portion includes a control module, and the control module is configured to control an current output of each of the at least one first discharge interface and the at least one other discharge interface, and the control module is configured to control the at least one other discharge interface not to output an current when the at least one first discharge interface outputs a current. The control module includes a switch disposed on the housing, and the switch is capable of being operated by a user to manually control the control module to turn on/off.

In some embodiments, a surface of the housing is divided into a first area and a second area by a looped boundary line (that is to say, a starting point and an ending point of the looped boundary line coincide). The looped boundary line defines a boundary surface parallel to at least one surface of the housing, and the at least one other discharge interface of the energy storage power supply is disposed in the first area. When the at least one first discharge interface is electrically connected with the electrical device, the first area of the housing is surrounded by the device housing of the electrical device, and the at least one other discharge interface in the first area is physically covered.

According to a yet another aspect of the invention, a power supply system is provided, and power supply system includes the aforementioned energy storage power supply; and at least one electrical device. Each of the at least one electrical device includes a device housing and a device charging interface disposed on the device housing, and the device charging interface is configured to be electrically connected with the first discharge interface to obtain electric energy of the energy storage power supply.

In some embodiments, the device charging interface and the first discharge interface are suitable for cordless electrical connection. The cordless electrical connection mentioned in the invention refers to the direct mating of two interfaces, and no wire is used between the two interfaces. The advantage of cordless electrical connection is that it can reduce the use of wires, simplify the structure of the energy storage power supply and the electrical device, and avoid all kinds of inconvenience caused by using wires.

In other embodiments, the device charging interface and the first discharge interface are suitable for wired electrical connection. The wired electrical connection mentioned in the invention means that the two interfaces need to be electrically connected through a wire. The advantage of the wired electrical connection is that an installation accuracy of the energy storage power supply is lower, and if the energy storage power supply is slightly displaced when using the electrical device, the electric connection between the two interfaces will not be disconnected.

In some embodiments, the device housing is provided with an open bin for placing the energy storage power supply therein, the energy storage power supply is suitable to be placed in the open bin along a first direction and electrically connected with the device charging interface, and a wall of the open bin is configured to cover the at least one other discharge interfaces on the energy storage power supply.

In some embodiments, the device charging interface is disposed on a bottom surface of a bin body extended along the first direction, so that when the energy storage power supply moves along the first direction, the first discharge interface is capable of being directly mated with the device charging interface.

In some embodiments, the electrical device is a motorized electrical device. The power supply system provided by the invention is especially suitable for the motorized electrical device with a motor, and the safety of the electrical device is particularly important when used.

### BRIEF DESCRIPTION OF DRAWINGS

FIG. 1 illustrates a three-dimensional schematic diagram of an energy storage power supply and a battery in a state of separation according to an embodiment 1, and a partial sectional schematic diagram of the energy storage power supply along a section line H-H.
FIG. 2A illustrates a schematic diagram of electrical devices adapted to the energy storage power supply according to the embodiment 1.
FIG. 2B illustrates a three-dimensional schematic diagram of the energy storage power supply in the embodiment 1 and a perspective view of the pluggable electrical device of the energy storage power supply as a power supply device.
FIG. 2C illustrates a schematic diagram of the energy storage power supply of the embodiment 1 and a schematic diagram of a local section of the energy storage power supply along H-H.
FIG. 2D illustrates a schematic diagram of the energy storage power supply in the embodiment 1.
FIG. 2E illustrates another schematic diagram of the connection between the energy storage power supply and the electrical device in the embodiment 1.
FIG. 3 illustrates a schematic diagram of an application scenario of the energy storage apparatus in the embodiment 1.
FIG. 4A and FIG. 4B illustrate schematic diagrams showing the deformation of the electrical device in the embodiment 1.
FIG. 4C illustrates another schematic diagram showing the deformation of the electrical device in the embodiment 1.
FIG. 4D illustrates another schematic diagram showing the deformation of the electrical device in the embodiment 1.
FIG. 4E illustrates another schematic diagram showing the deformation of the electrical device in the embodiment 1.
FIG. 4F illustrates a three-dimensional schematic diagram of the energy storage power supply and the electrical device in a modified embodiment of the embodiment 1.
FIG. 4G illustrates a three-dimensional schematic diagram of the energy storage power supply and the electrical device in a modified embodiment of the embodiment 1.
FIG. 4H illustrates a three-dimensional schematic diagram of the energy storage power supply and the electrical device and a partial schematic diagram of the energy storage power supply in a modified embodiment the embodiment 1.
FIG. 4I illustrates a three-dimensional schematic diagram of the energy storage power supply and the electrical device and a partial schematic diagram of the energy storage power supply in a modified embodiment the embodiment 1.
FIG. 4J illustrates a three-dimensional schematic diagram of the energy storage power supply and the electrical device and a partial schematic diagram of the electrical device in a modified embodiment the embodiment 1.
FIG. 4K illustrates a schematic diagram of the circuit connection between the energy storage power supply and the electrical device and a partial schematic diagram of the electrical device in a modified embodiment the embodiment 1.
FIG. 4L illustrates a schematic diagram of the circuit connection between the energy storage power supply and the electrical device and a partial schematic diagram of the electrical device in a modified embodiment the embodiment 1.
FIG. 5A illustrates a schematic diagram of the circuit connection between the energy storage power supply and the electrical device and a partial schematic diagram of the electrical device in a modified embodiment the embodiment 1.
FIG. 5B illustrates a partial schematic diagram of the electrical device when the energy storage power supply of a modified embodiment the embodiment 1 is buckled by the electrical device.
FIG. 5C illustrates a partial schematic diagram of the electrical device when the energy storage power supply is released from the electrical device according to a modified embodiment the embodiment 1.
FIG. 6A illustrates a schematic diagram of the circuit connection between the energy storage power supply and the electrical device and a partial schematic diagram of the electrical device in a modified embodiment the embodiment 1.
FIG. 6B illustrates a schematic diagram of the circuit connection between the energy storage power supply and the electrical device and a partial schematic diagram of the electrical device in a modified embodiment the embodiment 1.
FIG. 7 illustrates a schematic diagram of functional modules of the energy storage power supply of the invention.
FIG. 8 illustrates a schematic structural diagram of the energy storage power supply in embodiments 2 and 3.
FIG. 9 illustrates a functional module schematic diagram of the charging module of the energy storage power supply according to the embodiments 2 and 3.
FIG. 10 illustrates a schematic diagram of the functional modules of the discharge module of the energy storage power supply according to the embodiments 2 and 3.
FIG. 11 illustrates a schematic structural diagram of the energy storage power supply in the embodiments 2 and 3.
FIG. 12 illustrates a schematic diagram when the energy storage power supply of the embodiments 2 and 3 supplies power to a chainsaw.
FIG. 13 illustrates a schematic diagram of a direct electromechanical connection between the energy storage power supply and a snow blower in the embodiments 2 and 3.
FIG. 14A illustrates a schematic diagram of an energy storage power supply provided with a handle according to the embodiment 2.
FIG. 14B illustrates a schematic diagram of an energy storage power supply with a holding groove in the embodiment 2.
FIG. 15 illustrates a schematic diagram of the electromechanical connection between the energy storage power supply and the snow blower in the embodiments 2 and 3.
FIG. 16 illustrates a schematic flow chart of communication between the energy storage power supply and the electrical device in the embodiment 2.
FIG. 17 illustrates a functional module schematic diagram of a discharge module of the energy storage power supply according to the embodiment 3.
FIG. 18 illustrates a schematic diagram of a terminal connection when the energy storage power supply of the embodiment 3 is directly coupled with a motorized electrical device.
FIG. 19 illustrates a schematic diagram of the energy storage power supply of the embodiment 3 installed in the groove of a lawn mower and connected by a connecting wire.
FIG. 20 illustrates a schematic structural diagram of the energy storage power supply in the embodiment 3.
FIG. 21A illustrates a schematic diagram when the energy storage power supply of the embodiment 3 is installed in the groove of the lawn mower, and the third discharge terminal and the fourth discharge terminal are shielded by a groove.
FIG. 21B illustrates a schematic diagram when the energy storage power supply of the embodiment 3 is installed in the groove of the mower, and the third discharge terminal and the fourth discharge terminal are shielded by a baffle.
FIG. 21C illustrates a schematic structural diagram of the baffle in the embodiment 3 when the baffle is hinged.
FIG. 21D illustrates a schematic structural view of the baffle of the embodiment 3 when the baffle is controlled by an electric push rod.
FIG. 22 illustrates a schematic diagram of functional modules of the control system of the discharge circuit controlled by the energy storage power supply in the embodiment 3.
FIG. 23 illustrates an application schematic diagram of a power supply system of an energy storage power supply and an electrical device in an embodiment 4.
FIG. 24 illustrates a schematic diagram of the connection of the power supply system of the energy storage power supply and the electrical device in the embodiment 4.
FIG. 25 illustrates a schematic block diagram of an energy storage power supply of the power supply system of the energy storage power supply and the electrical device in the embodiment 4.
FIG. 26 illustrates a schematic diagram of the circuit management of the power supply system of the energy storage power supply and the electrical device in the embodiment 4.
FIG. 27 illustrates a schematic diagram of BMS module of a power supply system of the energy storage power supply and the electrical device in the embodiment 4.
FIG. 28 illustrates a schematic circuit diagram of an implementation of circuit management of the electrical device in the power supply system of the energy storage power supply and the electrical device in the embodiment 4.
FIG. 29 illustrates a block diagram of an implementation of circuit management of the electrical device in the power supply system of the energy storage power supply and the electrical device in the embodiment 4.
FIG. 30 illustrates a schematic circuit diagram of another implementation of circuit management of the electrical device in the power supply system of the energy storage power supply and the electrical device in the embodiment 4.
FIG. 31 illustrates a schematic circuit diagram of another implementation of circuit management of the electrical device in the power supply system of the energy storage power supply and the electrical device in the embodiment 4.
FIG. 32 illustrates a schematic diagram of another implementation of the energy storage power supply of the power supply system of the energy storage power supply and the electrical device in the embodiment 4.
FIG. 33 illustrates a schematic block diagram of the flow of an electric protection method for energy storage power supply and power professional components in the embodiment 4.

### DETAILED DESCRIPTION OF EMBODIMENTS

In the following, the invention will be further described in combination with specific embodiments. It should be noted that under the premise of no conflict, the following embodiments or technical features can be arbitrarily combined to form new embodiments.

The inventor of the invention aims to propose a power supply system with strong correlation between an energy storage power supply and an electrical device. When the energy storage power supply supplies power to the electrical device, the energy storage power supply and the electrical device are directly connected to form a tight whole without using wires, which is beneficial to an overall movement of the system on the one hand, and can also achieve the purposes of saving space and reducing the use of wires on the other hand. Based on the idea of the invention, the inventor of the invention put forward the following ideas to solve technical problems.

Firstly, the existing energy storage power supply is improved, so that a part of existing electrical devices can be directly disposed on the energy storage power supply disclosed by the invention and cordlessly connected with the energy storage power supply disclosed by the invention. This improvement idea is suitable for the electrical device whose volume is much smaller than that of the energy storage power supply, while the smaller electrical device usually uses a DC as a power supply, so this improvement idea is mainly suitable for a DC output interface of the energy storage power supply.

Secondly, the existing energy storage power supply and/or the existing electrical device is/are improved, so that when the energy storage power supply and the electrical device are placed close to each other, their interfaces can be directly mated to realize cordless electrical connection. This improvement idea is suitable for the electrical device whose volume is close to the energy storage power supply, and is suitable for both a DC output interface and an AC output port.

Thirdly, the existing electrical device and the existing energy storage power supply are improved, so that the energy storage power supply can be directly disposed on the electrical device and cordlessly connected with the electrical device. The improvement idea is suitable for the electrical device whose volume is much larger than that of the energy storage power supply, while the larger electrical device usually uses an AC as a power supply, so the improvement idea is mainly suitable for an AC output interface of the energy storage power supply.

It is worth mentioning that technical solutions of the invention are mainly aimed at the strong connection between the DC output interface of the energy storage power supply and the electrical device, and the technical solutions for the AC output interface of the energy storage power supply is described in detail in other applications of the applicant.

### Embodiment 1

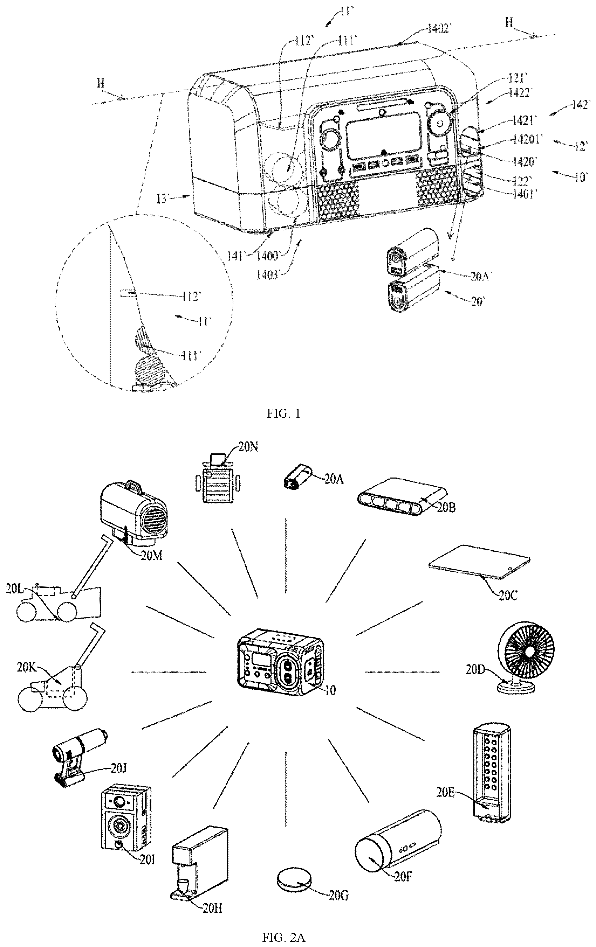

As illustrated in FIG. 1A and FIG. 1B, according to an illustrated embodiment of the invention, an energy storage apparatus is disclosed and explained in detail. The energy storage apparatus includes an energy storage power supply 10' and at least one charging device 20'. The charging device 20' can be charged by the energy storage power supply 10'. The charging device 20' and the energy storage power supply 10' can be separately to respectively supply power to two devices 30', so that at least two devices 30' can also be supplied by the energy storage power supply 10' when they are kept at a certain distance.

As illustrated in FIG. 2A through FIG. 2D, an energy storage apparatus according to another illustrated embodiment of the invention is disclosed and explained in detail. The energy storage apparatus includes an energy storage power supply 10 and at least one electrical device 20. The electrical device 20 can be cordlessly and electrically connected with the energy storage power supply 10. It is worth mentioning that the electrical device 20 is electrically connected with the energy storage power supply 10 in a contact connection manner, and the contact connection manner can be made without wires.

As the electrical device 20 and the energy storage power supply 10 are electrically connected in the contact mating manner, it is more convenient to take, put, store and transport the energy storage apparatus, and saves space. In addition, reducing the use of wires can also reduce the entanglement in space, to prevent issues such as entanglement and sudden disconnection from connection interfaces.

When the electrical device 20 is placed in the energy storage power supply 10, the energy storage power supply 10 outputs a current to the electrical device 20.

In an embodiment, the number of the electrical device 20 is at least one, and a type of the electrical device 20 is not limited. The electrical device 20 includes, but is not limited to, a power supply device, an intelligent device, an outdoor electrical device, or a cooking device, such as a battery pack 20A, multi-pack battery pack 20B containing at least two battery packs, a mobile device 20C, an electric fan 20D, a lamp 20E, a projection device 20F, a communication device 20G providing a local area network, a drinking device 20H, an audio device 20I, a cleaning device 20J, an AC/DC outdoor air conditioner 20M, a walking device 20K, and a garden device 20L, and a fitness device 20N.

In an embodiment, the power supply device includes, but is not limited to, the battery pack 20A, the multi-pack battery pack 20B containing at least two battery packs, or a smart battery pack.

In an embodiment, the mobile device 20C includes, but is not limited to, a mobile phone, an ipad, an ipod, a game machine, an AR device, or a VR device.

In an embodiment, the communication device 20G providing the local area network includes but is not limited to a relay signal amplifier or a wireless router.

In an embodiment, the cleaning device 20J includes, but is not limited to, a portable vacuum cleaner, a floor washer, a sweeping robot, or a vacuum cleaner.

In an embodiment, the walking device 20K includes, but is not limited to, a baby carriage, an electric car, a battery car, a balance car, an electric scooter, or other type of toy.

In an embodiment, the garden device 20L includes, but is not limited to, a snow blower, a blower, a pruning machine, or a water sprayer.

In an embodiment, the fitness device 20N includes, but is not limited to, a treadmill, a rehabilitation device, or a stretching device.

It is worth mentioning that when there are at least two electrical devices 20, and types of the at least two electrical devices 20 are not limited. At least one of the at least two electrical devices 20 is electrically connected with the energy storage power supply 10 in a cordless connection manner, and a connection mode of at least one other electrical device 20 of the at least two electrical devices 20 being electrically connected to the energy storage power supply 10 is not limited. That is to say, at least one electrical device 20 is electrically connected to the energy storage power supply 10 in the cordless connection manner.

In some embodiments, the electrical device 20 is a device that converts electric energy into other forms of energy (i.e., not electric energy) for output, such as kinetic energy, or heat energy, that is to say, the electrical device 20 is not a device that outputs electric energy such as a battery or a mobile power supply.

In an embodiment, the electrical device 20 is electrically connected to the energy storage power supply 10 in a manner of mating.

In an embodiment, the electrical device 20 is disposed on the energy storage power supply 10. It is worth mentioning that the invention is not limited by the fact that the electrical device 20 is discharged while being powered by the energy storage power supply 10 or the electrical device 20 cannot be discharged while being powered by the energy storage power supply 10.

The electrical device 20 is electrically connected to the energy storage power supply 10 in a contact connection manner or a cordless charging mode. At least one cordless connection output terminal of the energy storage power supply 10 is externally mounted, so that when the electrical device 20 is disposed on the energy storage power supply 10, the electrical device 20 is electrically connected to the energy storage power supply 10 in a contact connection manner.

In an embodiment, at least one cordless connection output terminal of the energy storage power supply 10 is built-in and the other cordless connection output terminal of the energy storage power supply 10 is externally mounted, so that when two electrical devices 20 are respectively built into and supported by the energy storage power supply 10, each of the two electrical devices 20 is electrically connected with the electrical devices 20. In other words, the energy storage power supply 10 can cordlessly supply power to at least two electrical devices 20 simultaneously. It is worth mentioning that the energy storage power supply 10 is disposed in the electrical device 20 to supply power to the electrical device 20.

In other modified embodiments of the invention, the electrical device 20 is charged by the energy storage power supply 10 with the electrical device 20 disposed in the energy storage power supply, so that the electrical device 20 and the energy storage power supply 10 are assembled in an integrated manner. In other words, the electrical device 20 is supplied by the energy storage power supply 10 in an accommodating manner.

The electrical device 20 is connected with the energy storage power supply 10 in a locking manner and thereby the electrical device 20 is electrically connected with the energy storage power supply 10. Further, after the electrical device 20 is disposed in a mating portion 142 of the energy storage power supply 20, the electrical device 20 is locked by the mating portion 142, and the electrical device 20 is electrically connected to a power supply main body 11. In other words, the electrical device 20 is electrically connected with the energy storage power supply 10 in a locking manner, so as to prevent the electrical device 20 and the energy storage power supply 10 from suddenly separating and circuit disconnection. In addition, the energy storage power supply 10 supplies power to the electrical device 20 in the way of following the electrical device 20, which is convenient for the power storage power supply 10 to closely follow at any time when the electrical device 20 is moved, and is convenient for users to use.

In an embodiment, the electrical device 20 is a power supply device. In an embodiment, the electrical device 20 is a battery pack 20A. The battery pack 20A further includes at least one battery pack main body 210A and at least one battery pack power connection portion 220A. After the battery pack 20A is put into the mating portion 142 through a mating opening 14201, the battery pack power connection portion 220A of the battery pack 20A is electrically connected to the energy storage power supply 10.

After the battery pack 20A is taken out from the mating portion 142, the battery pack 20A can be electrically connected to another electrical device 20 to supply power to the another electrical device 20. It is worth mentioning that the battery pack 20A is electrically connected to the mobile device 20C.

In other modified embodiments, the electrical device 20 may be a multi-pack battery pack 20B containing at least two battery packs or a smart battery pack, which is not limited herein.

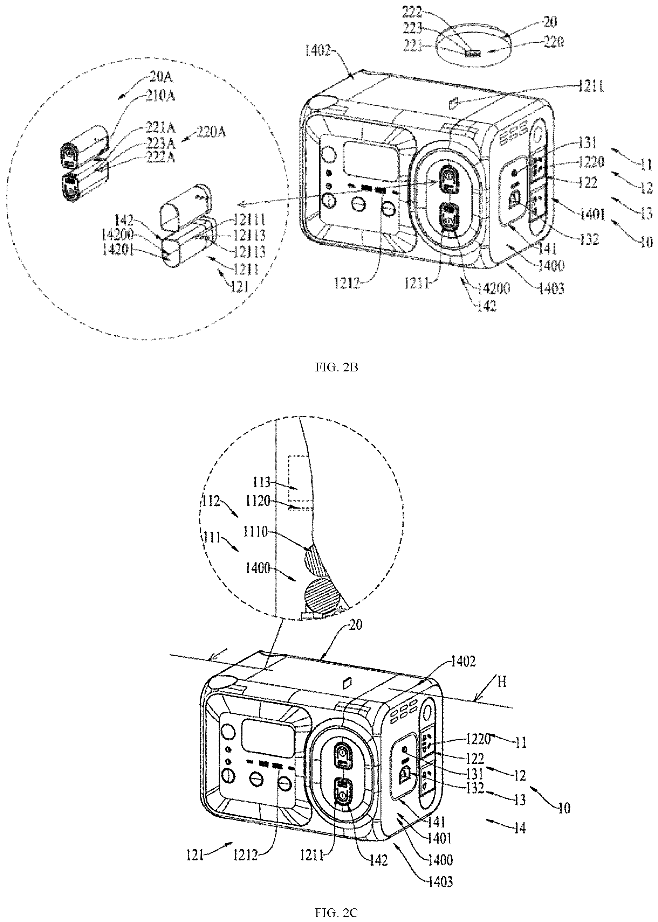

As illustrated in FIG. 2B through FIG. 2D, the energy storage power supply 10 includes a power supply main body 11, an output portion 12 and a power connection portion 13. The output portion 12 and the power connection portion 13 are each electrically connected to the power supply main body 11.

The power connection portion 13 can be connected with an AC/DC power supply, the power supply main body 11 is electrically connected to the power connection portion 13, the power supply main body 11 is configured to power after receiving a current from the AC/DC power supply, and the output portion 12 is electrically connected to the power supply main body 11. A magnitude and a type of a current output by the power supply main body 11 are determined according to an interface type of the output portion 12.

The power connection portion 13 includes at least one DC-DC module 131 and at least one AC-DC module 132. The power terminal 131 is electrically connected to the DC-DC module 131, and the power terminal 131 can be electrically connected to a DC power supply. The AC-DC module 132 may be electrically connected to an AC power supply.

Each AC-DC module 132 includes at least one AC power terminal 1321 and at least one AC-DC rectifier 1322. Each of the at least one AC-DC rectifier 1322 is configured to convert an AC into a DC. Each of the at least one AC power terminal 1321 is configured to be electrically connected with the AC power supply, each of the at least one AC-DC rectifier 1322 is configured to be electrically connected with the AC power terminal 1321, so that the AC-DC rectifier 1322 can rectify an external AC into a DC suitable for storage by the power supply main body 11, thereby allowing the power supply main body 11 to store electrical energy.

In an embodiment, the AC power terminal 1321 is implemented as a grounded plug.

Each DC-DC module 131 includes at least one DC power terminal 1311 and at least one DC-DC converter 1312. Each of the at least one DC-DC converter 1312 is configured to convert a DC into another DC. Each DC power terminal 1311 is electrically connected to the DC-DC converter 1312, and the DC power terminal 1311 is configured to be electrically connected with a DC power supply, so that the DC-DC converter 1312 can convert an external DC into a DC suitable for storage by the power supply main body 11, thereby allowing the power supply main body 11 to store electrical energy.

In an embodiment, the DC power terminal 1311 and the AC power terminal 1321 included in the power connection portion 13 are disposed in the same plane. In an illustrated embodiment, an AC output unit 1220 and the DC power terminal 1311 and the AC power terminal 1321 are arranged in the same plane.

The DC power terminal 1311 is one of a universal serial bus (USB) interface, a Type-C interface, a lightning interface, or a cigarette lighter interface, and a type of the DC power terminal 1311 is not limited herein.

Specifically, the output portion 12 further includes at least one DC connection module 121 and at least one AC connection module 122, and the at least one DC connection module 121 and the at least one AC connection module 122 are each electrically connected to the power supply main body 11. Each DC connection module 121 is configured to output a DC, and each AC connection module 122 is configured to output an AC.

Specifically, the power supply main body 11 includes a battery module 111 and a control module 112, and the control module 112 is connected with the battery module 111, the output portion 12 and the power connection portion 13, so that the output portion 12 is configured to output an AC or a DC under the control of the control module 112. The control module 112 is electrically connected with the AC-DC rectifier 1322 and the DC-DC converter 1312. The control module 112 is configured to control charging and discharging of the battery module 111.

The battery module 111 of the power supply main body 11 further includes at least two batteries 1110, and the at least two batteries 1110 are configured to store a DC output by the power connection portion 13.

In an embodiment, the power supply main body 11 further includes at least one inverter 113 and at least one DC-DC converter 114. The at least one inverter 113 and the at least one DC-DC converter 114 are each electrically connected with the control module 112. The power supply main body 11 further includes at least one inverter 113 and at least one DC-DC converter 114. The at least one inverter 113 and the at least one DC-DC converter 114 are each electrically connected with the control module 112. Each DC-DC converter 114 is electrically connected with the battery module 111, and is configured to output the DC stored in the battery module 111 into a DC suitable for a voltage and a current of the electrical device 20.Each inverter 114 is electrically connected with the battery module 111, and is configured to output the DC stored in the battery module 111 into an AC suitable for the voltage and current of the electrical device 20.

When the control module 112 obtains an AC output trigger signal, under the control of the control module 112, the DC stored in the battery 1110 is converted by the inverter 113 into the AC and the AC is output from the output portion 12, so that the electrical device 20 can acquire the AC output from the output portion 12.

When the control module 112 obtains a DC output trigger signal, under the control of the control module 112, the DC stored in the battery 1110 is converted by the DC-DC converter 114 into a corresponding DC, so that the electrical device 20 electrically connected to the energy storage power supply 10 can obtain the DC output by the output portion 12.

The power supply main body 11 further includes at least one battery management system (BMS) management module 115, and the BMS management module 115 is electrically connected with the battery 1110.

The BMS management module 115 of the energy storage power supply 10 is configured to monitor a voltage, a current and a temperature of the battery module 111 during discharging of the battery module 111. The BMS management module 115 is further configured to: in response to any one of the temperature, the current or the voltage of the battery 1110 deviating from a preset value, enable circuit disconnection of at least one current output circuit of the output module 22. In addition, the BMS management module 115 is further configured to: in response to determining the monitored temperature being higher than a first preset temperature threshold, the monitored voltage being higher than a first preset voltage threshold, or the monitored current being higher than a first preset current threshold, enable circuit disconnection of at least one current output unit of the output module 22 or limit a output voltage and/or an output current of the at least one current output unit of the output module 22.

In addition, when the BMS management module 115 is further configured to: in response to the monitored current of the battery 1110 being lower than a second preset current value or the monitored voltage of the battery 1110 being lower than a second preset voltage value, enable circuit disconnection of at least one current output unit of the output module 22. It is worth mentioning that the first preset voltage threshold is greater than the second preset voltage threshold, and the first preset current threshold is greater than the second preset current threshold.

Therefore, the BMS management module 115 can monitor status information of the battery 1110, so as to disconnect an electrical path between a power supply and an electric motor or limit an output voltage and/or a current of the power supply at least in case of under voltage and/or over temperature.

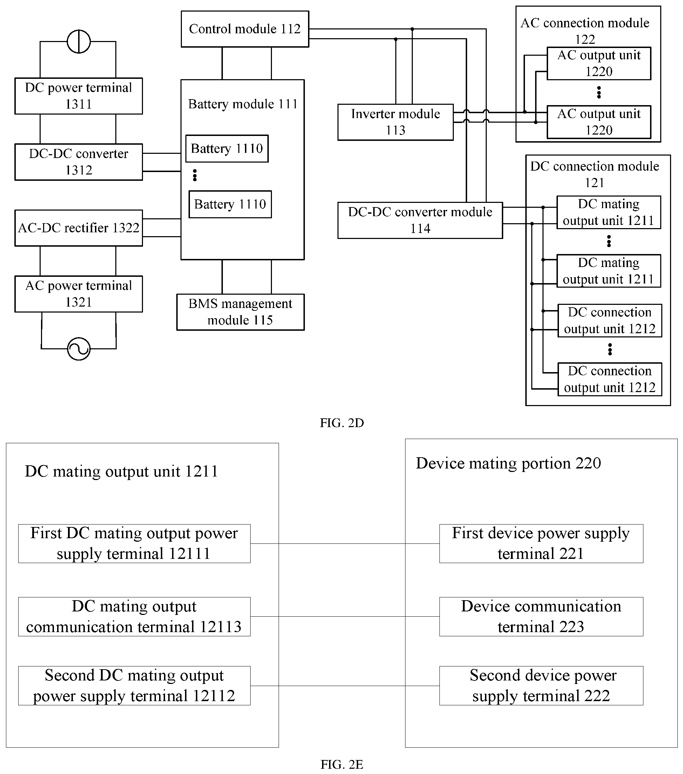

As illustrated in FIG. 2C and FIG. 2D, in another embodiment of the invention, the DC connection module 121 is disposed on a circumferential side surface 1401 of a housing to electrically connect to external electrical devices 20, or to power at least one built-in electrical device 20 in the energy storage power supply 10 that is plug-connected to the DC connection module 121. The DC connection module 121 includes at least one DC mating output unit 1211, and the DC mating output unit 1211 is electrically connected to the DC-DC converter 114 to output different currents.

In an embodiment, the number of the at least one DC mating output unit 1211 is at least three, and the DC mating output unit 1211 include at least one DC mating output unit 1211.

Each DC mating output unit 1211 further includes at least one first DC mating output power supply terminal 12111, at least one second DC mating output power supply terminal 12112 and at least one DC mating output communication terminal 12113. The electrical device 20 is configured to electrically connected with the second DC mating output power supply terminal 12112 or the first DC mating output power supply terminal 12111 to receive a DC. The electrical device 20 is configured to connected with the DC mating output communication terminal 12113 to receive communication information.

The DC mating output communication terminal 12113 is configured to send at least one power supply related information to the electrical device 20 and/or receive at least one device related information.

The mating charging communication terminal 12113 is configured to send at least one power supply related information to the electrical device 20 and/or receive at least one device related information.

It is worth mentioning that the power supply-related information includes at least one of device identification information and electric-related information, and the device-related information may include at least one of a rated power, a rated voltage, a rated current, an electrical signal of device usage, an electrical signal of user instruction, or information to be uploaded of the electrical device 20, which is not limited herein.

In an embodiment, the number of the at least one DC mating output unit 1211 is at least two, and when the electrical device is arranged near one DC mating output unit 1211 of the at least two DC mating output units 1211, the electrical device 20 is powered by the energy storage power supply 10. The number of the DC mating output units 1211 is not limited herein.

It is worth mentioning that the DC mating output unit 1211 does not need to be connected to the electrical device 20 by a wire, which changes an electrical connection relationship between the energy storage power supply 10 and the electrical device 20 from a spatial position, as long as the energy storage power supply 10 and the electrical device 20 are mated with each other.

In an embodiment, at least one DC mating output unit 1211 is disposed close to a top surface 1402 of a housing body 141. The number of the DC connection output units 1211 is at least two.

At least one DC mating output unit 1211 is disposed close to a circumferential side surface 1401 of the housing body 141.

The number of the DC mating output units 1211 is at least two. The number of DC mating output units 1211 that are built in the energy storage power supply and configured to be electrically connected to an electrical device 20 and allow the electrical device 20 to be inserted therein is more than one.

An output end of the DC mating output unit 1211 includes at least one of a USB interface, a Type-C interface, a lightning interface, a cigarette lighter interface and a straight cable interface, which can be designed according to specific conditions, and a type of the DC mating output unit 1211 is not limited by the characteristics and scope of the invention.

As illustrated in FIG. 2B, FIG. 2C and FIG. 2E, the DC connection module 121 includes at least one first DC mating output unit 1211 and at least one second DC connection output unit 1212. The second DC connection output unit 1212 is electrically connected to the DC-DC converter 114 to output a current suitable for connecting the electrical device 20. At least one second DC connection output unit 1212 and at least first DC mating output unit 1211 are arranged in the same plane. The first DC mating output unit 1211 can be directly connected with the electrical device 20 to conduct a circuit without a wire. The second DC connection output unit 1212 is an electrical connector that is connected to the electrical device 20 by a wire.

The second DC connection output unit 1212 further includes at least one first DC connection output power supply terminal 12121, at least one second DC connection output power supply terminal 12122 and at least one DC connection output communication terminal 12123. The at least one DC connection output communication terminal 12123 is disposed between the at least one first DC connection output power supply terminal 12121 and the at least one second DC connection output power supply terminal 12122.

The electrical device 20 includes at least one first device power supply terminal 221, at least one second device power supply terminal 222, and a device communication terminal 223, The first DC connection output power supply terminal 12121 is connected with the first device power supply terminal 221 of the electrical device 20, and the second DC connection output power supply terminal 12122 is connected with the second device power supply terminal 222 of the electrical device 20, so that the electrical device 20 and the energy storage power supply 10 form a loop by connection between the corresponding power supply terminals. In other words, the electrical device 20 can receive a current through the first DC connection output power supply terminal 12121 and the second DC connection output power supply terminal 12122.

The DC connection output communication terminal 12123 is configured to send at least one power supply related information to the electrical device 20 and/or receive at least one device related information.

It is worth mentioning that the power supply-related information includes at least one of device identification information and electric-related information, and the device-related information may include at least one of a rated power, a rated voltage, a rated current, an electrical signal of device usage, an electrical signal of user instruction, or information to be uploaded of the electrical device 20, which is not limited herein.

The AC connection module 122 includes at least one AC output unit 1220. A current output by the battery 1110 is converted by the inverter 113 into an AC, and the AC is output from the AC output unit 1220. The AC output unit 1220 is electrically connected to the inverter 113 to output the AC.

In an embodiment, the DC connection module 121 and the AC output unit 1220 are disposed in different planes.

The AC output unit 1220 is pre-selected as a grounded three-pin plug. Further, the AC output unit 1220 further includes at least one first AC output power supply terminal 1221, at least one second AC output power supply terminal 1222 and at least one AC output grounding terminal 1223. The first AC output power supply terminal 1221 and the second AC output power supply terminal 1222 are respectively electrically connected to two power supply terminals of the electrical device 20, so that the electrical device 20 can receive currents through the first AC output power supply terminal 1221 and the second AC output power supply terminal 1222. The AC output grounding terminal 1223 is grounded to prevent electricity accidents.

In an embodiment, a device mating portion 220 of the electrical device 20 further includes a first device power supply terminal 221, a second device power supply terminal 222 and a device grounding terminal 223. That is, a first device power supply terminal 221A of the electrical device 20A can be connected with the first AC output power supply terminal 1221 of the energy storage power supply 10, a second device power supply terminal 222A of the electrical device 20A can be connected with the second AC output power supply terminal 1222 of the energy storage power supply 10, and the device grounding terminal 223 of the electrical device 20A can be connected with the AC output grounding terminal 1223 of the energy storage power supply 10. The first AC output power supply terminal 1221 and the second AC output power supply terminal 1222 of the energy storage power supply 10 are respectively electrically connected to the first device power supply terminal 221 and the second device power supply terminal 222 of the electrical device 20 to form a closed circuit. The device grounding terminal 223 of the electrical device 20 is electrically connected to the AC output grounding terminal 1223 of the energy storage power supply 10, so that the electrical device 20 can be grounded via the energy storage power supply 10 to prevent accidents caused by circuit anomaly.

As illustrated in FIG. 2B through FIG. 2D, in an embodiment of the invention, the DC connection module 121 of the output portion 12 is provided with multiple interfaces, and the DC connection module 121 is suitable for multiple electrical device 20 to be connected to the adapted interfaces respectively and to thereby be charged by the energy storage power supply 10.

In an embodiment, the energy storage power supply 10 further includes a housing 14. The housing 14 has a circumferential side surface 1401, and a top surface 1402 and a bottom surface 1403 surrounded by the circumferential side surface 1401 and connected with the circumferential side surface 1401. The housing 14 defines an accommodating cavity 1400, the top surface 1402 and the bottom surface 1403 are opposite to each other. The power supply main body 11, the output portion 12 and the power connection portion 13 are disposed in the accommodating cavity 1400 of the housing 14.

It is worth mentioning that the circumferential side surface 1401 is composed of four planes that are sequentially connected end-to-end, and defines a space that is open on two opposite sides.

In an embodiment, at least one DC mating output unit 1211 is disposed close to the circumferential side surface 1401 and/or the top surface 1402, so that the power supply device 20 held close to the circumferential side surface 1401 or the top surface 1402 is electrically connected with the at least one DC mating output unit 1211. It is worth mentioning that a type of the at least one DC mating output unit 1211 is not limited, and the at least one DC mating output unit 1211 can be implemented as a contact circuit connection.

As illustrated in FIG. 2B and FIG. 2C, the housing 14 further includes at least one housing body 141 and at least one mating portion 142, and the at least one mating portion 142 is disposed in the housing body 141. The mating portion 142 has at least one mating cavity 14200 and at least one mating opening 14201 for communicating the connection cavity 14200 with an external space. The mating cavity 14200 of the mating portion 142 and the accommodating cavity 1400 defined by the housing body 141 are maintained at intervals. A mating opening 14201 of the mating portion 142 is formed in a circumferential side surface 1401 defined by the housing body 141. Further, the mating portion 142 and the second DC mating output power supply terminal 12112 (also referred to a DC cordless output unit 12112) are disposed in the same plane, and the mating opening 14201 of the mating portion 142 faces towards the circumferential side surface 1401.

In an embodiment, the number of the at least one DC mating output unit 1211 is more than two, and at least one of the DC connection output units 1211 is disposed in the mating cavity 14200 of the mating portion 142.

In an embodiment, the at least one DC mating output unit 1211 is disposed close to the top surface 1402 that means that the at least one DC mating output unit 1211 is disposed in the top surface 1402 of the housing 14 and/or exposed to the external space from the top surface 1402 of the housing 14. At least one DC mating output unit 1211 is disposed close to the top surface 1402 of the power supply device 20 that means that the at least one DC mating output unit 1211 is exposed to the external space from the top surface 1402 of the housing 14 or is disposed in the top surface 1402.

The DC mating output unit 1211 is implemented as a USB electrical connector, the DC mating output unit 1211 held on the top surface 1402 of the energy storage power supply 10 is a male USB electrical connector, and the device mating portion 220 of the electrical device 20 is a female USB electrical connector corresponding to the DC mating output unit 1211.

The DC mating output unit 1211 can also be implemented as a DC electrical connector, a Type-C interface, a lightning interface, or a straight cable interface, which is not limited herein.

In a modified embodiment, the at least one DC mating output unit 1211 is disposed close to the circumferential side surface 1401 that means that the at least one DC mating output unit 1211 is disposed in the circumferential side surface 1401 of the housing 14 or exposed to the external space from the circumferential side surface 1401 of the housing 14. At least one DC mating output unit 1211 is disposed close to the circumferential side surface 1401 of the power supply device 20 that means that the least one DC mating output unit 1211 is exposed to the external space from the circumferential side surface 1401 of the housing 14 or is dispose in the circumferential side surface 1401.

In an embodiment, the DC connection modules 121 of the output portion 12 and a mating body 1421 face an external environment in the manner of being disposed in adjacent planes or the same plane of the housing 14. In other words, the DC connection modules 121 of the output portion 12 and the mating body 1421 are held on the same side of the housing 14 or held in the housing 14 at a certain angle to the housing 14.

The DC connection modules 121 and the AC connection module 122 are directed to the external environment from at least one of the top surface 1402, the bottom surface 1403 and the circumferential side surface 1401. In an embodiment, the DC connection modules 121 of the output portion 12 are distributed on two adjacent sides of the circumferential side surface 1401. One AC connection module 122 and one DC connection module 121 are held in the same direction. In an embodiment, one DC cordless output unit 12112 is disposed on the same plane as the DC mating output unit 1211, and another DC cordless output unit 12112 is disposed on the top surface 1402 of the housing body 141.

In an embodiment, the number of the mating portion 142 is two, and the two mating portions 142 are disposed along a height extension direction of the housing body 141. In other words, the number of the electrical device 20 accommodated in the mating portion 142 is at least two. An arrangement direction of the two electrical device 20 extends along the height extension direction of the housing body 141, and the two electrical devices 20 are held at the same side with the DC mating output unit 1211 of the DC mating module 1210.

In an embodiment, the battery pack 20A is directly pushed into the mating portion 142 without a second action.

Each mating portion 142 includes a mating body and a limiting mechanism. The limiting mechanism is preset in the mating body, and when the limiting mechanism is triggered, the limiting mechanism blocks or ejects the electrical device 20. In other words, the electrical device 20 is electrically connected with the energy storage power supply 10 in such a way that the limiting mechanism is limited to the mating portion 142.

Specifically, the limiting mechanism is switched between a limiting position and a releasing position. When the limiting mechanism is in the releasing position, the limiting mechanism does not protrude from a side wall of the mating body to the mating cavity 1420 in a manner of being squeezed by a power supply device 20A. When the limiting mechanism is in the limiting position, the limiting mechanism protrudes from the side wall of the mating body to the mating cavity 1420 for limiting the power supply device 20A.

One DC cordless output unit 12112 is disposed in the mating portion 142. When the electrical device 20A is placed in the mating portion 142, the electrical device 20A is electrically connected with the DC cordless output unit 12112.

In an embodiment, the DC mating output unit 1211 further includes at least one first DC mating output power supply terminal 12111, at least one second DC mating output power supply terminal 12112 and at least one DC mating output communication terminal 12113. The at least one DC mating output communication terminal 12113 is disposed between the at least on first DC mating output power supply terminal 12111 and the at least two second DC mating output power supply terminal 12112.

The device mating portion 220 of the electrical device 20 further includes a first device power supply terminal 221, a second device power supply terminal 222 and a device communication terminal 223. That is to say, the device mating portion 220A of the electrical device 20A further includes a first device power supply terminal 221A, a second device power supply terminal 222A, and a device communication terminal 223A.

When the device mating portion 220A of the electrical device 20A is connected with the DC mating output unit 1211 of the energy storage power supply 10, the first DC mating output power supply terminal 12111 of the DC mating output unit 1211 abuts with the first device power supply terminal 221A of the device mating portion 220A, the second DC mating output power supply terminal 12112 of the DC mating output unit 1211 abuts against the second device power supply terminal 222A of the device mating portion 220A, and the DC mating output communication terminal 12113 of the DC mating output unit 1211 abuts against the device communication terminal 223A of the device mating portion 220A. The first DC mating output power supply terminal 12111 of the energy storage power supply 10 is electrically connected to the first device power supply terminal 221A of the electrical device 20A, and the second DC mating output power supply terminal 12112 of the energy storage power supply 10 is electrically connected to the second device power supply terminal 222A of the electrical device 20A to form a loop, so that the energy storage power supply 10 can output current to the electrical device 20A. The DC mating output communication terminal 12113 of the DC mating output unit 1211 abuts against the device communication terminal 223A of the device mating portion 220A, and the energy storage power supply 10 is configured to identify at least one of a rated voltage, a rated power and a rated current of the electrical device 20A, so that the energy storage power supply 10 outputs an adapted voltage and an adapted current.

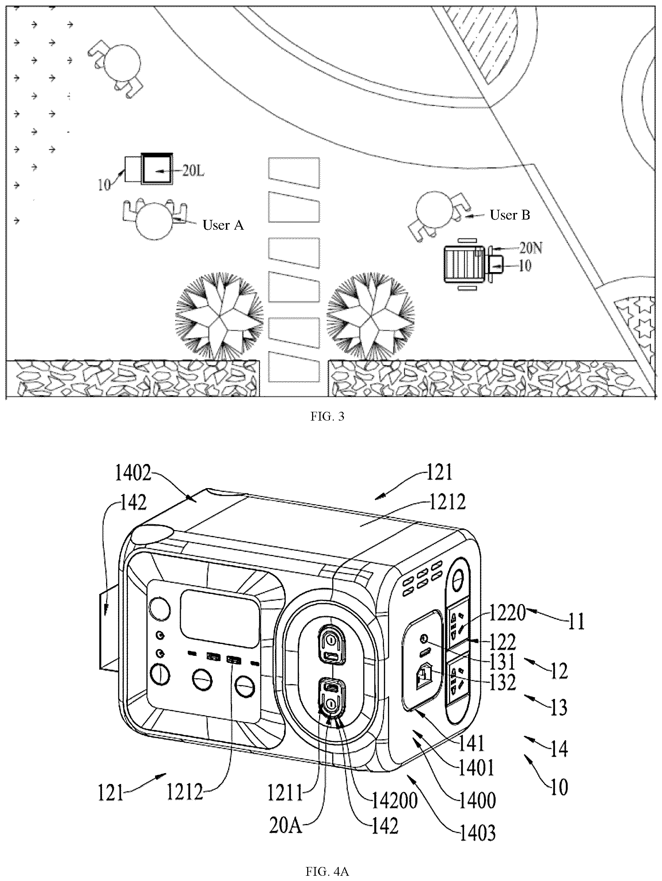

As illustrated in FIG. 3, in a scene where users carry an energy storage apparatus to an external environment, for example, if at least two users can get together in an outdoor environment, a user A and a user B are engaged in baking, listening to music, sports and other entertainment activities outdoors. The user A uses an oven 20L of a cooking device. The User B uses an intelligence device. In particular, an electrical device 20 of the user A is directly installed in the energy storage power supply 10 such that the energy storage power supply 10 supplies power to the electrical device 20. It is worth mentioning that the electrical device 20 is a fitness device 20N. Because the energy storage power supply 10 cordlessly supplies power to the electrical device 20, the energy storage power supply 10 is always kept at the electrical device 20, so that the problems of wire tripping and pulling are reduced, and an active area of the electrical device 20 is more flexible.

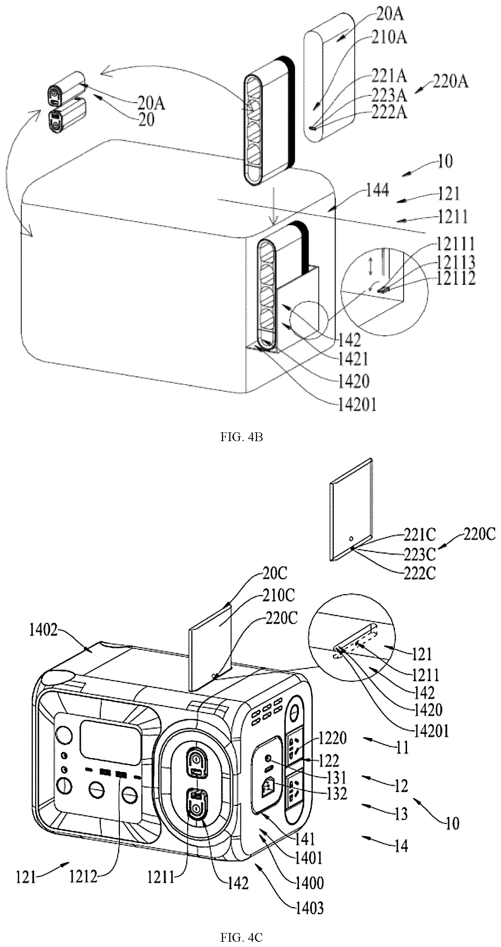

As illustrated in FIG. 4A and FIG. 4B, in an embodiment, different from the embodiment illustrated in FIG. 2B, the DC mating output unit 1211 is disposed in the circumferential side surface 1401 of the energy storage power supply 10, the electrical device 20 is a multi-pack battery pack 20B containing at least two battery packs 20A, and the battery pack 20B containing at least two battery packs 20A is supported and powered by the energy storage power supply 10.

The multi-pack battery pack 20B is connected with the DC mating output unit 1211 of the energy storage power supply 10, and the multi-pack battery pack 20B is charged by the DC mating output unit 1211.

Further, the multi-pack battery pack 20B is cordlessly connected with the energy storage power supply 10 in a manner of being supported by the energy storage power supply 10, and the battery pack 20A is cordlessly connected to the energy storage power supply 10 in a manner of being placed in the energy storage power supply 10. The battery pack 20A is removably accommodated in the multi-pack battery pack 20B, and the multi-pack battery pack 20B can be electrically connected to the battery packs 20A accommodated therein.

The multi-pack battery pack 20B includes at least one multi-pack battery main body 210B and at least one multi-pack battery device mating portion 220B. The multi-pack battery device mating portion 220B is electrically connected with the multi-pack battery main body 210B in a receiving manner, and the multi-pack battery main body 210B can store electric energy to supply power to other electrical devices 20. The multi-pack battery main body 220B can receive other battery packs 20A, so that the multi-pack battery main body 220B is electrically connected with the received battery packs 20A.

When the multi-pack battery device mating portion 220B is placed in the mating portion 142 of the energy storage power supply 10 and the multi-pack battery device mating portion 220B of the multi-pack battery pack 20B is connected with the DC mating output unit 1211, the multi-pack battery device mating portion 220B can be cordlessly powered by the DC mating output unit 1211.

In an embodiment, the multi-pack battery device mating portion 220B is arranged on a bottom surface of the multi-pack battery main body 210B, and the battery packs 20A placed in the multi-pack battery main body 210B is kept facing an opening. After the multi-pack battery pack 20B is placed in the mating portion 142 of the energy storage power supply 10, the battery packs 20A placed in the multi-pack battery pack 20B can also be plugged and unplugged.

In an embodiment, the multi-pack battery device mating portion 220B is disposed in a side surface and/or a bottom surface of the multi-pack battery main body 210B.

In other modified embodiments, the mating portion 142 is arranged in the circumferential side surface 1401 of the housing body 141, and the mating portion 142 is disposed to protrude from the top surface 1402 of the housing body 141. The mating opening 14201 is disposed in such a way that the mating cavity 14200 can be directly communicated with the external space, and the electrical device 20 can be directly inserted into the mating cavity 14200.

It is worth mentioning that the accommodating cavity 1400 defined by the housing body 141 and the mating cavity 1420 defined by the mating portion 142 are kept at intervals, and the DC connection module 121 disposed in the mating cavity 1420 is electrically connected with the control module 112.

As illustrated in FIG. 4A, the electrical device 20 placed inside the energy storage power supply 10 is a battery pack 20A, and the battery pack 20A is positioned in the energy storage power supply 10 and is cordless electrically connected to the energy storage power supply 10.

The battery pack 20A includes at least one battery main body 210A and at least one battery device mating portion 220A, the battery device mating portion 220A can be electrically connected to the battery main body 210A, and the battery main body 220A can store electric energy to supply power to other electrical device 20.

When the battery device mating portion 220A is connected to the DC mating output unit 1211 of the mating portion 142 of the energy storage power supply 10, the battery device mating portion 220A is cordlessly powered by the DC mating output unit 1211.

In an embodiment, the battery pack 20A is inserted into the mating portion 142 of the energy storage power supply 10 in a pressed manner.

As illustrated in FIG. 4C, the electrical device 20 cordlessly connected to the energy storage power supply 10 is a mobile device 20C. At least one mating portion 142 is disposed on the top surface 1402 of the energy storage power supply 10, and the DC mating output unit 1211 can be electrically connected with the mobile device 20C, so that when the mobile device 20C is disposed in the mating portion 142 of the energy storage power supply 10, the mobile device 20C is electrically connected with the DC mating output unit 1211.

In an embodiment, the mating portion 142 is implemented as a groove with an upward opening, and the mating portion 142 is disposed on the top surface 1401 of the energy storage power supply 10.

The mobile device 20C includes at least one mobile device main body 210C and at least one mobile device mating portion 220C, the mobile device mating portion 220C can be electrically connected with the mobile device main body 210C, and the mobile device main body 210C can process data and interact with a user.

When the mobile device mating portion 220C is connected with the DC mating output unit 1211 on the top surface 1402 of the energy storage power supply 10, the mobile device mating portion 220C is powered by the DC mating output unit 1211, so that the mobile device 20C is cordlessly powered by the energy storage apparatus 10.

In an embodiment, the mobile device mating portion 220C is disposed on a bottom surface of the mobile device main body 210C, so that when the mobile device 20C is disposed in the energy storage apparatus 10, the mobile device 20C can be cordlessly powered by the energy storage apparatus 10.

In an embodiment, the mobile device mating portion 220C is disposed on a side surface and/or a bottom surface of the mobile device main body 210C.

In an embodiment, the mobile device 20C is implemented as a mobile phone. Further, the mobile device 20C can also be implemented as an ipad, an ipod, a game machine, an augmented reality (AR) device, a virtual reality (VR) device, or a heat preservation device, which is not limited herein.

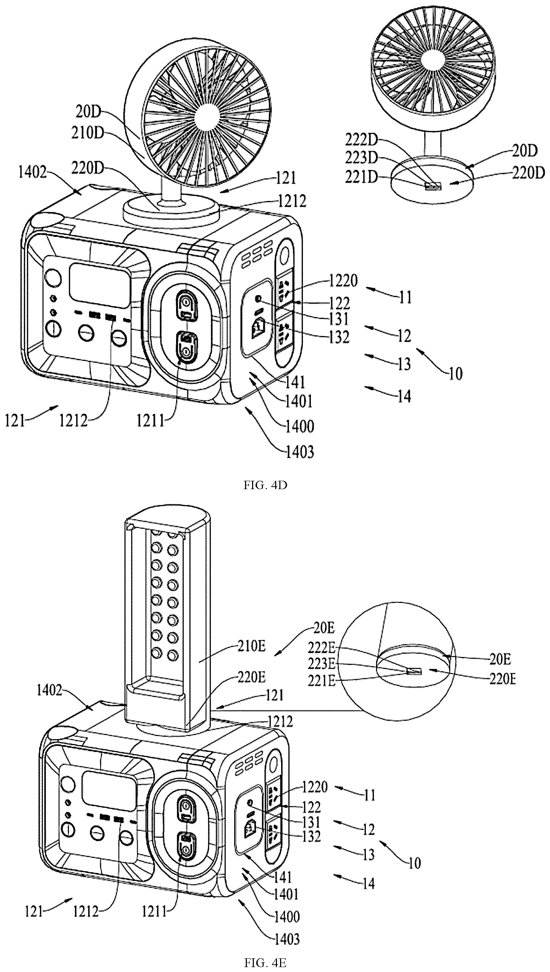

As illustrated in FIG. 4D, the electrical device 20 cordlessly connected to the energy storage power supply 10 is an electric fan 20D. The DC mating output unit 1211 held on a top surface 1402 of the energy storage power supply 10 can be electrically connected to the electric fan 20D, so that when the electric fan 20D is disposed on the top surface 1402 of the energy storage power supply 10, the electric fan 20D is electrically connected in contact with the DC mating output unit 1211. The electric fan 20D includes at least one electric fan main body 210D and at least one electric fan mating portion 220D, the electric fan mating portion 220D can be electrically connected to the electric fan main body 210D, and the fan main body 210D can be driven to rotate to drive the air to flow. When the electric fan mating portion 220D is in contact with the DC mating output unit 1211 on the top surface 1402 of the energy storage power supply 10, the electric fan mating portion 220D is cordlessly powered by the DC mating output unit 1211. In an embodiment, the electric fan mating portion 220D is disposed on a bottom surface of the electric fan body 210D, so that when the electric fan 20D is placed on the energy storage apparatus 10, the electric fan 20D can be cordlessly powered by the energy storage apparatus 10. In an embodiment, the electric fan mating portion 220D is provided on a side surface and/or a bottom surface of the fan main body 210D. The electric fan mating portion 220D of the electric fan 20D further includes a first electric fan power supply terminal 221D, a second electric fan power supply terminal 222D and an electric fan communication terminal 223D. When the electric fan mating portion 220D of the electric fan 20D is connected with the DC mating output unit 1211 of the energy storage power supply 10, the first DC mating output power supply terminal 12111 of the DC mating output unit 1211 abuts with the first electric fan power supply terminal 221D of the electric fan 20D, and the second DC mating output power supply terminal 12112 of the DC mating output unit 1211 abuts with the second electric fan power supply terminal 222D of the electric fan 20D. The first DC mating output power supply terminal 12111 of the energy storage power supply 10 is electrically connected to the first electric fan power supply terminal 221D of the electric fan 20D, and the second DC mating output power supply terminal 12112 of the energy storage power supply 10 is electrically connected to the second electric fan power supply terminal 222D of the electric fan 20D to form a loop, so that the energy storage power supply 10 can output a current to the electric fan 20D. The DC mating output communication terminal 12113 of the DC mating output unit 1211 abuts against the electric fan communication terminal 223D of the electric fan 20D to communicatively connect the electric fan 20D with the energy storage power supply 10.

As illustrated in FIG. 4E, the electrical device 20 connected to the energy storage power supply 10 is a lamp 20E. The DC mating output unit 1211 held on the top surface 1402 of the energy storage power supply 10 can be electrically connected to the lamp 20E so that when the lamp 20E is disposed on the top surface 1402 of the energy storage power supply 10, the lamp 20E is powered by the DC mating output unit 1211. The lamp 20E includes at least one lamp main body 210E and at least one lamp mating portion 220E, the lamp mating portion 220E can be electrically connected to the lamp main body 210E, and the lamp main body 210E can convert electric energy into light energy and heat energy. When the lamp mating portion 220E is in contact with the DC mating output unit 1211 on the top surface 1402 of the energy storage power supply 10, the lamp mating portion 220E is powered by the DC mating output unit 1211. The lamp mating portion 220E of the lamp 20E further includes a first lamp power supply terminal 221E, a second lamp power supply terminal 222E and a lamp communication terminal 223E. When the lamp mating portion 220E of the lamp 20E is connected with the DC mating output unit 1211 of the energy storage power supply 10, the first DC mating output power supply terminal 12111 of the DC mating output unit 1211 abuts with the first lamp power supply terminal 221E of the lamp 20E, and the second DC mating output power supply terminal 12112 of the DC mating output unit 1211 abuts with the second lamp power supply terminal 222E of the lamp 20E. The first DC mating output power supply terminal 12111 of the energy storage power supply 10 is electrically connected to the first lamp power supply terminal 221E of the lamp 20E, and the second DC mating output power supply terminal 12112 of the energy storage power supply 10 is electrically connected to the second lamp power supply terminal 222E of the lamp 20E to form a loop, so that the energy storage power supply 10 can output current to the lamp 20E. The DC mating output communication terminal 12113 of the DC mating output unit 1211 abuts against the lamp communication terminal 223E of the lamp 20E to communicatively connect the lamp 20E with the energy storage power supply 10. In an embodiment, the lamp mating portion 220E is disposed on a bottom surface of the lamp main body 210E, so that when the lamp 20E is disposed in the energy storage apparatus 10, the lamp 20E can be cordlessly powered by the energy storage apparatus 10. In an embodiment, the lamp mating portion 220E is disposed on a side surface and/or a bottom surface of the lamp main body 210E.

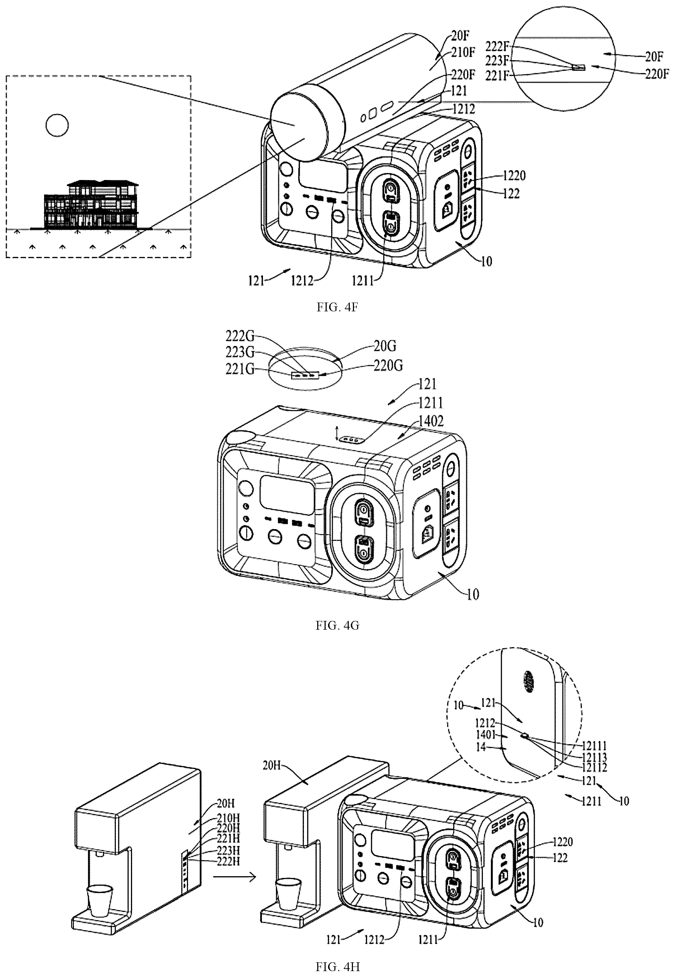

As illustrated in FIG. 4F, the electrical device 20 cordlessly connected to the energy storage power supply 10 is a projection device 20F. The DC mating output unit 1211 held on a top surface 1402 of the energy storage power supply 10 can be electrically connected to the projection device 20F, so that when the projection device 20F is disposed on the top surface 1402 of the energy storage power supply 10, the projection device 20F is cordlessly connected by the DC mating output unit 1211. The projection device 20F includes at least one projection main body 210F and at least one projection mating portion 220F, the projection mating portion 220F can be electrically connected to the projection main body 210F, and the projection main body 210F can a project electrical signal to at least one image.

When the projection mating portion 220F is connected with the DC mating output unit 1211 on the top surface 1402 of the energy storage power supply 10, the projection mating portion 220F is cordlessly powered by the DC mating output unit 1211. In an embodiment, the projection mating portion 220F is disposed on a bottom surface of the projection main body 210F, so that when the projection device 20F is placed on the energy storage apparatus 10, the projection device 20F can be cordlessly powered by the energy storage apparatus 10. In an embodiment, the projection mating portion 220F is provided on a side surface and/or a bottom surface of the projection main body 210F.

As illustrated in FIG. 4G, the electrical device 20 cordlessly connected to the energy storage power supply 10 is a communication device 20G capable of providing a local area network. The DC mating output unit 1211 held on a top surface 1402 of the energy storage power supply 10 is a male elastic contact type electrical connector. Further, the electrical device 20 can be implemented as the communication device 20G, and a communication device mating portion 220G of the communication device 20G is a female contact type electrical connector corresponding to the DC mating output unit 1211. The DC mating output unit 1211 held on the top surface 1402 of the energy storage power supply 10 can be electrically connected with the communication device 20G, so that when the communication device 20G is disposed on the top surface 1402 of the energy storage power supply 10, the communication device 20G is cordlessly connected with the DC mating output unit 1211. The communication device 20G includes at least one communication main body 210G and at least one communication device mating portion 220G, and the communication main body 210G can provide a local area network. The communication main body 210G can be electrically connected with the communication device mating portion 220G, and when the communication device mating portion 220G is connected with the DC mating output unit 1211 on the top surface 1402 of the energy storage power supply 10, the communication device mating portion 220G is in contact with and supplied with power by the DC mating output unit 1211. It is worth mentioning that the communication main body 210G can be implemented as a router or a signal amplifier. The communication device mating portion 220G of the communication device 20G further includes a first communication device power supply terminal 221G, a second communication device power supply terminal 222G and a communication device communication terminal 223G. When the communication device mating portion 220G of the communication device 20G is connected with the DC mating output unit 1211 of the energy storage power supply 10, the first DC mating output power supply terminal 12111 of the DC mating output unit 1211 abuts with the first communication device power supply terminal 221G of the communication device 20G, the second DC mating output power supply terminal 12112 of the DC mating output unit 1211 abuts against the second communication device power supply terminal 222G of the communication device 20G, the first DC mating output power supply terminal 12111 of the energy storage power supply 10 is electrically connected to the first communication device power supply terminal 221G of the communication device 20G, and the second DC mating output power supply terminal 12112 of the energy storage power supply 10 is electrically connected to the second communication device power supply terminal 222G of the communication device 20G to form a loop, so that the energy storage power supply 10 can output a current. The DC mating output communication terminal 12113 of the DC mating output unit 1211 abuts against the communication device communication terminal 223G of the communication device 20G to communicatively connect the communication device 20G with the energy storage power supply 10. The energy storage power supply 10 is configured to identify at least one of a rated voltage, a rated power and a rated current of the communication device 20G, and then the energy storage power supply 10 can output a corresponding rated voltage and a corresponding rated current to the communication device 20G.

In an embodiment, the first communication device power supply terminal 221G, the second communication device power supply terminal 222G and the communication device communication terminal 223G of the communication device mating portion 220G do not elastically contract. When the communication device mating portion 220G is far away from the DC mating output unit 1211, the first DC mating output power supply terminal 12111, the second DC mating output power supply terminal 12112 and the DC mating output communication terminal 12113 respectively automatically spring back. That is to say, the first DC mating output power supply terminal 12111, the second DC mating output power supply terminal 12112 and the DC mating output communication terminal 12113 tend to rebound and stick to an object for squeezing the first DC mating output power supply terminal 12111, the second DC mating output power supply terminal 12112 and the DC mating output communication terminal 12113 when the first DC mating output power supply terminal 12111, the second DC mating output power supply terminal 12112 and the DC mating output communication terminal 12113 are squeezed.

In an embodiment, the communication device mating portion 220G is disposed on a bottom surface of the communication main body 210G, so that when the communication device 20G is disposed in the energy storage apparatus 10, the communication device 20G can be cordlessly powered by the energy storage apparatus 10.

In an embodiment, the communication device mating portion 220G is disposed on a side surface and/or a bottom surface of the communication main body 210G.

In an embodiment, the DC mating output unit 1211 is a male contact type DC electrical connector, and the device mating portion 220 of the electrical device 20 is a female contact type DC electrical connector corresponding to the DC mating output unit 1211. A terminal of the DC mating output unit 1211 does not need an elastic restoring force.

As illustrated in FIG. 4H, another illustrated embodiment of the invention is disclosed and explained in detail. Different from the embodiment shown in FIG. 2B, at least one DC mating output unit 1211 is disposed on the circumferential side surface 1401 of the housing body 141, and the DC mating output unit 1211 and the AC output unit 1220 are relatively disposed on the circumferential side surface 1401 of the housing body 141.

The electrical device 20 cordlessly connected to the energy storage power supply 10 is a drinking device 20H that can handle beverage and output the beverage. The DC mating output unit 1211 disposed on the circumferential side surface 1401 of the energy storage power supply 10 can be electrically connected to the drinking device 20H. When the drinking device 20H is disposed on the circumferential side surface 1401 of the energy storage power supply 10, the drinking device 20H is cordlessly connected by the DC mating output unit 1211.

It is worth mentioning that the drinking device 20H can allow users to obtain beverage by at least one of filtering, grinding, heating, squeezing or outputting. The material of the beverage is not limited by the invention, and can be water and other ingredients such as coffee, tea, or fruit.

The drinking device 20H includes at least one drinking main body 210H and at least one drinking device mating portion 220H, and the drinking main body 210H can process beverage and output the beverage. The drinking main body 210H can be electrically connected to the drinking device mating portion 220H, and when the drinking device mating portion 220H is connected to the DC mating output unit 1211 of the circumferential side surface 1401 of the energy storage power supply 10, the drinking device 20H is cordlessly powered by the DC mating output unit 1211.

In an embodiment, the drinking device mating portion 220H is disposed on a side of the drinking main body 210H, so that when the drinking device 20H is placed in the energy storage apparatus 10, the drinking device 20H can be cordlessly powered by the energy storage apparatus 10.

In an embodiment, the drinking device mating portion 220H is disposed on a top surface and/or a bottom surface of the drinking main body 210H.

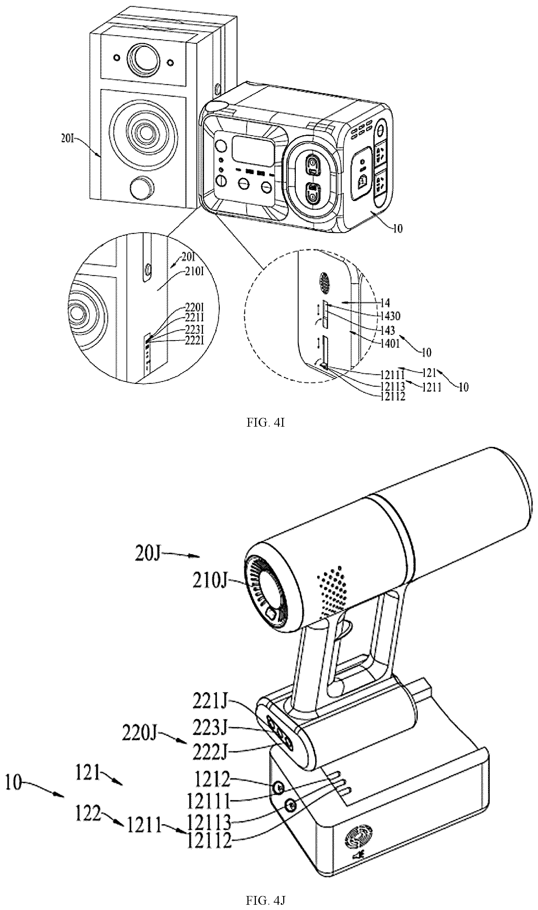

As illustrated in FIG. 4I, the electrical device 20 cordlessly connected to the energy storage power supply 10 is an audio device 20I for playing sound. The DC mating output unit 1211 held on the circumferential side surface 1401 of the energy storage power supply 10 can be electrically connected to the audio device 20I, so that when the audio device 20I is close to the circumferential side surface 1401 of the energy storage power supply 10, the audio device 20I is cordlessly connected with the DC mating output unit 1211.

As illustrated in FIG. 4I, there are more than two DC mating output units 1211 held on the circumferential side surface 1401 of the energy storage power supply 10, in which the adjacent DC mating output units 1211 are kept on the same circumferential side surface 1401 at intervals, so that the electrical device 20 with different heights can be cordlessly powered by the energy storage power supply 10 without height adjustment.

The audio device 20I includes at least one audio main body 210I and at least one audio device mating portion 220I, and the audio main body 210I can convert an electrical signal into a sound wave. The audio main body 210I can be electrically connected to the audio device mating portion 220I, and when the audio device mating portion 220I is connected to the DC mating output unit 1211 of the circumferential side surface 1401 of the energy storage power supply 10, the audio device mating portion 220I is cordlessly powered by the DC mating output unit 1211.

In an embodiment, the audio device mating portion 220I is disposed on a side of the audio main body 210I, so that when the audio device 20I is disposed on the circumferential side surface 1401 of the energy storage apparatus 10, the audio device 20I can be cordlessly powered by the energy storage apparatus 10.

In an embodiment, the audio device mating portion 220I is disposed on a side surface and/or a bottom surface of the audio main body 210I.

The housing 14 further includes at least one mating adapter 143, which further has at least one rail 1430, and the DC mating output unit 1211 can move back and forth along the rail 1430 in a height direction of the housing body 141 to adapt to a height of the device mating portion of the electrical device 20.

In an embodiment, the housing 14 further includes two mating adapters 143, and the two mating adapters 143 are arranged along the height direction of the housing body 141. Each mating adapter 143 is provided with at least one DC mating output unit 1211.

In an embodiment, the DC mating output unit 1211 can rotate along an axis, so that the DC mating output unit 1211 can switch between a storage position and a power-on position along the axis. When the DC mating output unit 1211 is in the storage position, the DC mating output unit 1211 is stored in the rail 1430 of the connection adapter 143. The DC mating output unit 1211 is extended along the height direction of the housing body 141. When the DC mating output unit 1211 is in the storage position, the DC mating output unit 1211 extends in a circumferential direction from the circumferential side surface 1401 of the housing body 141.

As illustrated in FIG. 4J, the electrical device 20 is a cleaning device 20K, which includes at least one cleaning main body 210K and at least one cleaning device mating portion 220K, so that the cleaning main body 210K is electrically connected to the DC mating output unit 1211 of the energy storage power supply 10 by being pushed directly into the mating cavity 14200 of the mating portion 142.

As illustrated in FIG. 4J, the cleaning device mating portion 220K is disposed on a grip portion 211K of the cleaning main body 210K, and the cleaning device mating portion 220K is disposed on a radial bottom surface of the cleaning main body 210K perpendicular to an axial direction, so that the cleaning main body 210K is electrically connected in such a way that it directly is in contact with the DC mating output unit 1211 when being pushed into the mating portion 142 along the axial direction. The cleaning device 20K may be a car cleaner. The cleaning device 20K can also be implemented as another cleaning device such as a household vacuum cleaner, a sweeping robot, a vacuum cleaner integrated with washing and mopping, or a floor washer. In an embodiment, the cleaning device 20K is electrically connected to the energy storage power supply 10 by being clamped onto the energy storage power supply 10. In an embodiment, the energy storage power supply 10 can follow the cleaning device 20K to provide power to the cleaning device 20K in real time. In other words, the energy storage power supply 10 can not only supply power to the cleaning device 20K when the cleaning device is stationary, but also provide power to the cleaning device 20K in real time when the cleaning device 20K is in operation.

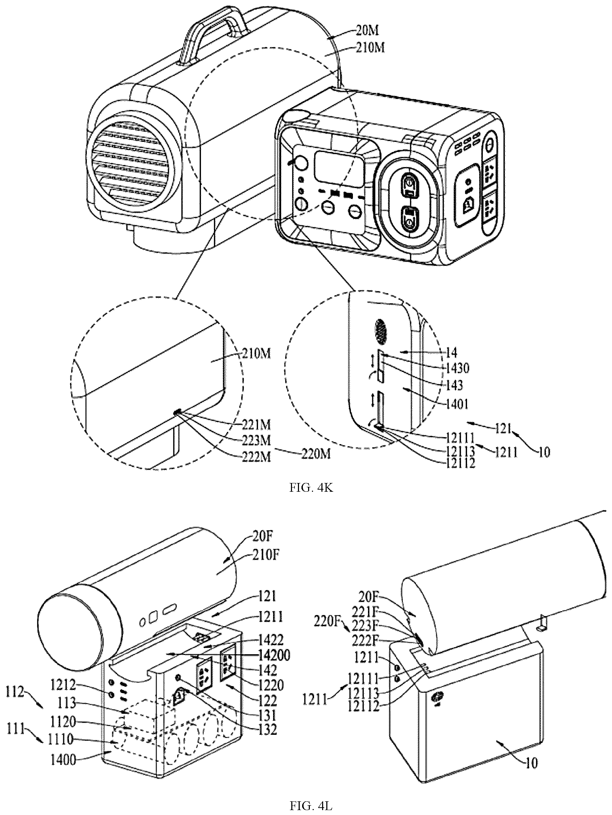

As illustrated in FIG. 4K, unlike the embodiment shown in FIG. 4J, the electrical device 20 is implemented as an AC/DC outdoor air conditioner 20M. When the AC/DC outdoor air conditioner 20M receives a DC, the AC/DC outdoor air conditioner 20M includes an air conditioning main body 210M and an air conditioning device mating portion 220M, and the air conditioning device connection portion 210M is electrically connected by being inserted into the DC mating output unit 1211 of the DC connection module 121 of the energy storage power supply 10. The AC/DC outdoor air conditioner 20M can receive the DC, and the AC/DC outdoor air conditioner 20M is a DC device. The AC/DC outdoor air conditioner 20M is electrically connected by being inserted into the DC mating output unit 1211 of the DC connection module 121 of the energy storage power supply 10. The DC mating output unit 1211 is disposed on the circumferential side surface 1401 of the housing body 141. The air conditioning device mating portion 220M of the AC/DC outdoor air conditioner 20M is connected with the DC mating output unit 1211 of the AC connection module 122 of the energy storage power supply 10 to receive the DC. Further, the AC/DC outdoor air conditioner 20M can communicate with the DC mating output unit 1211 of the energy storage power supply 10, and the AC/DC outdoor air conditioner 20M is communicatively connected with the DC mating output communication terminal 12113 of the DC mating output unit 1211. The DC mating output unit 1211 is implemented as one of a USB interface, a Type-C interface, a lightning interface and a straight cable interface, and can be designed according to specific conditions, which is not limited herein. In an embodiment, the number of DC connection output units 1211 is selected from a number group consisting of 2, 3, 4, 5, 6, 7, 8, 9, and 10. Further, the air conditioning device mating portion 220M of the AC/DC outdoor air conditioner 20M includes a first air conditioning device power supply terminal 221M, a second air conditioning device power supply terminal 222M and an air conditioning device communication terminal 223M. When the first air conditioning device power supply terminal 221M of the AC/DC outdoor air conditioner 20M is connected with the first DC mating output power supply terminal 12111 of the energy storage power supply 10, the second air conditioning device power supply terminal 222M of the AC/DC outdoor air conditioner 20M is connected with the second DC mating output power supply terminal 12112 of the energy storage power supply 10 to form a loop. The air conditioning device communication terminal 223M of the AC/DC outdoor air conditioner 20M is electrically connected to the DC mating output communication terminal 12113 of the energy storage power supply 10.

As illustrated in FIG. 4L, different from the embodiment of FIG. 4A, the DC mating output unit 1211 provided on the top surface 1402 of the energy storage power supply 10 is provided on the mating portion 142, the mating portion 142 is held on the top surface 1402 of the housing body 141, and the mating opening 14201 of the mating portion 142 is disposed on the circumferential side surface 1401 of the housing body 141. The electrical device 20 can be inserted into the mating cavity 14200 of the mating portion 142 from the circumferential side surface 1041, and the electrical device 20 is limited by the mating portion 142. The DC mating output unit 1211 is implemented as a contact DC electrical connector. In an embodiment, the mating portion 142 includes a mating main body 1421 and a limiting mechanism 1422. The mating main body 1421 is implemented as a quadrilateral with a circumferential opening and a top opening. The limiting mechanism 1422 extends from the mating main body 1421 and extends toward a central axis of the mating main body 1421, so that the mating opening 14201 has an "Ω" section, so that the electrical device 20 is placed in the mating cavity 14200 through the mating opening 14201. In other words, when the electrical device 20 is clamped and positioned in the energy storage power supply 10, the electrical device 20 is held to protrude from the top surface 1402 of the energy storage power supply 10. The electrical device 20 is a projection device 20F, and the electrical device 20 includes at least one projection main body 210F, at least one projection device mating portion 220F and at least one limited member 230F. The limited member 230F extends along an axial direction of the projection main body 210F so that the limited member 230F has at least one limited groove 2300F. The projection device mating portion 220F is disposed on a surface with an angle in the axial direction of the projection main body 210F, so that the projection main body 210F is electrically connected to the DC mating output unit 1211 of the energy storage power supply 10 in such a way that the projection main body 210F is directly pushed into the mating cavity 14200 of the mating portion 142. When the electrical device 20 is placed in the mating cavity 14200 through the mating opening 14201, the limiting mechanism 1422 is clamped into the limited groove 2300F of the projection device 20F. As the projection device 20F is pushed directly along the limiting mechanism 1422 of the mating portion 142, the device projection mating portion 220F of the projection device 20F is sleeved on the DC mating output unit 1211, so that the projection device 20F is electrically and cordlessly connected with the DC mating output unit 1211. In an embodiment, the limiting mechanism 1422 is disposed on the mating main body 1421 in a manner of facing the mating opening 14201, so that the electrical device 20 is limited to the limiting mechanism 1422 in a manner of being pushed directly.

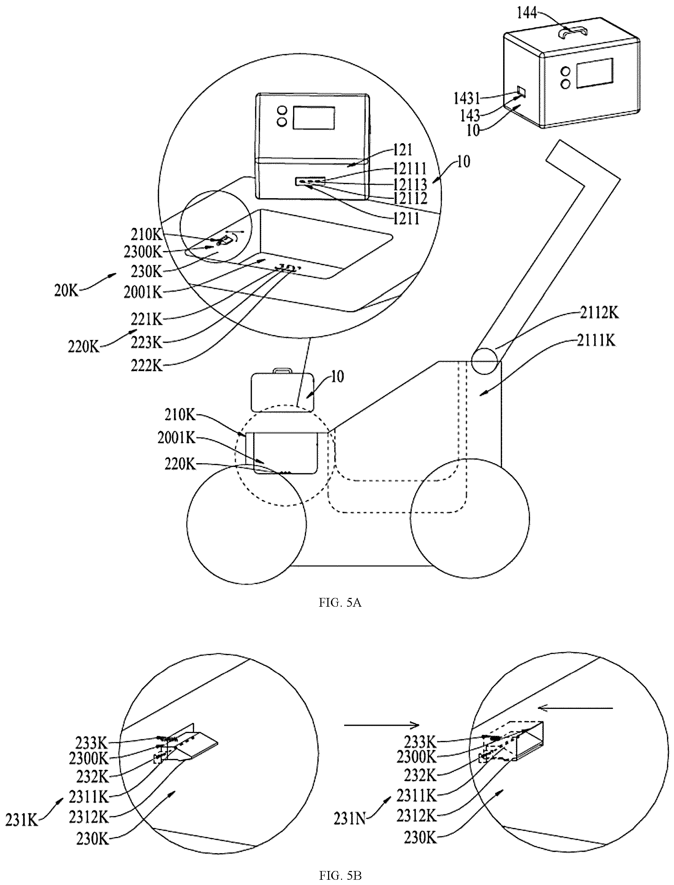

As illustrated in FIG. 5A, in another embodiment of the invention, the electrical device 20 is implemented as a walking device 20K. The walking device 20K and the energy storage power supply 10 are assembled into a whole to achieve an electrical connection, which becomes a new embodiment. The energy storage power supply 10 is installed on the walking device 20K, so that the energy storage power supply 10 can follow the walking device 20K in real time, thus ensuring the mobility of the walking device 20K. In an embodiment, the mating portion 142 of the energy storage power supply 10 is held on the walking device 20K in a locked manner, so that the energy storage power supply 10 can stably follow the walking device 20K and supply power to the walking device 20K.

In an embodiment, the walking device 20K includes a walking main body 210K and a walking device mating portion 220K disposed on the walking main body 210K. The walking main body 210K can walk by itself by being powered by the energy storage power supply 10.

In an embodiment, the walking main body 210K has a grip, so that the user can hold the walking main body 210K by holding the grip and keep the walking device 20K within the user's controllable range.

Further, the walking device 20K has at least one receiving groove 2001K, and the walking device mating portion 220K is disposed in the receiving groove 2001K, and the walking device mating portion 220K can be connected with the DC mating output unit 1211 of the energy storage power supply 10, so that the walking device 20K is cordlessly powered by the energy storage power supply 10.

In an embodiment, the walking device mating portion 220K is a DC electrical connector in contact connection, so that the walking device mating portion 220K is electrically connected to the DC mating output unit 1211 of the energy storage power supply 10. In another embodiment, the walking device mating portion 220K and the DC mating output unit 1211 are implemented as three-pin contact electrical connectors.

The walking device mating portion 220K further includes a first walking device power supply terminal 221K, a second walking device power supply terminal 222K, and a walking device communication terminal 223K. When the walking device mating portion 220K of the walking device 20K is connected with the DC mating output unit 1211 of the energy storage power supply 10, the first DC mating output power supply terminal 12111 of the DC mating output unit 1211 abuts with the first walking device power supply terminal 221K of the walking device mating portion 220K, the second DC mating output power supply terminal 12112 of the DC mating output unit 1211 abuts against the second walking device power supply terminal 222K of the walking device mating portion 220K, and the DC mating output communication terminal 12113 of the DC mating output unit 1211 abuts against the walking device communication terminal 223K of the walking device mating portion 220K. The first DC mating output power supply terminal 12111 of the energy storage power supply 10 is electrically connected to the first walking device power supply terminal 221K of the walking device 20K, and the second DC mating output power supply terminal 12112 of the energy storage power supply 10 is electrically connected to the second walking device power supply terminal 222K of the walking device 20K to form a loop, so that the energy storage power supply 10 can identify at least one of a rated voltage, a rated power and a rated current of the walking device 20K, and then the energy storage power supply 10 can output corresponding rated voltage and current to the walking device 20K.

In an embodiment, the energy storage power supply 10 is electrically connected to the walking device 20K in such a way that the energy storage power supply 10 is placed at the walking device mating portion 220K of the walking device 20K, so that the walking device 20K is electrically connected to the energy storage power supply 10 in such a way that the energy storage power supply 10 is accommodated in the walking device 20K.

Further, the energy storage power supply 10 further includes an energy storage grip portion 144, and the energy storage grip portion 144 can be conveniently held or carried by a user.

The walking device 20K includes a device limiting portion 230K, and the energy storage power supply 10 can be directly placed in the receiving groove 2001K and then received by the device limiting portion 230K.

Further, the walking device mating portion 220K is placed in the receiving groove 2001K of the device limiting portion 230K, and the walking device mating portion 220K is kept on a bottom surface defining the receiving groove 2001K, so that the energy storage power supply 10 can be directly in contact with the walking device mating portion 220K when the energy storage power supply 10 is placed into the receiving groove 2001K, and the energy storage power supply 10 and the walking device 20K can be electrically connected without other actions.

In an embodiment, the device limiting portion 230K is disposed on a side wall defining the receiving groove 2001K. The device limiting portion 230K is an elastic limiting member, which pushes the device limiting portion 230K to deform when the energy storage power supply 10 is vertically placed in the receiving groove 2001K, and recovers the deformation when the energy storage power supply 10 is accommodated in the receiving groove 2001K, so as to be buckled with the energy storage power supply 10.

Further, the device limiting portion 230K includes at least one limiting member 231K, at least one axial member 232K and at least one restoring member 233K. The device limiting portion 230K further has at least one restoring groove 2300K, and the limiting member 231K, the axial member 232K and the restoring member 233K are held in the restoring groove 2300K. The restoring groove 2300K is disposed on the side wall defining the receiving groove 2001K, so that the receiving groove 2001K and the restoring groove 2300K are conductively connected, and then the limiting member 231K can reciprocate in the receiving groove 2001K and the restoring groove 2300K.

An end of the restoring member 233K is disposed on a side wall defining the restoring groove 2300K, and another end of the restoring member 233K is disposed on the limiting member 231K, which is abutted by the restoring member 233K. When the energy storage power supply 10 pushes the limiting member 231K to move toward the restoring groove 2300K, the restoring member 233K is squeezed. When the energy storage power supply 10 is disposed to face away from the receiving groove 2001K of the walking device 20K, the restoring member 233K pushes the limiting member 231K to reset.

In an embodiment, the restoring member 233K is a spring.

As illustrated in FIG. 5B, the axial member 232K is disposed on the limiting member 231K, and the limiting member 231K can be turned back and forth along the axial member 232K for a certain angle. The limiting member 231K has at least one first guide surface 2311K. When the energy storage power supply 10 is placed in the receiving groove 2001 of the walking device 20K under the action of gravity, the first guide surface 2311K is pushed by the energy storage power supply, so that the limiting member 231K is driven to rotate downward to a limiting angle, and the energy storage power supply 10 can push the limiting member 231K into the restoring groove 2300K.

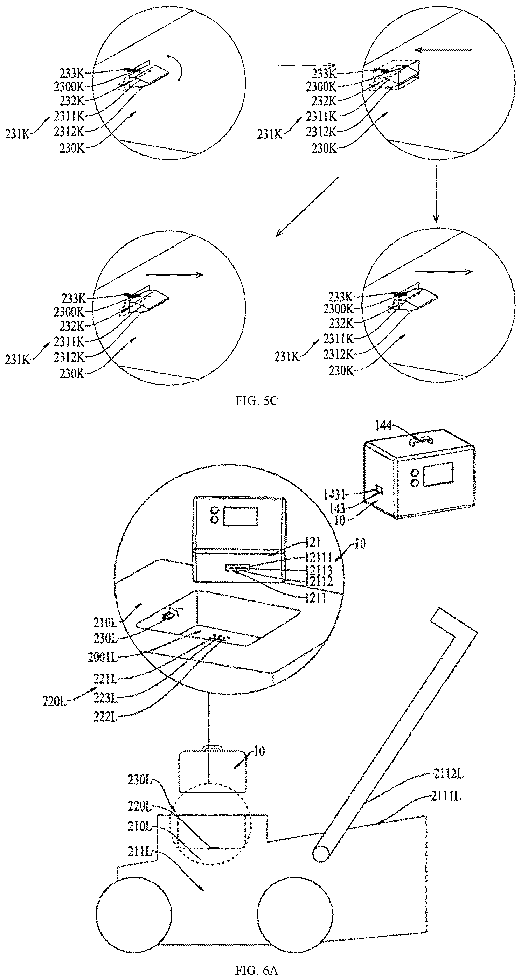

As illustrated in FIG. 5C, the limiting member 231K has at least one first guide surface 2311K opposite to the first guide surface 2311K. When the energy storage power supply 10 is lifted in the state of being placed in the receiving groove 2001 of the walking device 20K, the first guide surface 2311K is pushed by the energy storage power supply, so that the limiting member 231K is driven to rotate upward to a release angle, and the energy storage power supply 10 can push the limiting member 231K into the restoring groove 2300K.

In an embodiment, the axial member 232K is a torsion spring, and the limiting member 231K automatically returns to a horizontal state or a limiting angle when the limiting member 231K is not squeezed. In another embodiment, the axial member 232K is a shaft component, which cannot drive the limiting member 231K to automatically return to the horizontal state or the limiting angle.

It is worth mentioning that the housing 14 further includes at least one mating adapter 143, the mating adapter 143 further has a mating mechanism 1431, and the limiting member 231K can move along the height direction of the circumferential side surface 1401 of the housing body 141 to be locked in the mating mechanism 1431, thereby locking the energy storage power supply 10. Because the mating adapter 143 has an opening, when the energy storage power supply 10 is pushed up, the limiting member 231K is driven by the mating mechanism 1431 to move to the release angle and then pushed to the restoring groove 2300K to be separated from the mating mechanism 1431.

The mating adapter 143 has a latch (such as a lock catch) linked with it. When the energy storage power supply 10 is inserted into the receiving groove 2001K, the latch forms a latch connection with a latch groove on the electrical device 20, such as the lock catch is buckled into the latch groove.

In an embodiment, the mating mechanism 1431 is a locking groove disposed on the circumferential side surface 1401 of the housing body 141 of the energy storage power supply 10 for locking the limiting member 231K. In other modified embodiments, the mating mechanism 1431 may be a structure protruding from a surface of the housing body 141 of the energy storage 10 and having at least one mating opening.

It is worth mentioning that the walking device 20K can be implemented as a stroller, an electric car, a battery car, a balance car, an electric scooter, or a toy. The walking device mating portion 220K is disposed on a vehicle body, and the walking device mating portion 220K and a position supporting the human body are disposed at intervals, so that when the energy storage power supply 10 is disposed on the walking device mating portion 220K, the user's use of the walking device 20K will not be affected.

In an embodiment, the walking device 20K is an assisted stroller to assist the movement of a vehicle.

In an embodiment, the walking device 20K may be implemented as a balance car. The walking device mating portion 220K of the balance car is disposed in a middle position, and between two foot control parts of the balance car, so as to prevent the energy storage power supply 10 from affecting the user's control of the balance car in left and right directions through the two foot control parts. In an embodiment, the device mating portion 220K of the electric scooter is disposed in the middle position to prevent the energy storage power supply 10 from affecting the user's control of the electric scooter in left, right, front and back directions through the foot control parts.

As illustrated in FIG. 6A, in another embodiment of the invention, the electrical device 20 is implemented as a garden device 20L. The garden device 20L and the energy storage power supply 10 are assembled into a whole to achieve an electrical connection, which becomes a new embodiment. The energy storage power supply 10 can stably follow and supply power to the garden device 20L.

In an embodiment, the garden device 20L is powered by a high-power current output by the energy storage power supply 10, and the high-power current means that the output current is greater than 20 A. When the electrical device 20 is other device, the energy storage power supply 10 can supply power to other electrical device 20 by outputting high-power current through the DC mating output unit 1211.

It is worth mentioning that the DC mating output unit 1211 is implemented as a straight cable interface, which is connected to the garden device 20L with a corresponding interface, and supplies power to the electrical device 20 with a current of more than 20 amps. In an embodiment, the DC mating output unit 1211 of the energy storage power supply 10 is implemented as a straight cable interface, and is electrically connected to other electrical device 20.

In an embodiment, the mating portion 142 of the energy storage power supply 10 is held by the garden device 20L in such a way that the mating portion 142 is locked to the garden device 20L, so that the energy storage power supply 10 can stably follow the garden device 20L and supply power to the garden device 20L.

Further, the energy storage power supply 10 further includes an energy storage grip portion 144, and the energy storage grip portion 144 can be conveniently held or carried by a user.

In an embodiment, the garden device 20L includes a garden device main body 210L and a garden device mating portion 220L disposed on the garden device main body 210L. The garden device 20L has an accommodating groove 2001L, the garden device mating portion 220L is disposed in an accommodating groove 2001L of the garden device 20L, and the device mating portion 220L can be connected with the DC mating output unit 1211 of the energy storage power supply 10, so that the garden device 20L is cordlessly powered by the energy storage power supply 10.

In an embodiment, the garden device mating portion 220L is a DC electrical connector in contact connection, so that the garden device mating portion 220L is electrically connected to the DC mating output unit 1211 of the energy storage power supply 10. In an embodiment, the garden device mating portion 220L and the DC mating output unit 1211 are implemented as a three-pin contact electrical connectors.

The garden device mating portion 220L further includes a first garden device power supply terminal 221L, a second garden device power supply terminal 222L, and a garden device communication terminal 223L. When the garden device mating portion 220L of the garden device 20L is connected with the DC mating output unit 1211 of the energy storage power supply 10, the first DC mating output power supply terminal 12111 of the DC mating output unit 1211 abuts with the first garden device power supply terminal 221L of the garden device mating portion 220L, the second DC mating output power supply terminal 12112 of the DC mating output unit 1211 abuts against the second garden device power supply terminal 222L of the garden device mating portion 220L, and the DC mating output communication terminal 12113 of the DC mating output unit 1211 abuts against the garden device communication terminal 223L of the garden device mating portion 220L. The first DC mating output power supply terminal 12111 of the energy storage power supply 10 is electrically connected to the first garden device power supply terminal 221L of the garden device 20L, and the second DC mating output power supply terminal 12112 of the energy storage power supply 10 is electrically connected to the second garden device power supply terminal 222L of the garden device 20L to form a loop, so that the energy storage power supply 10 can identify at least one of a rated voltage, a rated power and a rated current of the garden device 20L, and then can output corresponding rated voltage and current to the garden device 20L.

In an embodiment, the energy storage power supply 10 is electrically connected to the garden device 20L in such a way that the energy storage power supply 10 is placed at the garden device mating portion 220L of the garden device 20L, so that the energy storage power supply 10 is electrically connected to the energy storage power supply 10 in such a way that the energy storage power supply 10 is accommodated in the garden device 20L. In an embodiment, the energy storage power supply 10 is electrically connected to the garden device 20L in such a way that the energy storage power supply 10 is limited to the garden device 20L. That is to say, the DC mating output unit 1211 of the energy storage power supply 10 is held exposed.

The garden device 20L further includes a device limiting portion 230L, and the garden device mating portion 220L is placed in a receiving groove 2001L of the device limiting portion 230L, and the device mating portion 220 is held on a bottom surface defining the receiving groove 2001L, so that the energy storage power supply 10 can be directly in contact with the garden device mating portion 220L when the energy storage power supply 10 is placed in to the receiving groove 2001, and the energy storage power supply 10 and the garden device 20L can be electrically connected without other actions.

In an embodiment, the device limiting portion 230L is disposed on a side wall defining the receiving groove 2001L. The device limiting portion 230L is an elastic limiting member, which pushes the device limiting portion 230L to deform when the energy storage power supply 10 is vertically placed in the receiving groove 2001L, and recovers the deformation when the energy storage power supply 10 is accommodated in the receiving groove 2001L, so as to be buckled with the energy storage power supply 10.

As illustrated in FIG. 6A, the device limiting portion 230L includes at least one limiting member 231L, at least one axial member 232L and at least one restoring member 233L,. The device limiting portion 230L further has at least one restoring groove 2300L, and the limiting member 231L, the axial member 232L and the restoring member 233L are held in the restoring groove 2300L. The restoring groove 2300L is disposed on the side wall defining the receiving groove 2001L, so that the receiving groove 2001L and the restoring groove 2300L are conductively connected, and then the limiting member 231L can reciprocate in the receiving groove 2001L and the restoring groove 2300L.

An end of the restoring member 233L is disposed on a side wall defining the restoring groove 2300L, and another end of the restoring member 233L is disposed on the limiting member 231L, which is abutted by the restoring member 233L. When the energy storage power supply 10 pushes the limiting member 231L to move toward the restoring groove 2300L, the restoring member 233L is squeezed. When the energy storage power supply 10 is disposed to face away from the receiving groove 2001L of the walking device 20L, the restoring member 233L pushes the limiting member 231L to reset.

In an embodiment, the restoring member 233L is a spring.

In an embodiment, the garden device 20L is a snow blower, so that the energy storage power supply 10 can be placed in the snow blower to supply power to the snow blower for grass treatment and walking.

It is worth mentioning that the garden device 20L can also be implemented as a blower, a pruning machine or a water sprayer.

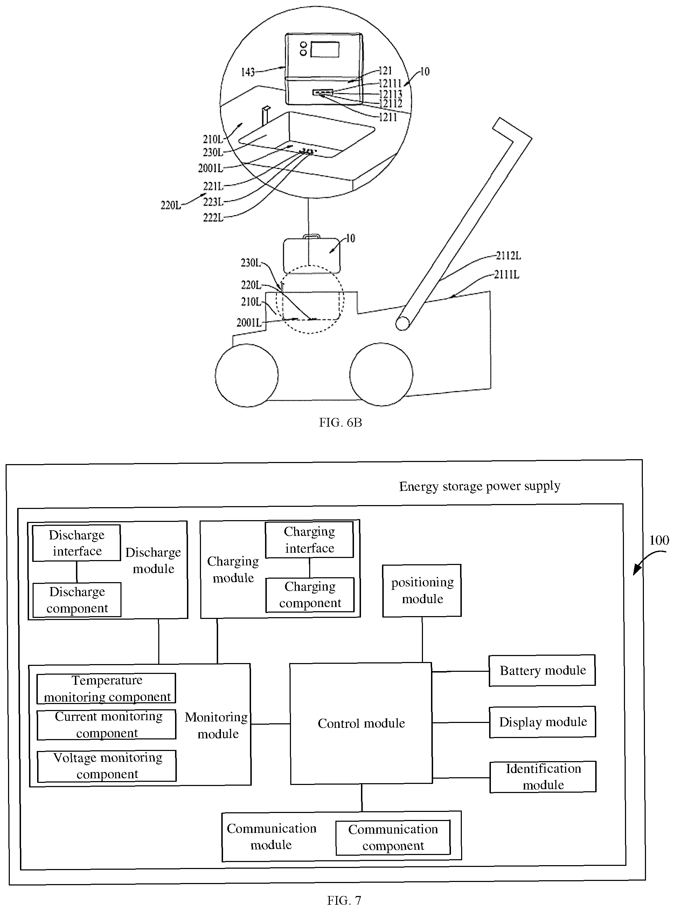

As illustrated in FIG. 6B, the modified embodiment of the embodiment shown in FIG. 6A is disclosed and explained in detail. Different from the embodiment shown in FIG. 6A, the energy storage power supply 10 can be placed in the electrical device 20 in a limited position without a corresponding mating portion. In other words, the implementation of the device limiting portion 230L is different from that of the device limiting portion 230L of the embodiment shown in FIG. 6A.

Further, the device limiting portion 230L is disposed at an edge defining the receiving groove 2001L. The device limiting portion 230L is an elastic limiting member, which pushes the device limiting portion 230L to deform when the energy storage power supply 10 is vertically placed in the receiving groove 2001L, and recovers the deformation when the energy storage power supply 10 is accommodated in the receiving groove 2001L, so as to be buckled with the energy storage power supply 10. Further, the device limiting portion 230L has a guiding surface to guide the energy storage power supply 10, so as to drive the device limiting portion 230L to deform in a way away from the receiving groove 2001L.

### Embodiment 2

As illustrated in FIGS. 7-16, according to an illustrated embodiment of the invention, an energy storage power supply 100 is provided, which includes a charging portion, a power supply main body and a discharge portion. The charging portion is configured to provide electric energy from outside to the power supply main body. The power supply main body is configured to store the electric energy. The discharge portion is configured to provide the electric energy stored in the power supply main body to an electrical device.

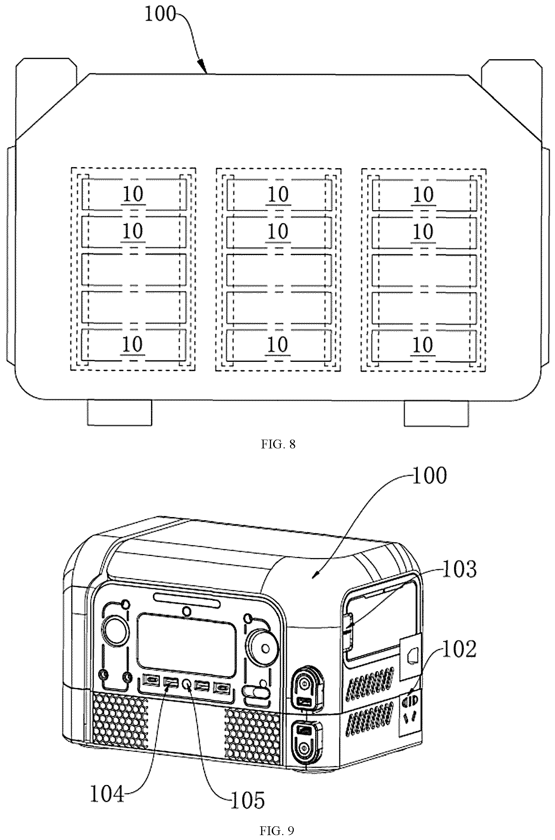

The power supply main body includes at least one battery module, each of which is composed of multiple batteries 10 connected in series or parallel. As shown in FIG. 8, the batteries 10 can be 21,700 batteries or 18,650 batteries.

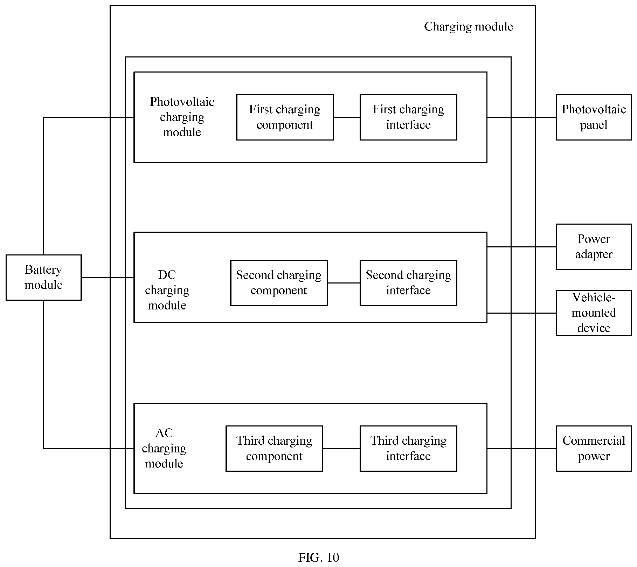

The charging portion includes at least one charging module for charging the battery module. The charging module can be one or more of a photovoltaic charging module, a DC charging module and an AC charging module, as illustrated in FIG. 10.

The photovoltaic charging module uses a photovoltaic panel to charge, that is, to convert solar energy into electric energy, and includes: a first charging component with a charging circuit for charging the battery module; and a first charging interface configured for connecting with a photovoltaic device to charge the battery module.

The DC charging module can be connected with a commercial power through a power adapter to charge, and can also charge the battery module through a vehicle-mounted charging cable. The DC charging module includes a second charging component with a charging circuit for charging the battery module; and a second charging interface configured for connecting with the power adapter or a vehicle-mounted device to charge the battery module. The first charging interface and the second charging interface may be two different types of charging interfaces or the same type of interface, such as a DC interface or an xt interface.

The AC charging module can be directly connected to the commercial power through a power supply connecting wire for charging, and includes: a third charging component with a rectifier circuit and a charging circuit for charging the battery module; and a third charging interface, which is configured for connecting with a power supply connecting line to charge the battery module.

The discharge portion includes a discharge module, which is used for electrically connecting the battery module with the electrical device and providing electric energy for the electrical device.

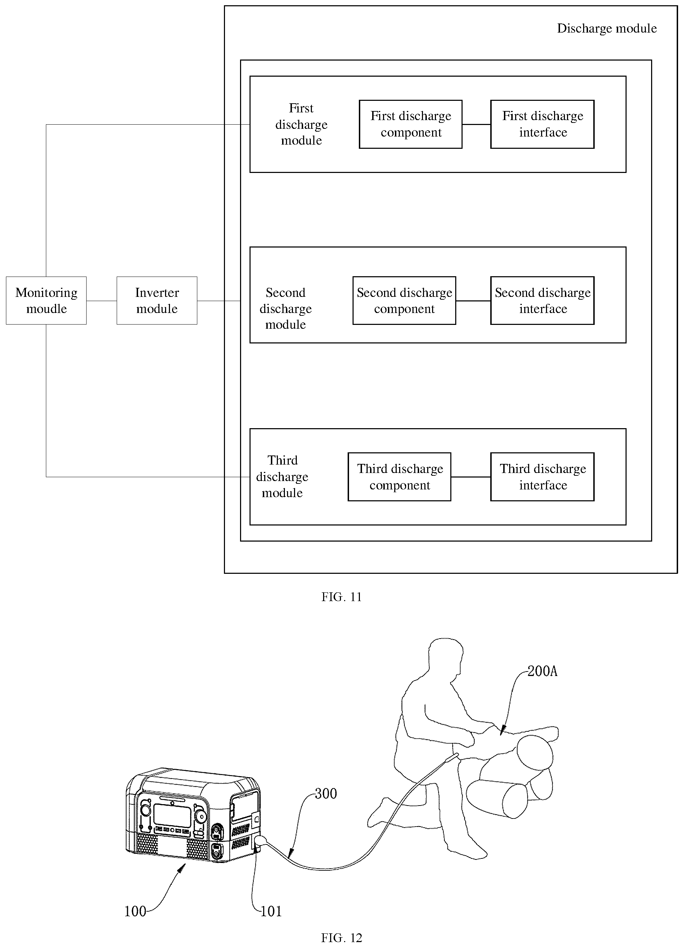

As shown in FIG. 11, the discharge module includes the first discharge module, which is used to provide a direct current, and an average discharge current of the discharge module is greater than or equal to 20A. The first discharge module includes a first discharge component provided with a high-current discharge circuit, which is used for providing a high current to electrical device; and a first discharge interface 101 for electrically connecting with the electrical device. The first discharge interface 101 may be, but is not limited to, a USB interface, a Type-C interface or a DC interface.

Further, the discharge module further includes a second discharge module, which is an AC discharge module and is suitable for supplying power to an electric tool, and the second discharge module includes: a second discharge module provided with a discharge circuit and an inverter circuit and configured for supplying an alternating current to the electrical device; and a second discharge interface 102 for electrically connecting with the electrical device.

The energy storage power supply is provided with a first switch 103 for turning on or off the discharge circuit of the second discharge module, so as to facilitate the user to control the second discharge module to supply power to the electrical device or turn off the power supply, and an operating part of the first switch 103 is exposed, so as to facilitate the user to operate the first switch 103.

Further, the discharge module is also provided with a third discharge module, which is a DC discharge module and is suitable for supplying power to 3C electronic products, and the third discharge module includes a third discharge module with a discharge circuit for supplying DC power to electrical device; and a third discharge interface 104 for electrically connecting with the electrical device.

The energy storage power supply is provided with a second switch 105 for turning on or off the discharge circuit of the third discharge module, so as to facilitate the user to control the third discharge module to supply power to the electrical device or turn off the power supply, and an operating part of the second switch 105 is exposed, so as to facilitate the user to operate the second switch 105.

The third discharge interface 104 can be one or more of a USB interface, a Type-C interface or a vehicle-mounted interface, and of course, the third discharge interface 104 can also be a battery bin to adapt to a detachable battery to charge the detachable battery.

The above-mentioned discharge interfaces and charging interfaces are concentrated on the same surface of the energy storage power supply. Alternatively, the above-mentioned discharge interfaces and charging interfaces can be distributed on multiple surfaces of the energy storage power supply, for example, the second discharge interface (namely AC interface) is disposed on one surface, and other discharge interfaces and charging interfaces are disposed on other surfaces, or, it is also possible that the discharge interfaces are disposed on one surface and the charging interfaces are disposed on the other surface.

The first discharge interface 101 can be electrically connected with the electrical device through a connecting wire 300. For example, when a user saws wood with the chainsaw 200A, when a battery pack of the chainsaw 200A is dead and the wood has not been sawed, the user only needs to take out the energy storage power supply 100, so that the chainsaw 200A can be connected to the energy storage power supply 100 through the connecting wire 300, so that the chainsaw can continue to work, as illustrated in FIG. 12.

The energy storage power supply is suitable for the electrical device, so that the first discharge module can provide electrical energy for the electrical device, and the electrical device can be a snow blower 200B, a lawn mower or a hand-held garden tool.

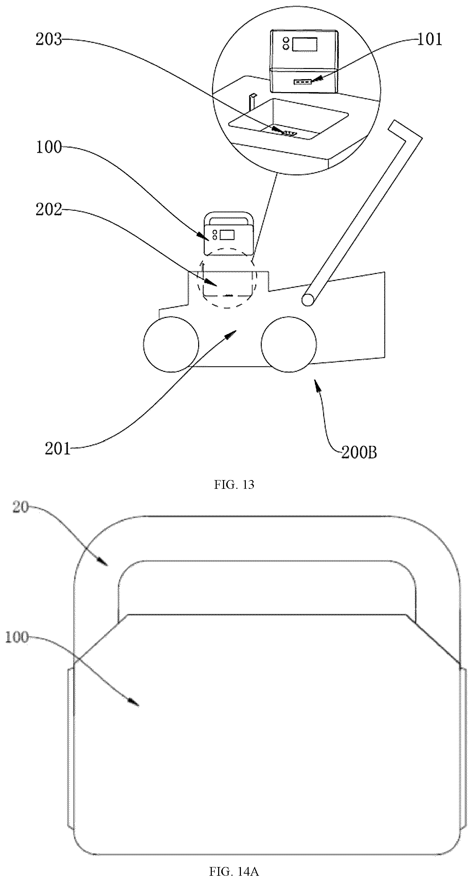

As illustrated in FIG. 13, the electrical device 200 includes a machine main body 201, and a groove 202 is arranged on the machine main body 201. The energy storage power supply is fitted in the groove 202. A concave part of the groove 202 and a shape of the energy storage power supply complement each other, and the groove 202 is provided with an opening to facilitate the installation of the energy storage power supply. A surface of the energy storage power supply contained in the groove 202 is a non-exposed surface, and a surface exposed outside the groove 202 is an exposed surface. At least one surface of the energy storage power supply is exposed outside the groove 202, and at least one charging interface is disposed on the exposed surface, so that when the energy storage power supply is adapted to the electrical device, it can also supply power to the energy storage power supply. The discharge interface of the energy storage power supply can be disposed on the exposed surface, so that when the energy storage power supply supplies power to the electrical device, it can also supply power to other electrical device. Of course, the energy storage power supply can also be disposed on the non-exposed surface which is in contact with the wall surface of the groove.

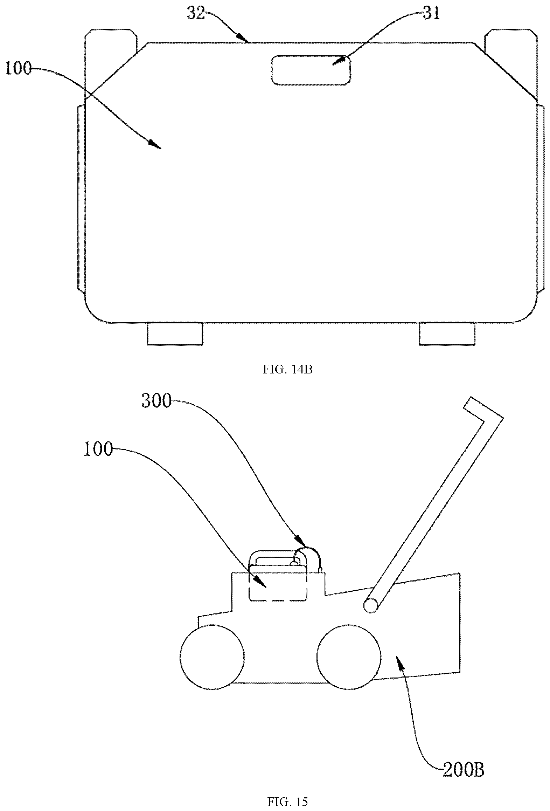

The exposed surface of the energy storage power supply 100 exposed out of the groove is provided with a grip portion for the user to take the energy storage power supply out of the groove by force. The grip portion may be a handle 20 protruding out of the energy storage power supply. The handle 20 may be integrally disposed on the energy storage power supply housing as shown in FIG. 14A, or may be folded and stored in the housing. The grip portion may be a holding groove 31 recessed inward, and the holding groove 31 is close to the holding surface 32. The holding surface 32 is adjacent to a surface where the holding groove 31 is disposed, as shown in FIG. 14B, when holding the energy storage power supply by a user, a finger of the user is partially placed into the holding groove 31, and a palm surface of the user is attached to the holding surface 32 to hold the energy storage power supply.

A connector 203 is arranged in the groove, the connector 203 is directly electrically connected with the first discharge interface and is suitable for pressure fitting, so as to ensure that the first discharge interface 101 is closely connected with the connector 203 and avoid the phenomenon of disconnection due to vibration. After the connector 203 is matched with the first discharge interface 101, the energy storage power supply provides electric energy to the electrical device, so that the electrical connection between the energy storage power supply and the electrical device can be realized when the energy storage power supply is assembled in the groove. The energy storage power supply is connected with the electrical device in a latching way, so as to improve the stability of the connection between the energy storage power supply and the electrical device and avoid the phenomenon of easy disconnection due to vibration. A structure for latch connection can be achieved through a manner as follows: an edge of the groove is provided with an elastic buckle, and a surface of the energy storage power supply is provided with a clamping groove for clamping the elastic buckle, and of course, the clamping groove may be not required, and the elastic buckle is directly clamped on the exposed surface of the energy storage power supply and also plays a fixing role.

As illustrated in FIG. 15, of course, the first discharge interface 101 can also be disposed on an exposed surface of the electrical device, so that the first discharge interface 101 can be electrically connected with the snow blower 200B through the connecting wire 300 to realize the electrical connection between the energy storage power supply and the snow blower 200B. In this case, the electrical device is provided with a placing table for placing the energy storage power supply, and the electrical connection between the energy storage power supply and the snow blower 200B will not be affected if the energy storage power supply moves slightly during work.

The energy storage power supply also includes a monitoring module for monitoring parameters such as current, a voltage and a temperature of the discharge module and the charging module, so as to realize temperature protection, over-discharge protection, over-current protection, short-circuit protection and over-voltage protection.

The energy storage power supply further includes a display module for displaying parameters of the energy storage power supply such as a battery capacity, an output voltage, a charging time, a discharging time, a high-temperature alarm, a low-temperature alarm, a wireless connection state, and an overload alarm.

The energy storage power supply further includes a communication module for realizing wired or wireless communication connection with the mobile communication device, so that the energy storage power supply can be remotely controlled through the mobile communication device.

The energy storage power supply further includes a positioning module, which is used for knowing the geographical position of the energy storage power supply.

The energy storage power supply further includes a control module, which is configured to determine whether the current, the discharge voltage and the charging voltage exceed a preset threshold value according to the parameters such as the current, the voltage and the temperature collected by the monitoring module, and if so, control the charging module to disconnect charging or control the discharge module to disconnect discharging. Further, the control module is also configured to receive the instruction of the communication module to execute the instruction.

The energy storage power supply also includes a heat dissipation module, which is at least provided with a fan, so as to play a heat dissipation role for discharging heat generated by the electrical device in the housing.

The control module sends a geographical position obtained by the positioning module and the parameters collected by the monitoring module to the mobile communication device through the communication module, so that users can check and understand a state of the energy storage power supply in real time.

The communication module can be cellular (such as 2G/3G/4G/5G/NB-IOT/LTE-M) or non-cellular (such as WIFI/ BLUETOOTH /ZIGBEE/LORA/SIGFOX), or both of them.

In an embodiment, the communication module is non-cellular to reduce the cost. Specifically, the communication module can be BLUETOOTH.

The energy storage power supply further includes an identification module, which is used for identifying whether the energy storage power supply is compatible with the electrical device, and if so, the energy storage power supply discharges the electrical device; otherwise, the electrical device is not discharged.

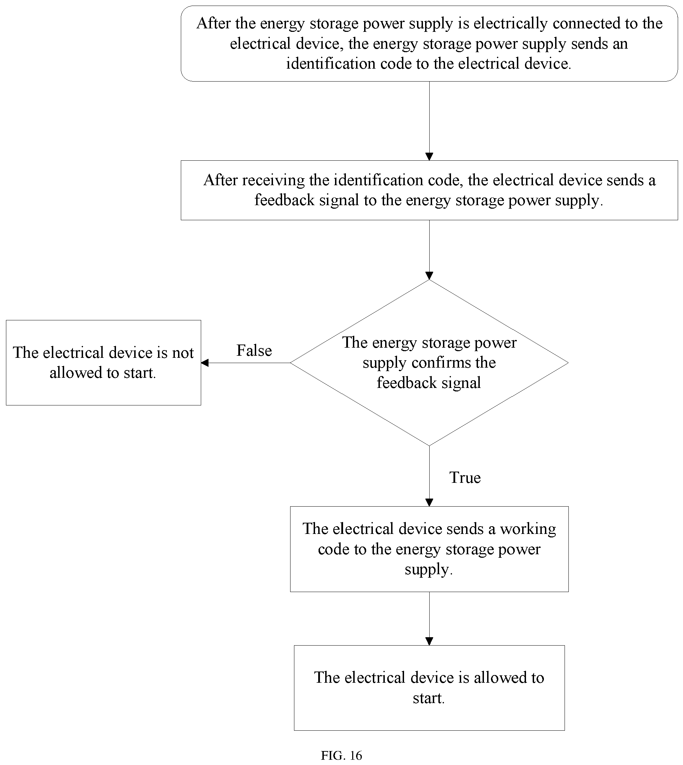

Specifically, after the energy storage power supply is electrically connected with the electrical device, the identification module of the energy storage power supply sends an identification code to the electrical device, the electrical device gives a feedback signal to the energy storage power supply after receiving the identification code, and the energy storage power supply confirms the feedback signal. If the feedback signal is true, the electrical device is allowed to be started, and if the feedback signal is false, the electrical device is not allowed to be started, as shown in FIG. 16.

Of course, it is also possible to determine whether the energy storage power supply is adapted to the electrical device by collecting a resistance value of a sample resistor. If the collected resistance value meets a preset threshold, the energy storage power supply will discharge for the electrical device, otherwise, the energy storage power supply will not discharge for the electrical device.

### Embodiment 3

As shown in FIGS. 7-23, an energy storage power supply 100 provided by the invention includes a charging portion, a power supply main body, a discharge portion and an inverter module. The charging portion is configured to provide electric energy from outside to the power supply main body. The power supply main body is configured to store the electric energy. The discharge portion is configured to provide the electric energy stored in the power supply main body to an electrical device. The inverter module is configured to converting a DC and an AC.

The power supply main body includes at least one battery module, each of which is composed of multiple batteries 10 connected in series or parallel. As shown in FIG. 8, the batteries 10 can be 21,700 batteries or 18,650 batteries.

The charging portion includes at least one charging module for charging the battery module. The charging module can be one or more of a DC charging module and an AC charging module, as shown in FIG. 3.

The AC charging module can charge that commercial power directly connected through a power supply connecting wire. The AC charging module includes a first charging component provided with a rectifying circuit and a charging circuit for charging the battery module; and a first charging terminal, configured to connect with the power supply connecting wire to charge the battery module. The first charging terminal can be an interface or a plug. In an embodiment, the first charging terminal can be an AC charging interface.

The DC charging module can be connected with a commercial power through a power adapter to charge, the DC charging module can also charge the battery module through a vehicle-mounted charging cable, and the DC charging module can also charge the battery module through a photovoltaic panel. The DC charging module includes a second charging component with a charging circuit for charging the battery module; and a second charging terminal configured for connecting with the power adapter, the vehicle-mounted device, or the photovoltaic panel to charge the battery module. The second charging terminal can be an interface or a plug, preferably, the second charging port adopts a DC interface or an xt interface.

The inverter module can convert a DC into an AC, and also can convert an AC into a DC. In some embodiments, a DC can be converted into a DC of different voltage platforms, that is, step-up or step-down regulation can be carried out. The inverter module can include a DC boost module, a high-frequency transformer and an AC inverter module.

The energy storage power supply 100 can supply power to 3C electronic products and mobile electrical devices. Specifically, the motorized electrical devices are driven by motors to meet the usage of different outdoor products. For example, the energy storage power supply can supply power to 3C electronic products such as mobile phones, electric kettles and other tools, or both. The energy storage power supply can also supply power to electrical devices driven by motors such as lawn mowers and pruning machines.

As shown in FIG. 11, the discharge module at least has a first discharge module, which outputs a direct current to provide electric energy for the motorized electrical device. The first discharge module at least includes a first discharge component with a discharge circuit to provide electric energy for the motorized electrical device; and a first discharge terminal for electrically connecting with the motorized electrical device.

Specifically, an average discharge current of the first discharge module is greater than or equal to 8 A, and a voltage of the first discharge module is consistent with a voltage of the battery module. That is to say, the first discharge module is directly connected with the battery module without going through the inverter module.

The above-mentioned energy storage power supply can be electrically connected with the motorized electrical device through a connecting wire. For example, when a user saws wood with a chainsaw 200A, the chainsaw 200A can be connected to the energy storage power supply 100 through a connecting wire 300, that is to say, the energy storage power supply supplies electric energy to the chainsaw 200A, as shown in FIG. 12.

In some embodiments, the mobile electrical device is provided with a placing platform for placing the energy storage power supply on the placing platform. In an embodiment, the placing platform is a groove 202 in which the energy storage power supply 100 fits, and a concave part of the groove 202 is complementary to a shape of the energy storage power supply 100. The groove 202 is provided with an opening to facilitate the loading of the energy storage power supply. In an embodiment, the first discharge terminal is shielded by the groove 202. The first discharge terminal is directly coupled with the charging terminal 203 on the motorized electrical device. Specifically, the first discharge terminal is an interface and the charging terminal is a plug. For example, the energy storage power supply is directly installed in the groove of the mower 200B, and when the energy storage power supply is installed in the groove, the first discharging interface 101 is directly coupled with the charging interface 203, as shown in FIG. 13.

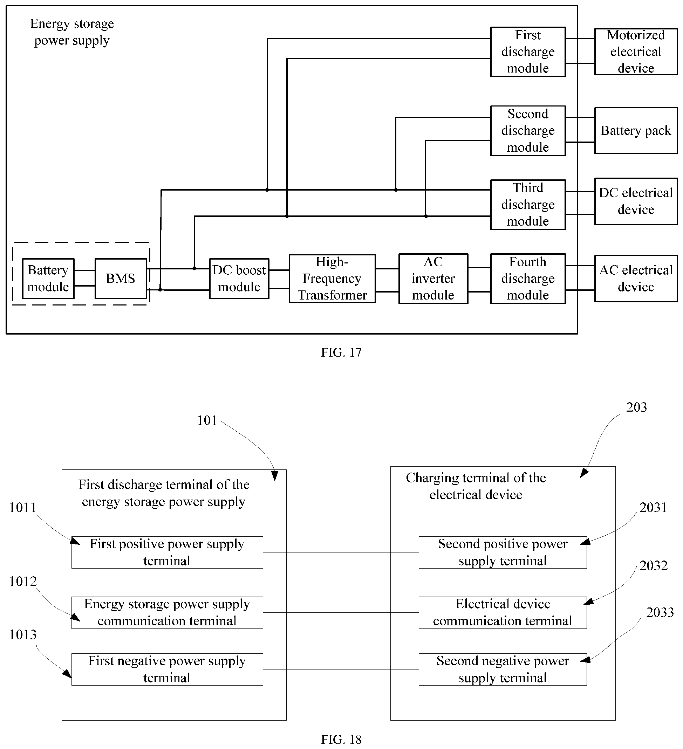

Specifically, as shown in FIG. 18, the first discharge terminal 101 has at least the following terminals: a first positive power supply terminal 1011; an energy storage power supply communication terminal 1012 for transmitting communication information; and a first negative power supply terminal 1013, which is matched with the first positive power supply terminal to transmit electric energy.

The charging terminal 203 has at least the following terminals: a second positive power supply terminal 2031 coupled with the first positive power supply terminal 1011; an electrical device communication terminal 2032, coupled with the energy storage power supply communication terminal 1012, for transmitting communication information; and a second negative power supply terminal 2033 coupled to the first negative power supply terminal 1013.

When the energy storage power supply is installed in the groove 202, an outer surface of the energy storage power supply shielded by the groove 202 is a non-exposed surface, while an outer surface not shielded by the groove 202 is an exposed surface. The first discharge terminal is disposed on the non-exposed surface.

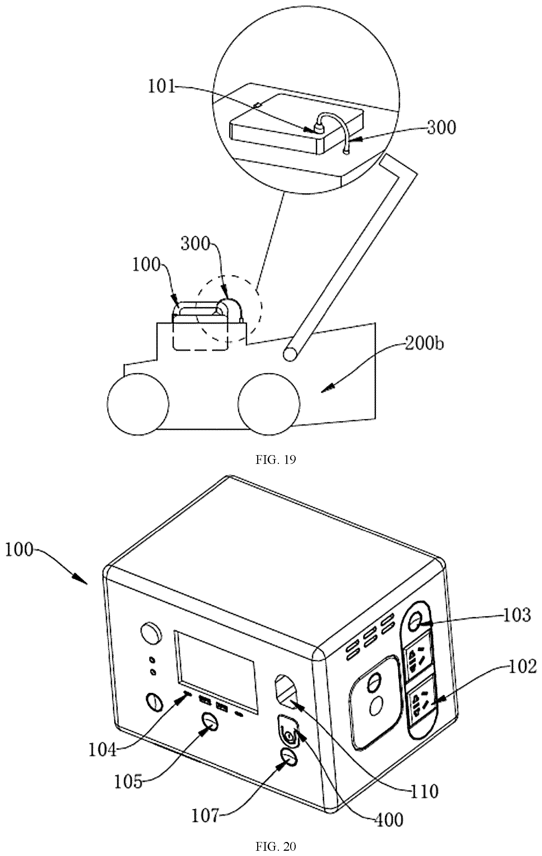

The first discharge terminal can be an interface or a plug. When the first discharge terminal is a USB interface, a Type-C interface, a DC interface or an Anderson interface, it can be connected with a power interface of a motorized electrical device through a connecting wire 300. For example, the first discharge terminal is a DC interface, and the stored electric energy is loaded into a groove in the motorized electrical device to supply electric energy to the mower 200B through the connecting wire 300, as shown in FIG. 19. In this case, the first discharge terminal is a DC interface.

As shown in FIG. 17 and FIG. 20, the above-mentioned discharge module further includes a second discharge module, which is provided with a bin body 110 on the housing of the energy storage power supply, and a battery pack 400 is coupled in the bin body 110, and the battery pack 400 can be taken out of the bin body 110 to provide electric energy for the electrical device. The second discharge module includes: a second discharge component provided with a discharge circuit, and a second discharge terminal. The second discharge terminal is disposed on an inner wall of the bin body 110.

When the motorized electrical device coupled with the first discharge module is started, the second discharge module is allowed to provide electric energy for the battery pack.

Specifically, when the motorized electrical device coupled with the first discharge module is started, the discharge circuit of the second discharge module is connected, which can be controlled by a controller. The controller at least includes a first switch 107, which is coupled to the discharge circuit of the second discharge module for connecting or disconnecting the discharge circuit of the second discharge module. An operating part of the first switch 107 is disposed on a surface of the energy storage power supply for user operation. When the motorized electrical device coupled with the first discharge module is started, the user can also operate the first switch 107.

The above-mentioned discharge module is also provided with a third discharge module, which is a DC discharge module and is suitable for supplying power to the DC electrical device. The third discharge module includes: a third discharge module with a discharge circuit for supplying a DC to a DC electrical device; and a third discharge terminal 104, which is used for being electrically connected with a DC electrical device.

The third discharge terminal can be an interface or a plug, and the third discharge terminal is preferably one or more of a USB interface, a Type-C interface, an Anderson interface or a vehicle interface. Specifically, the third discharge terminal is coupled with the DC electrical device through a connecting wire.

When the motorized electrical device coupled with the first discharge module is started, the third discharge terminal is disabled, and the discharge circuit of the third discharge module is disconnected under the control of the controller.

In some embodiments, the controller further includes a second switch 105 that connects or disconnects the discharge circuit of the third discharge module, so as to facilitate the user to control the closing or disconnection of the second switch, so as to enable the third discharge module to supply power to the DC electrical device or close the power supply. An operating part of the second switch is disposed on the outer surface of the energy storage power supply, so as to facilitate the user to operate the second switch, and when the motorized electrical device coupled with the first discharge module is started, the second switch is prohibited from operating. That is to say, the user can't operate the second switch, and the second switch is always in an off state. Specifically, the second switch can be shielded by the groove to make the user unable to operate, or the second switch can be controlled by the controller to make the user unable to operate.

The discharge module is also provided with a fourth discharge module, which is an AC discharge module and is suitable for supplying power to an AC electrical device. The fourth discharge module includes: a fourth discharge module provided with a discharge circuit and an inverter circuit and configured for supplying alternating current to the AC electrical device; and a fourth discharge terminal 102, which is used for being electrically connected with the AC electrical device.

The fourth discharge terminal can be an interface or a plug, can be preferably an AC output socket, such as a two-plug socket and/or a three-plug socket. Specifically, the fourth discharge terminal is coupled with an AC electrical device through a connecting wire.

When the motorized electrical device coupled with the first discharge module is started, the fourth discharge terminal is disabled, and the discharge circuit of the fourth discharge module is disconnected under the control of the controller.

In some embodiments, the controller further includes a third switch 103 for connecting or disconnecting the discharge circuit of the fourth discharge module, so as to facilitate the user to control the closing or disconnection of the third switch, so that the fourth discharge module can supply or close the power supply to the AC electrical device. An operating part of the third switch is disposed on an outer surface of the energy storage power supply, so as to facilitate the user to operate the third switch. When the motorized electrical device coupled with the first discharge module is started, the operation of the third switch 103 is prohibited, that is, the user cannot operate the third switch 103, and the third switch 103 is always in the off state. Specifically, the third switch 103 can be shielded by the groove 202 so that the user cannot operate the third switch 103, or the third switch 103 can be controlled by the controller so that the user cannot operate the third switch 103.

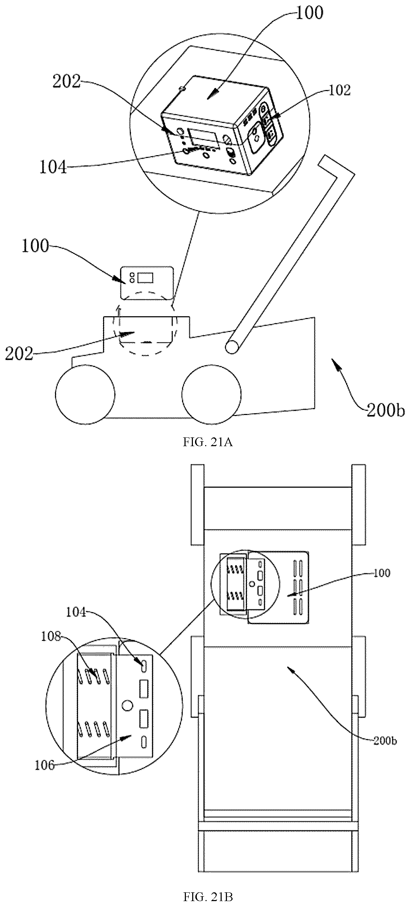

In some embodiments, when the motorized electrical device coupled with the first discharge module is started, the third discharge terminal and the fourth discharge terminal are physically shielded. For example, when the energy storage power supply is installed in the groove, the third discharge terminal and/or the fourth discharge terminal are partially shielded by the groove, and preferably, the third discharge terminal and/or the fourth discharge terminal are completely shielded by the groove, as shown in FIG. 21A.

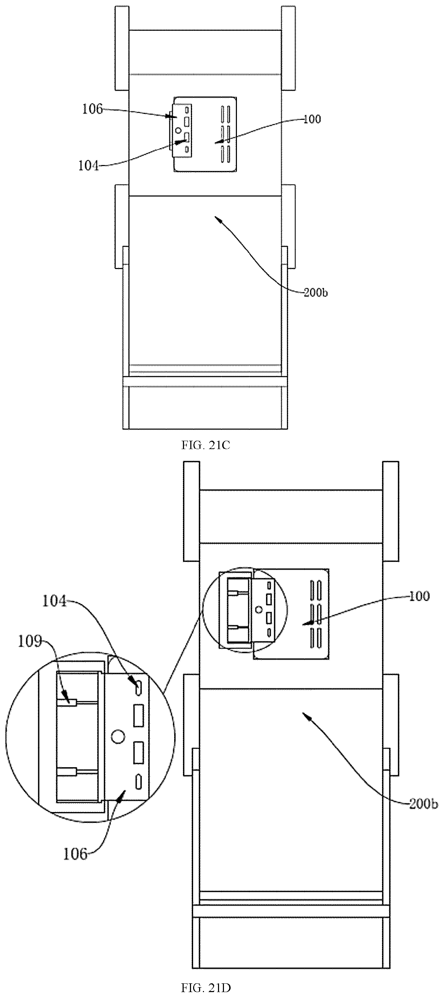

In some embodiments, a baffle 106 is provided at the notch of the groove 202, so that the third discharge terminal and/or the fourth discharge terminal are shielded by the baffle 106, as shown in FIG. 21B. The baffle 106 can be hinged on the motorized electrical device, as shown in FIG. 21C; or the baffle 106 can be slidably installed on the motorized electrical device, as shown in FIG. 21B. The baffle 106 can always close the notch of the groove under the action of the reset component 108, which can be a spring or a torsion spring. When opening the notch, the user only needs to apply a force overcome a force of the reset component 108, or the baffle 106 can be controlled in an electric way, such as using an electric push rod 109 to control the baffle 106. As shown in FIG. 21D, when controlled by the electric push rod 109, if the first discharge terminal continues to discharge to the motorized electrical device, the electric push rod 109 will always control the baffle 106 to close the notch of the groove without being affected by an external force.

The discharge terminals and the charging terminals may be concentrated on the same surface of the energy storage power supply. Alternatively, the discharge terminals and the charging terminals may be distributed on multiple surfaces of the energy storage power supply, for example, the fourth discharge terminal is disposed on one surface, and other discharge terminals and charging terminals are arranged on other surfaces; or, it is also possible that the discharge terminals are arranged on one surface and the charging terminals are arranged on the other surface.

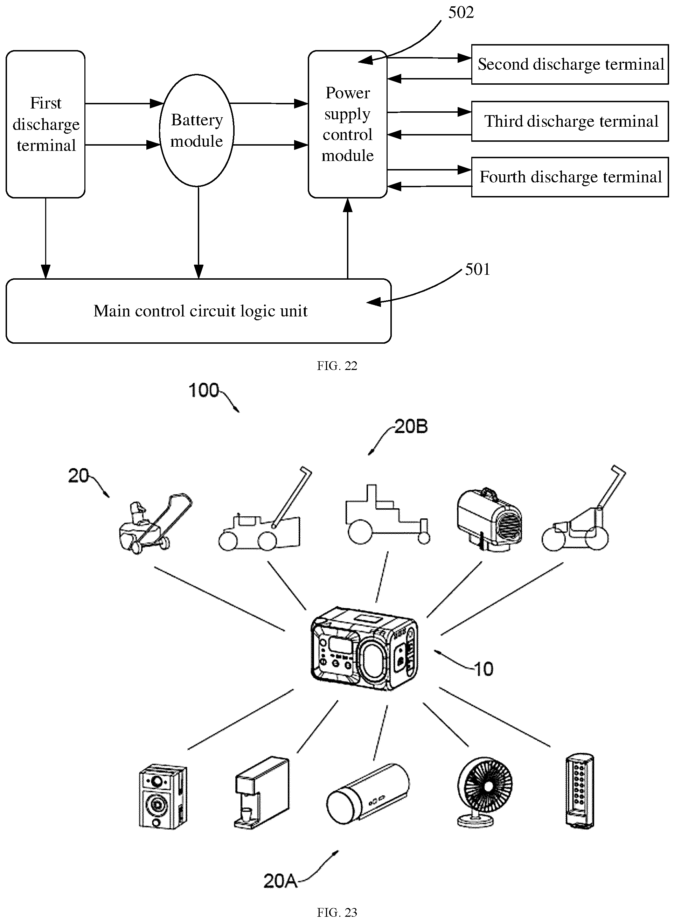

As illustrated in FIG. 22, a functional module diagram of the control system for controlling the discharge circuit is provided. The control system includes a main control circuit logic unit 501 and a power supply control module 502. The main control circuit logic unit 501 controls the power supply control module of the discharge circuit according to the information of the first discharge terminal and the battery module, thereby controlling the third discharge terminal and the fourth discharge terminal to be enabled or disabled.

When that energy storage power supply in the invention supplies power to the motorized electrical device through the first discharge terminal, the third discharge terminal and the fourth discharge terminal are disabled, so that when a user uses the motorized electrical device, the motorized electrical device is not easily interfered by connecting wires of other electrical devices, and the safety is improved. Further, the second discharge terminal disposed in the bin body for accommodating the battery pack is not disabled, and the charging of the battery pack accommodated in the energy storage power supply is not affected while ensuring safety.

### Embodiment 4

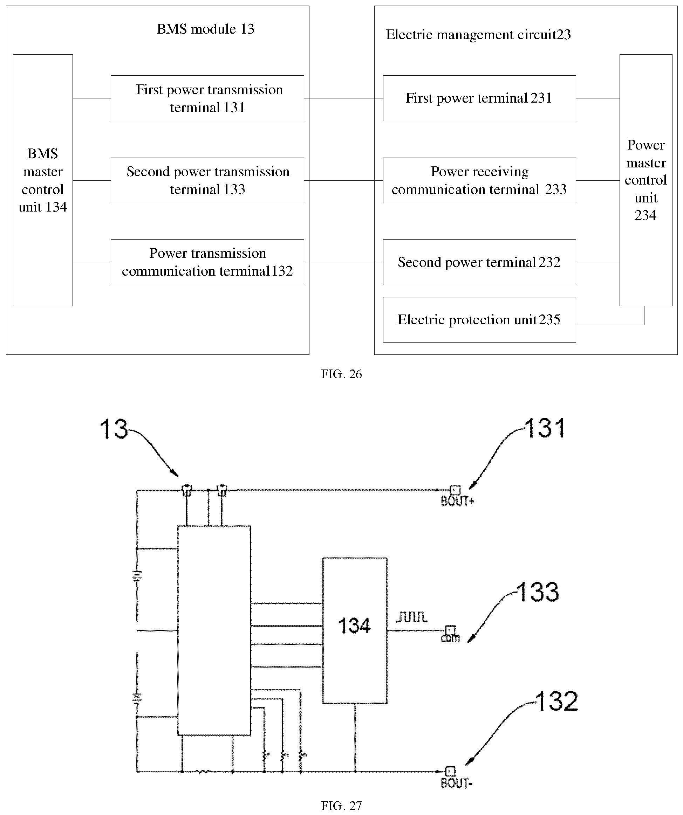

With reference to FIG. 23 through FIG. 33, a power supply system of an energy storage power supply and an electrical device according to the invention is explained in the following description.

The invention provides a power supply system 100 for an energy storage power supply and an electrical device. The power supply system 100 includes at least one energy storage power supply 10 and at least one electrical device 20. The energy storage power supply 10 is configured to supply power to the electrical device 20. The energy storage power supply 10 and the electrical device 20 are electrically connected with each other to realize electric energy transmission. The electrical connection between the energy storage power supply 11 and the electrical device 20 can be cordless or wired.

Power can be supplied to the electrical device 20 by one energy storage power supply 10 or by multiple energy storage power supplies 10. In some embodiments of the invention, the connection manner between the energy storage power supply 10 and the electrical device 20 may also include mechanical connection. The ways of mechanical connection include but are not limited to one or more of latch, chute, magnetic attraction, and buckle. Through the mechanical connection, the connection strength between the energy storage power supply 10 and the electrical device 20 is strengthened, and the relative stability of the energy storage power supply 10 and the electrical device 20 is maintained, so that the electrical connection state can be sustained.

In an embodiment, the energy storage power supply 10 is detachably installed on the electrical device 20. For example, the energy storage power supply 10 is provided with a latch groove, and the electrical device 20 is correspondingly provided with a latch. When the latch and the latch groove are connected in a latch mode, the latch fits in the latch groove to mechanically connect and fix the energy storage power supply 10 and the electrical device 20, and the electrical device 20 is also equipped with at least one unlocking mechanism for manually disengaging the latch from the latch groove, so as to facilitate the user to detach the energy storage power supply. It is apparent that, those skilled in the art should know that the above-mentioned latch groove can also be arranged on the electrical device 20, and the latch and the unlocking mechanism matched with it can be arranged on the energy storage power supply 10.

In an embodiment, the energy storage power supply 10 can be connected to the electrical device 20 to provide cordless power for the electrical device 20.

Referring to the schematic diagram of FIG. 23, the electrical device 20 includes a non-motorized electrical device 20A and a motorized electrical device 20B. The non-motorized electrical device 20A is defined as at least one kind of static electrical device when using electricity, or an electrical device that can remain relatively static when using, including but not limited to a most household device (such as an air conditioner, a fan, or a kitchen device), an electronic device (such as a mobile phone, a tablet, or a computer) and a fitness device. The motorized electrical device 20B is defined as an electrical device that includes at least one motion state when using electricity, or an electrical device that uses a motor to generate mechanical motion to realize functions, including but not limited to a garden tool (such as a lawn mower, a snow blower, or even a riding lawn mower), or a walking tool.

When the motorized electrical device 20B uses electricity, it is often in a state of motion, such as rotation, traveling, or vibration. Therefore, the energy storage power supply 10 connected to the motorized electrical device 20B will also be in a state of motion accordingly, and the connection strength between the energy storage power supply 10 and the motorized electrical device 20B needs to be sufficient to make the energy storage power supply 10 stably supply power to the motorized electrical device 20B. In addition, the motorized electrical device 20B needs to use electricity safely. When the circuit state is normal, the motorized electrical device 20B uses electricity normally, and when the circuit state is abnormal, the motorized electrical device 20B stops using electricity.

When the electrical device 20 is a non-motorized electrical device 20A, the energy storage power supply 10 and the electrical device 20 can only be electrically connected for the energy storage power supply 10 to supply power to the electrical device 20, or the connection between the energy storage power supply 10 and the electrical device 20 can be strengthened by increasing the mechanical connection. When the electrical device 20 is motorized electrical device 20B, the energy transmission between the energy storage power supply 10 and the electrical device 20 is realized through electrical connection, and the stability and continuity of the electrical connection are ensured through mechanical connection.

In an embodiment, when the energy storage power supply 10 is connected to the motorized electrical device 20, the energy storage power supply 10 and the electrical device 20 are latched.

Further, at least one surface of the energy storage power supply 10 and at least one surface of the electrical device 20 are in latching connection. It is understood that the surface may be an outer surface or an inner surface.

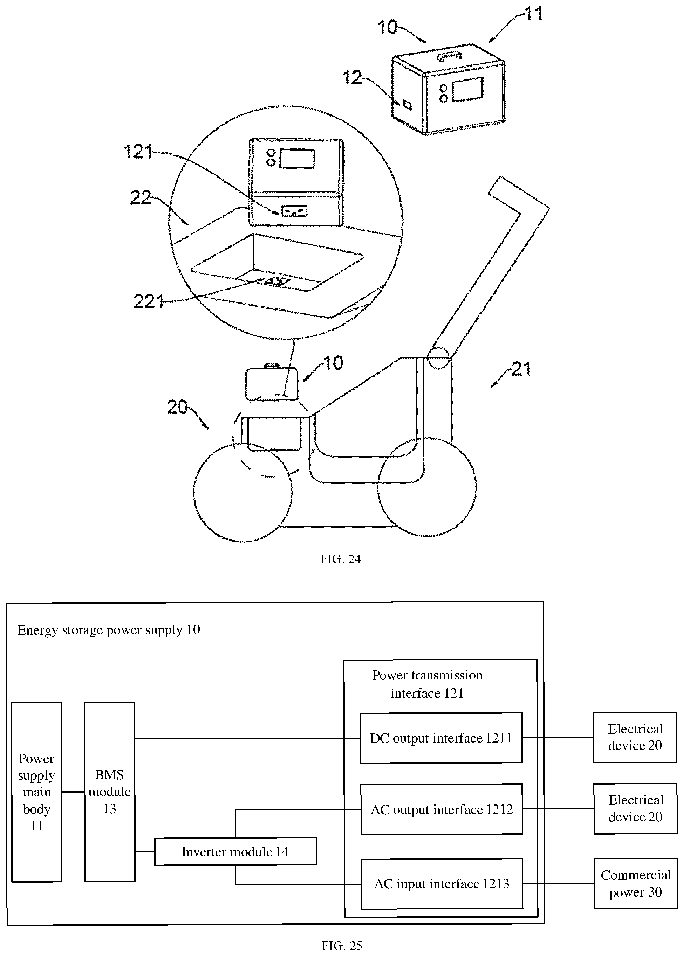

Referring to FIG. 24 and FIG. 25, the energy storage power supply 10 includes a power supply main body 11 and at least one power transmission portion 12, and the power supply main body 11 transmits electric energy by means of the power transmission portion 12. The power transmission unit 12 is connected with the electrical device 20. The power supply main body 11 stores electric energy, and the power transmission portion 12 is electrically connected to the power supply main body 11. After obtaining the stored electric energy from the power supply main body 11, the power transmission portion 12 supplies power to the electrical device 20 connected with the power transmission portion 12. The power supply main body 11 can be input with electric energy, stored with electric energy and output with electric energy. The power transmission portion 12 may be implemented to transmit the electric energy of the power supply main body 11 to the outside and/or to the power supply main body 11.

The power transmission portion 12 is provided with one or more power transmission interfaces 121, which are electrically connected to the power supply main body 11. The power transmission interfaces 121 can be implemented to transmit electric energy to the power supply main body 11, and also to include an interface to transmit electric energy from the power supply main body 11 to the outside.

It is worth mentioning that the power transmission interfaces 121 are configured such that when the energy storage power supply 10 is mechanically connected to the motorized electrical device 20, at least a part of one or more power transmission interfaces 121 are blocked, so as to prohibit the idle power transmission interfaces 121 from being used when the energy storage power supply 10 supplies power to the motorized electrical device 20, thereby ensuring the safety of electricity use.

The electrical device 20 includes an electric main body 21 and at least one power receiving portion 22, and the power receiving portion 22 is electrically connected to the electric main body 21. The power transmission portion 12 and the power receiving portion 22 are conductively connected, so that the energy storage power supply 10 can transmit electric energy to the electrical device 20. The electric main body 21 obtains electric energy from the energy storage power supply 10 through the power receiving portion 22.

The power receiving portion 22 is provided with at least one power receiving interface 221. The power receiving interface 221 is matched with at least one power transmission interface 121. In other words, at least one power transmission interface 121 is adapted to the power receiving interface 221. When the energy storage power supply 10 and the electrical device 20 are connected, the power receiving interface 221 and the power transmission interface 121 are connected to electrically connect the energy storage power supply 10 and the electrical device 20.

In some embodiments of the invention, for example, when the energy storage power supply 10 is connected to the motorized electrical device 20, the power transmission portion 12 and the power receiving portion 22 are at least partially mechanically connected to strengthen the electrical connection between the power transmission interface 121 and the power receiving interface 221.

Referring to the FIG. 25, in some embodiments of the invention, the power transmission interface 121 includes at least one DC output interface 1211. The DC output interface 1211 is directly electrically connected to the BMS module 13. BMS module 13 directly delivers a DC to the DC output interface 1211. The electrical device 20 is electrically connected to the DC output interface 1211. In this case, the electrical device 20 is implemented as a DC electrical device. In other words, the DC output interface directly delivers DC to external DC electrical device.

In some embodiments of the invention, the power transmission interface 121 includes at least one AC output interface 1212, and the AC output interface 1212 is externally connected with an AC electrical device. That is, the energy storage power supply 10 can provide an AC for the AC electrical device.

The power transmission interface 121 may also include at least one AC input interface 1213, which is externally connected with the commercial power 30 to obtain the commercial power and charge the energy storage power supply 10.

The energy storage power supply 10 also includes at least one inverter module 14, and the inverter module 14 is electrically connected to the BMS module 13. The AC output interface 1212 is electrically connected to the inverter module 14. The BMS module 13 delivers a DC to the inverter module 14, which inverts the DC into an AC, and the AC output interface 1212 delivers an AC to an external AC electrical device.

In addition, the inverter module 14 can also be a bidirectional inverter. In this case, the inverter module 14 is electrically connected to the AC input interface 1213, and the inverter module 14 converts the AC input from the AC input interface 1213 into a DC. The DC is stored in the power supply main body 11.

The inverter function of the inverter module 14 includes AC -DC conversion, DC -AC conversion and DC -DC conversion.

In one embodiment of the invention, the inverter module 14 includes a DC boost module, a high-frequency transformer and an AC inverter module. The DC booster module is configured to boost the DC, the high-frequency transformer is configured to change the voltage of the boosted DC, and the AC inverter module is configured to invert the DC into an AC.

The energy storage power supply 10 is equipped with a DC output interface 1211 and an AC output interface 1212, which can transmit power for DC and AC electrical devices, so as to adapt to electrical device with different electrical requirements and enrich the invention scenarios of the energy storage power supply 10. The number of DC output interfaces 1211 and AC output interfaces 1212 can be one or more, so as to connect and supply power to one or more DC and AC electrical device.

The power receiving interface 221 includes an AC power receiving interface and a DC power receiving interface according to different types of the electrical device 20. When connecting the energy storage power supply 10 and the electrical device 20, the power receiving interface 221 is connected with the corresponding type of the power transmission interface 121 of the energy storage power supply 10 according to the types of the power receiving interface 221.

Further, referring to FIGS. 24 to 27, the energy storage power supply 10 is provided with at least one BMS module 13, and the BMS module 13 is configured to control at least the circuit of the energy storage power supply 10. The BMS module 13 is electrically connected to the power supply main body 11, and the power transmission portion 12 is electrically connected to the BMS module 13. The BMS module 13 is configured to detect the circuit state inside the energy storage power supply 10 and control the working state of the circuit according to the circuit state. Further, the BMS module 13 is electrically connected to the power transmission interface 121.

Further, the BMS module is configured to monitor the circuit state and generate the working state code. The working state code includes the information of a voltage, a temperature, a current and other parameters of the circuit.

The power supply system of the energy storage power supply and the electrical device also includes at least one electric management module 23, which can be configured in the electrical device 20. The electric management module 23 is electrically connected to the electric main body 21, and the power receiving portion 22 is electrically connected to the electric management module 23. The electric management module 23 is configured to manage the circuit. At least, the electric management module 23 is configured to manage the circuit of the electrical device 20. The electric management module 23 is configured to monitor the circuit state and control the electric of the electrical device 20 according to the circuit state. The electric management module 23 and the BMS module 13 communicate with each other to control electric and/or power off according to the actual circuit state.

In addition, optionally, after the energy storage power supply 10 and the electrical device 20 are connected, the BMS module 13 establishes communication with the electric management module 23, and the electric management module 23 detects the circuit state of the electrical device 20 to control the electric of the electrical device 20 according to the circuit state.

The BMS module 13 continuously sends the working state code to the electric management module 23. Specifically, the electric management module 23 is provided with a preset protection value of the working state code. Specifically, the electric management module 23 detects the values of parameters such as a voltage, a current and a temperature of the circuit.

The electric management module 23 is preset with normal numerical ranges of various parameters when the circuit is in a normal state, including but not limited to normal numerical ranges of parameters such as a voltage, a current and a temperature of the circuit. If the working state code meets the preset protection value, the circuit parameters of the electrical device 20 meet the normal numerical range, the circuit state is determined as normal, and the electrical device 20 uses electricity normally. When the working state code does not meet the preset protection value, the circuit parameters of the electrical device 20 do not meet the normal numerical range, the circuit state is determined as abnormal, and the circuit is disconnected, thus preventing the electrical device 20 from using electricity unsafe.

That is to say, the electric management module 20 determines whether the circuit is normal or not based on the circuit state of the electrical device 20 detected by itself and the working state code that reflects the circuit state of the energy storage power supply 10 sent by the BMS module 13.

The energy storage power supply 10 is connected with the electrical device 20, and the energy storage power supply 10 and the electrical device 20 are electrically connected, so that the BMS module 13 and the electric management module 23 can be conductively connected. The BMS module 13 sends the working state code to the electric management module 23. The electric management module 23 reads the working state code and determines whether the circuit is normal in combination with the detected circuit status of the electrical device 20. The electric management module 23 determines that the circuit state is normal, and the power transmission interface 121 normally discharges to the power receiving portion 22, so that the electric energy of the energy storage power supply 10 is transmitted to the electrical device 20 and input to the electric main body 21 through the power receiving portion 22, so that the electric main body 21 can normally use electricity.

Specifically, the BMS module 13 communicates with the electric management module 23 after being awakened. Further, after the BMS module 13 and the electric management module 23 successfully identify each other, the energy storage power supply 10 can supply power to the electrical device 20, and the electrical device 20 can use electricity.

Specifically, when the energy storage power supply 10 is connected to the electrical device 20, the start switch of the electrical device 20 is started, and the electrical device 20 is braked and turned on, releasing a level signal to activate and wake up the BMS module 13 inside the energy storage power supply 10, and the energy storage power supply 10 sends an identification signal, such as the identity information stored in the energy storage power supply 10, to the electrical device 20, and they perform handshake communication to confirm that they can communicate with each other. After the two shake hands to identify that the communication is successful, When the electrical device 20 starts to work, the BMS module 13 continuously and intermittently sends the working state code (including real-time information such as voltage, current and temperature) to the electrical device 20, and the electrical device 20 receives the working state code, and immediately disconnects the circuit when the electric management module 23 of the electrical device 20 reads that the working state code exceeds the preset protection value.

Specifically, the electric management module 23 determines that the circuit state is abnormal, and sends a corresponding signal to the BMS module 13. The BMS module 13 prohibits the power transmission interface 121 from transmitting power to the electrical device 20 to prevent the electrical device 20 from using electricity unsafe. Alternatively, the circuit between the power receiving portion 22 and the electric main body 21 is turned off, and the electric main body 21 is prevented from using electricity.

It should be noted that the above-mentioned identity information is a specific and unique identifier representing the energy storage power supply 10, such as a set of unique serial numbers, and the identity information is stored in the storage unit of the energy storage power supply 10 or the microprocessor of the controller. After the energy storage power supply 10 normally discharges to the electrical device 20, the electric management module 23 continuously receives the working state code sent by the BMS module 13. Once the electric management module 23 reads that the working state code does not meet the preset protection value, the electric management module 23 determines that the circuit state is abnormal, that is, cuts off the circuit to prevent the electrical device 20 from using electricity unsafe.

In an embodiment, after the energy storage power supply 10 is connected with the electrical device 20, the energy storage power supply 10 firstly sends a basically continuous small current (< 200 mA) to the electrical device 20, and this basically continuous small current (< 200 mA) supplies power to the electric management module 23. When the user starts the start switch of the electrical device 20, the BMS module 13 inside the energy storage power supply 10 is awakened in response to receiving the execution signal (level signal) of the start switch. The electric management module 23 transmits a signal to the energy storage power supply 10 to request a large current (> 8 A) from the energy storage power supply 10, and receives a large current (> 8 A) from the energy storage power supply 10 based on the signal.

In an embodiment, the electrical device 20 is provided with a wake-up circuit. After the power transmission portion 12 and the power receiving portion 22 of the energy storage power supply 10 and the electrical device 20 are connected, the switch of the electrical device 20 is pressed to turn on the electrical device 20, and the wake-up circuit of the electrical device 20 wakes up the BMS module 13. For example, the wake-up circuit of the electrical device 20 sends a level signal to the energy storage power supply 10 to wake up the BMS module. The BMS module 13 sends an identification signal to the electric management module 23, and the electric management module 23 and the BMS module identify each other. If the identification is successful, the energy storage power supply 10 sends an operating current to the electric management module 23, and the electrical device 20 is started. The BMS module 13 continuously sends the working state code to the electric management module 23.

It is also worth mentioning that the BMS module 13 performs handshake recognition between the electric management module 23 and the energy storage power supply 10 after being awakened and before the electric management module 23 transmits a signal requesting a large current.

The energy storage power supply 10 sends a large current to the electrical device 20 for use by the electrical device 20. In this case, the electric management module 23 keeps detecting the circuit state, so that when the circuit state is abnormal, the circuit can be cut off in time to ensure the safety of electricity use.

The above-mentioned wake-up of the BMS module 13 can also be performed by using a mechanical button/switch provided on the energy storage power supply 10, that is, the BMS module is awakened in response to the execution of the mechanical button/switch.

When the energy storage power supply 10 is connected to the electrical device 20, the user manually operates the mechanical button/switch to wake up the BMS module 13, or the user manually operates the mechanical button/switch to wake up the BMS module 13 first, and then connects the energy storage power supply 10 to the electrical device 20, and the energy storage power supply 10 sends an identification signal, such as the identity information stored in the energy storage power supply 10, to the electrical device 20, and the two perform handshake communication to confirm that they can communicate with each other. After the handshake recognition communication is successful, the start switch of the electrical device 20 is operated, and the electrical device 20 starts to work. The BMS module 13 continuously sends the working state code (including real-time information such as voltage, current and temperature) to the electrical device 20, and the electrical device 20 receives the working state code. When the electric management module 23 of the electrical device 20 reads that the working state code exceeds the preset protection value, the circuit is immediately disconnected.

In an embodiment, after the energy storage power supply 10 is connected with the electrical device 20, the energy storage power supply 10 sends a basically continuous small current (< 200 mA) to the electrical device 20, and the basically continuous small current (< 200 mA) supplies power to the electric management module 23. When the user manually operates the mechanical button/switch, the BMS module 13 inside the energy storage power supply 10 is awakened in response to receiving the execution signal of the mechanical button/switch. Handshaking recognition is performed between the energy storage power supply 10 and the electric management module 23. After the handshake recognition communication between them is successful, the electric management module 23 transmits a signal to the energy storage power supply 10 to request a large current (> 8 A) from the energy storage power supply 10, and operates the start switch of the electrical device 20, and the electrical device 20 receives a large current (> 8 A) from the energy storage power supply 10 based on the signal.

In this way, under the technical scheme of mechanical wake-up, the start-up of the electrical device 20 requires at least two levels of operation before it can be started, that is, the user needs to manually operate the mechanical button/switch of the energy storage power supply 10 to wake up the BMS module 13, and then the user operates the start-up switch of the electrical device 20 before it can be started. This can effectively avoid the wrong start caused by the wrong trigger of electrical device, and is especially suitable for garden tools/electric tools.

In an embodiment of the invention, when the electric management module 23 detects that the circuit state is abnormal, it cuts off the electric circuit inside the electrical device 20 to prevent the electrical device 20 from using electricity unsafe, specifically, it cuts off the circuit between the power receiving portion 22 and the electric main body 21.

In other embodiments of the invention, when the electric management module 23 detects that the circuit state is abnormal, it sends a corresponding signal to the BMS module 13, and the BMS module 13 cuts off the current transmission between the energy storage power supply 10 and the electrical device 20, so as to prevent the electrical device 20 from unsafe electric, specifically, cuts off the circuit between the power transmission portion 12 and the power receiving portion 22.

In other embodiments of the invention, when the electric management module 23 detects that the circuit state is abnormal, it sends a corresponding signal to the BMS module 13, and the BMS module 13 cuts off the discharged circuit inside the energy storage power supply 10, preventing the energy storage power supply 10 from transmitting electric energy to the electrical device 20, specifically, cutting off the circuit between the power supply main body 11 and the power transmission portion 12.

That is, the circuit can be implemented as a circuit including at least a part between the power supply main body 11, the power transmission portion 12, the power receiving portion 22 and the electric main body 21. Cut off the circuit, that is, cut off the circuit between the power supply main body 11 and the electric main body 21 to prevent the power supply main body 11 from discharging to the electric main body 21. The cut-off circuit may be one or more of a circuit between the power receiving portion 22 and the electric main body 21, a circuit between the power transmission portion 12 and the power receiving portion 22, and a circuit between the power transmission portion 12 and the power supply main body 11.

Further, the BMS module 13 includes at least one first power transmission terminal 131, at least one power transmission communication terminal 132 and at least one second power transmission terminal 133. The BMS module 13 also includes a BMS master control module 134, which is electrically connected to the first power transmission terminal 131, the power transmission communication terminal 132 and the second power transmission terminal 133.

In an embodiment, the BMS module 13 further includes a BMS protection unit, and the BMS protection unit is electrically connected to the BMS main control unit 134, or the BMS protection unit is electrically connected to the aforementioned power supply main body 11, and the power transmission portion 12 is electrically connected to the BMS protection unit. The BMS protection unit detects the circuit of the energy storage power supply 10. BMS protection unit detects the parameters of the circuit, including but not limited to current, voltage, temperature and other parameters. The BMS module 13 is provided with a normal numerical range when the circuit is normal, such as setting a normal numerical range of current, voltage and temperature according to the circuit design requirements. When the values of parameters such as current, voltage and temperature are in the normal range, the circuit can work normally. When the values of parameters such as current, voltage and temperature do not conform to the normal numerical range, the BMS protection unit will cut off the circuit.

The electric management module 23 includes at least one first power terminal 231, at least one power receiving communication terminal 232 and at least one second power terminal 233. The electric management module 23 also includes a power master control unit 234, which is electrically connected to the first power terminal 231, the power receiving communication terminal 232 and the second power terminal 233.

The first power transmission terminal 131, the power transmission communication terminal 132 and the second power transmission terminal 133 are conductively connected with the first power terminal 231, the power receiving communication terminal 232 and the second power terminal 233. The power receiving communication terminal 232 and the power transmitting communication terminal 132 establish communication connection to transmit or mutually transmit signals. The first power transmission terminal 131 and the second power transmission terminal 133 are correspondingly connected with the first power terminal 231 and the second power terminal 233 to realize power transmission and power receiving between the energy storage power supply 10 and the electrical device 20.

The electric management module 23 includes an electric protection unit 235, and the electric protection unit 235 detects parameters reflecting the circuit state of the electrical device 20, including but not limited to the current, the voltage, the temperature and the like of the circuit. The electric management module 23 is provided with the normal numerical range of each parameter when the circuit is in a normal state, such as setting the normal numerical range of current, voltage and temperature according to the circuit design requirements. When the values of parameters such as current, voltage and temperature are within the normal range, the circuit can work normally. When the values of parameters such as current, voltage and temperature do not conform to the normal numerical range, that is, the circuit is abnormal, the electric protection unit 235 cuts off the circuit and prevents the electric main body 21 from using electricity.

The circuit of that electric protection unit 235 is connected to the circuit of the electrical device 20. The electric protection unit 235 is electrically connected to the electric main body 21, and when the circuit is abnormal circuit anomaly, the circuit discharging to the electric main body 21 is cut off.

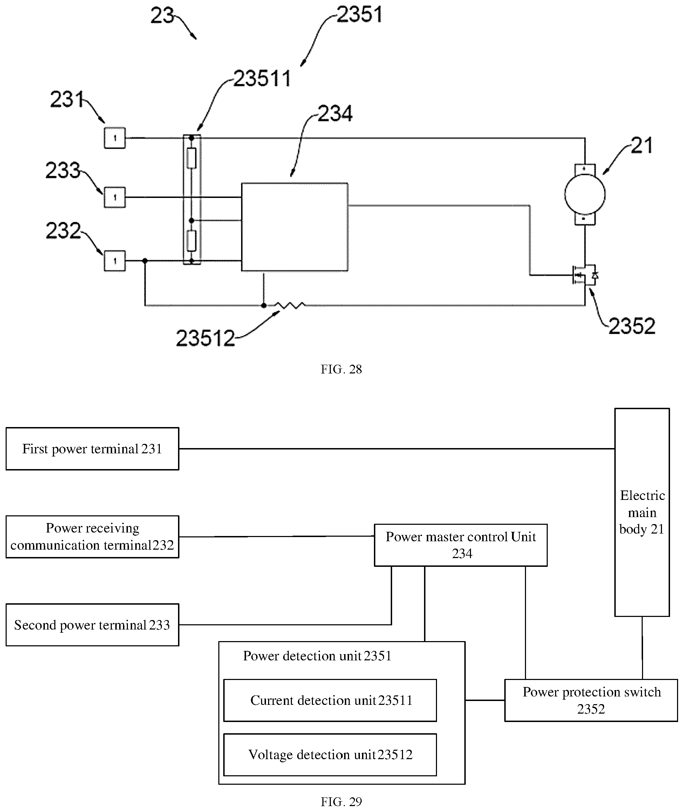

Referring to FIG. 28 and FIG. 29, the electric protection unit 235 includes at least one power detection unit 2351 and at least one power protection switch 2352. The power protection switch 2352 is electrically connected to the power detection unit 2351, and the power protection switch 2352 is electrically connected to the electric main body 21. When the electric detection unit 2351 detects circuit anomaly, the power protection switch 2352 cuts off the circuit discharging to the electric main body 21.

The electric detection unit 2351 includes a current detection unit 23511, and the current detection unit 23511 is electrically connected to the power master control unit 234. The current detection unit 23511 detects the current of the circuit. When the current does not conform to the normal value range, such as the current is too large or too small, the power master control unit 234 determines that the state of the circuit is abnormal, cuts off the circuit, and prevents the electrical device 20 from using electricity unsafe. In other words, the electric management module 23 can realize overcurrent protection and undercurrent protection.

The electric detection unit 2351 includes a voltage detection unit 23512, and the voltage detection unit is electrically connected to the power master control unit 234. The voltage detection unit 23512 detects the voltage of the circuit. When the voltage does not meet the normal value range, such as overvoltage or undervoltage, the power master control unit 234 determines that the state of the circuit is abnormal, cuts off the circuit, and prevents the electrical device 20 from using electricity unsafe. In other words, the electric management module 23 can realize overvoltage protection and undervoltage protection.

When the data detected by the current detection unit 23511 and the voltage detection unit 23512 are all within the normal numerical range, that is, the power detection unit 2351 detects that the circuit state is normal, and the power switch unit 2352 turns on the circuit, so that the current flows to the electric main body 21, and the electric main body 21 normally uses electricity. When at least one parameter does not conform to the normal numerical range, that is, the power detection unit 2351 detects the circuit abnormality, and the power switch unit 2352 closes the circuit to prevent the current from flowing to the electric main body 21. In an embodiment, the power switch unit 2352 is implemented as a MOS tube to realize the switching function of the circuit.

In some embodiments of the invention, the power transmission communication terminal 132 sends the data in the energy storage power supply 10 detected by the BMS module 13 to the power master control unit 234 through the power receiving communication terminal 232, and the power master control unit 234 detects whether the parameters of the electric energy transmitted by the energy storage power supply 10 to the electrical device 20 conform to the preset numerical range, so as to control the electrical device 20 to normally use electricity or cut off the circuit. That is to say, the electric management module 23 can determine whether the circuit is normal according to the circuit data detected by itself and combined with the detection data sent by the BMS module 13, and then control whether the circuit works normally. For example, in the example where the electrical device 20 is implemented with a brush motor, the BMS module 13 sends the temperature detection data to the electric management module 23 for the power master control unit 234 to determine whether the circuit is normal in combination with the temperature data.

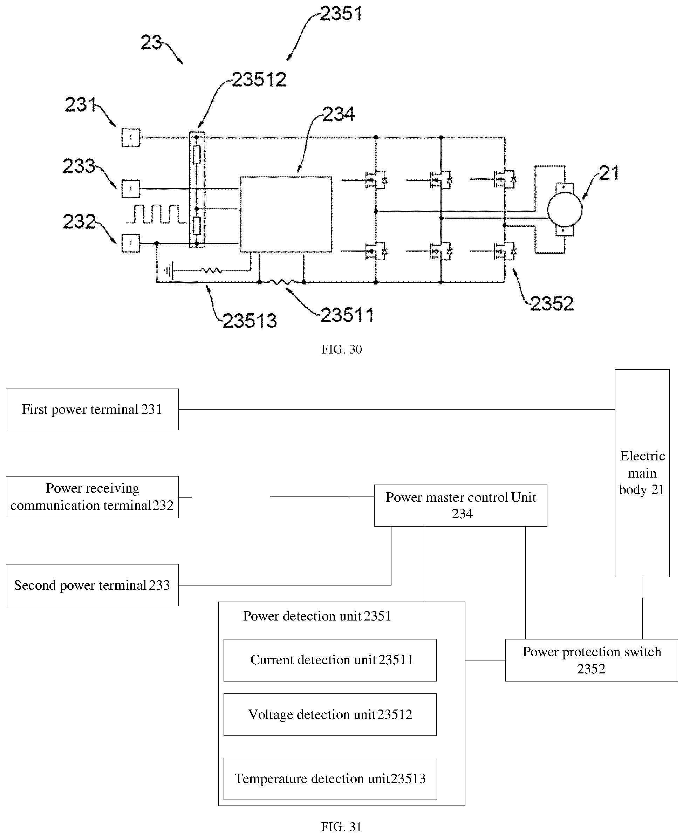

In some embodiments of the invention, for example, when the electrical device 20 is implemented as a motorized electrical device using a brushless motor, as shown in figs. 30 and 31, the electric detection unit 2351 further includes a temperature detection unit 23513, which detects the temperature of the circuit. When the temperature does not conform to the normal value range, such as overtemperature or low temperature, the power master control unit 234 cuts off the circuit. In other words, the electric management module 23 can realize over-temperature protection and low-temperature protection.

The BMS module 13 of the energy storage power supply 10 can identify the type of the power transmission interface 121 connected by the electrical device 20 and the circuit type of the electrical device 20, and then deliver appropriate electric energy to the electrical device according to the corresponding electric requirements.

In some embodiments of the invention, the first power transmission terminal 131, the power transmission communication terminal 132 and the second power transmission terminal 133 are implemented in the power transmission portion 12, and further, are implemented in the power transmission interface 121. In some embodiments of the invention, the first power terminal 231, the power receiving communication terminal 232 and the second power terminal 233 are implemented in the power connection portion 22, and further, in the power receiving interface 221.

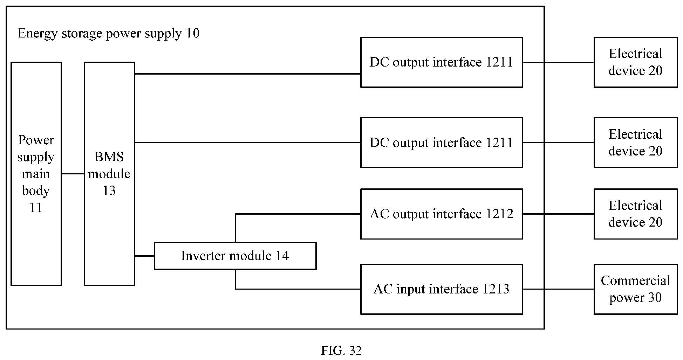

In an embodiment, in other embodiments of the invention, referring to the schematic diagram of FIG. 32, the power transmission interface 121 includes two or more DC output interfaces 1211. Two or more DC output interfaces 1211 are respectively directly connected to the BMS module 13. That is, the energy storage power supply 10 is provided with two or more DC direct transmission circuits. Two or more DC output interfaces 1211 can be connected with two or more DC electrical devices.

Further, there is a distance interval or a space interval between two or more DC output interfaces 1211. For example, two or more DC output interfaces 1211 are arranged on different surfaces of the energy storage power supply 10, or at different positions on the same surface, so as to adapt to the different positions of the power receiving interfaces 221 on different electrical devices 20.

In an embodiment, two or more DC output interfaces 1211 are located in different positions of the energy storage power supply 10, and can be respectively connected to motor-driven DC electrical device and non-motor DC electrical device.

In an embodiment, the energy storage power supply 10 and the electrical device 20 are connected by ropes for electric energy transmission. There is a rope connection between at least one power transmission interface 121 of the energy storage power supply 10 and the power receiving interface 221 of the electrical device 20, so that electric energy is transmitted to the electrical device 20 along the rope.

In an embodiment, when the electrical device 20 is a motorized electrical device and is connected with the energy storage power supply 10 by ropes, only one power transmission interface 121 of the energy storage power supply 10 and the electrical device 20 is allowed to be exposed for being connected with the power receiving interface 221 of the electrical device 20 by ropes, and the other power transmission interfaces 121 are at least partially shielded to avoid users' use. In other words, the external power supply of other power transmission interfaces 121 is switched to prohibit users from using them.

According to another aspect of the invention, the invention also provides an electric protection method, which is used for protecting the electric of the power supply system of the energy storage power supply and the electrical device.

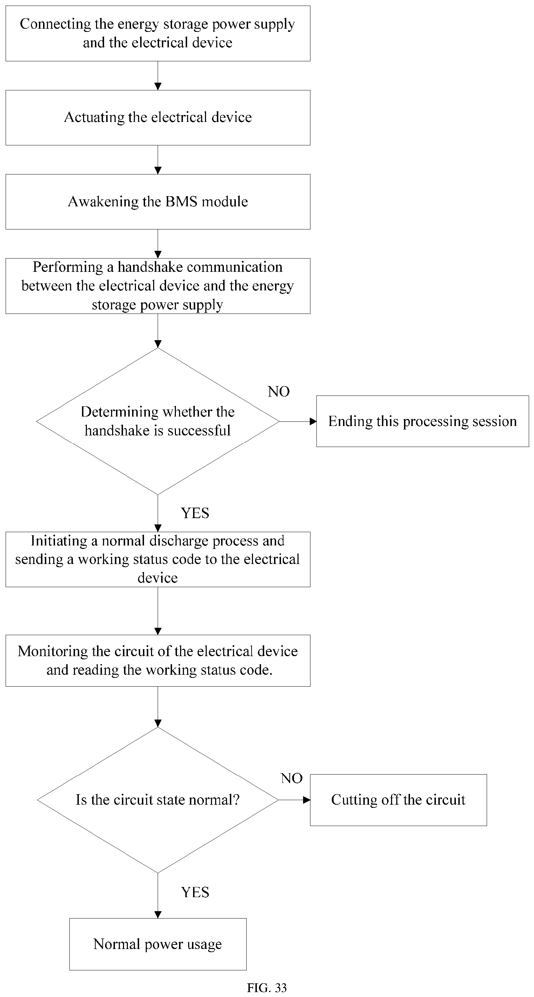

As illustrated in FIG. 33, the power supply method of the energy storage power supply and the electrical device includes at least the following steps:
(A) connecting an energy storage power supply and an electrical device, enabling a BMS module configured in the energy storage power supply and an electric management circuit configured in the electrical device to communicate with each other, and detecting a circuit of a power supply system of the energy storage power supply and the electrical device; and
(B) controlling the circuit according to the detected circuit state, if the circuit state is normal, controlling the electric of the electrical device, and if the circuit state is abnormal, cutting off the circuit.

The method includes the following steps:
detecting the circuit state of the energy storage power supply and generating a working state code;
continuously sending, by the BMS module, the working state code to the electric management module; and
reading the working state code to determine whether the working state code meets a preset protection value, if the working state code meets the preset protection value, determining that the circuit state is normal, if the working state code does not meet the preset protection value, determining that the circuit state is abnormal.

In an embodiment, the step (B) further includes the following step: detecting the circuit state of the electrical device to determine whether the circuit state of the electrical device is normal.

In an embodiment, the step (A) further includes the following steps: waking up the BMS module to connect the electric management module, where the BMS module and the electric management module identify each other, and after successful identification, performing communication between the BMS module and the electric management module; and continuously sending, by BMS module, the working state code to the electric management module.

In an embodiment, the step (A) further includes the following steps: sending, by the electric management module, a level signal to the BMS module; activating the BMS module to send an identification signal to the electrical device, so as to perform handshake communication between the electrical device and the energy storage power supply to confirm whether communication is possible; and in response to the handshake communication being successfully identified, enabling the electrical device to work.

In an embodiment, the step (A) further includes the following steps: activating the energy storage power supply to wake up the BMS module to send an identification signal to the electrical device; and starting the electrical device; performing, by the electric management module and BMS module, handshake communication to identify whether communication is possible; in response to the communication identification being successful, starting the electrical device to work.

The electric protection method further includes the following steps: sending, by the BMS module, the information code to the electric management module; identifying, by the electric management module, the information code, and in response to the identification being successful, sending a model code to the BMS module; and identifying, by he BMS module, the model code, and in response to the identification being successful, starting normal discharge, and suppling, by the energy storage power supply, power to the electrical device.

Specifically, the information code reflects the information of the energy storage power supply, the model code reflects the information of the electrical device, the BMS module and the electric management module identify each other and perform handshake communication to confirm whether the energy storage power supply and the electrical device can be connected, and the energy storage power supply supplies power to the electrical device.

The electric protection method further includes the following steps: forming a circuit between the power supply main body, the power transmission portion, the power receiving portion of the electrical device and the electric main body of the electrical device, and selecting the cut-off circuit from one or more circuits between the electric main body and the power receiving portion, between the power receiving portion and the power transmission portion, and between the power transmission portion and the power supply main body.

The method further includes the following steps: detecting one or more parameters such as a voltage, a current, a temperature of the circuit; determining that the circuit state is abnormal if one of the one or more parameters does not meet a preset protection value; and in response to the one or more parameters meet the preset protection value, and determining that the circuit state is normal.

## Claims

1. An energy storage power supply, comprising: a housing, a power connection portion, a power supply main body, and an output portion, wherein the power connection portion, the power supply main body, and the output portion are provided in the housing; the power connection portion is configured to provide electric energy from outside to the power supply main body; the power supply main body is configured to store the electric energy; and the output portion is configured to provide the electric energy stored in the power supply main body in a form of a direct current (DC) or an alternating current (AC) to an electrical device; and
wherein the output portion comprises at least one DC mating output unit, and the electrical device is suitable for cordless electrical connection to the at least one DC mating output unit.

2. The energy storage power supply as claimed in claim 1, wherein the output portion comprises at least two DC mating output units;
wherein at least one DC mating output unit of the at least two DC mating output units is disposed outside the housing, and a first electrical device is suitable for cordless electrical connection to the at least one DC mating output unit disposed outside the housing from the outside of the housing; and
wherein at least one DC mating output unit of the at least two DC mating output units is disposed in the housing, and a second electrical device is suitable for being inserted into the housing and suitable for cordless electrical connection to the at least one DC mating output unit disposed in the housing.

3. The energy storage power supply as claimed in claim 2, wherein the housing comprises a housing body and at least one mating portion disposed on the housing body, each mating portion of the at least one mating portion defines at least one accommodating cavity, the at least one DC mating output unit disposed in the housing is disposed in the at least one accommodating cavity, and the second electrical device is suitable for being inserted into the at least one accommodating cavity and suitable for cordless electrical connection to the at least one DC mating output unit disposed in the at least one accommodating cavity; and the first electrical device is a device that outputs energy in a form of non-electric energy, and the second electrical device is a device that outputs electric energy.

4. The energy storage power supply as claimed in claim 2, wherein each of the at least two DC mating output units comprises at least one first DC mating output power supply terminal and at least one second DC mating output power supply terminal, and the electrical device is suitable for connecting with the at least one first DC mating output power supply terminal and the at least one second DC mating output power supply terminal to realize cordless electrical connection; each of the at least two DC mating output units further comprises at least one DC mating output communication terminal, configured to realize communication connection between the energy storage power supply and the electrical device; and the energy storage power supply is configured to send at least one power supply related information to the electrical device and/or receive at least one device related information through the at least one DC mating output communication terminal.

5. The energy storage power supply as claimed in claim 2, wherein the output portion further comprises at least one DC connection output unit, and the at least one DC connection output unit is disposed outside the housing, and a third electrical device is suitable for being electrically connected with the at least one DC connection output unit through a wire; and
wherein the power supply main body further comprises an inverter module configured to invert a DC into an AC, the output portion further comprises at least one AC connection module, and the at least one AC connection module is electrically connected with the inverter module to output the AC.

6. The energy storage power supply as claimed in claim 1, wherein the at least one DC mating output unit is disposed outside the housing, and the energy storage power supply has at least one of a first feature and a second feature, so that the energy storage power supply is suitable for supplying power to a DC electrical device through cordless electrical connection:
the first feature: the at least one DC mating output unit is movably disposed on the housing, so that a position of each of the at least one DC mating output unit on the housing is capable of being adjusted to adapt to charging interfaces in different locations on different DC electrical devices; and
the second feature: the housing is provided with a first connection structure detachably connected with a second connection structure of the electrical device, so that after one of the at least one DC mating output unit is connected with a charging interface of the DC electrical device, the housing is connected with the electrical device through the first connection structure and the second connection structure, and the energy storage power supply is capable of being moved along with the electrical device.

7. The energy storage power supply as claimed in claim 6, wherein a circumferential side surface of the housing is provided with a rail extending along a height direction of the energy storage power supply, and the at least one DC mating output unit is movably disposed on the rail to adjust a height of the at least one DC mating output unit.

8. The energy storage power supply as claimed in claim 6, wherein the first connection structure is a snap-fit connection structure, a latch connection structure, a sliding groove connection structure, or a magnetic connection structure; or,
wherein the first connection structure is an embedded connection structure; and connection between the housing and the electrical device is realized by embedding at least a part of the housing into a power supply bin of the electrical device.

9. A power supply system of an energy storage power supply and an electrical device, comprising: the energy storage power supply as claimed in any one of claims 1-8, and at least one electrical device;
wherein each of the at least one electrical device comprises a device housing and a device mating portion disposed on the device housing, an external DC power supply is suitable for supplying power to the electrical device through the device mating portion, and the device mating portion is suitable for cordless electrical connection to the at least one DC mating output unit disposed outside the housing.

10. The power supply system as claimed in claim 10, wherein the electrical device is a non-motorized device or a motorized device, the non-motorized device is one selected from the group consisting of a mobile device, a power supply device, a projection device, a display, a communication device providing a local area networks, a charging device, an audio device, and a lamp, and the motorized device is one selected from the group consisting of a walking device, a garden device, a drinking water device, a fan, and an AC/DC outdoor air conditioner;
wherein the number of the electrical device is at least two, the output portion comprises at least two DC mating output units, and the at least two electrical devices are capable of being simultaneously and respectively cordless electrical connection to the at least two DC mating output units.

11. The power supply system as claimed in claim 9, wherein the device mating portion is movably disposed on the device housing, and a position of the device mating portion on the device housing is capable of being adjusted to adapt to the DC mating output unit at different positions.

12. The power supply system as claimed in claim 9, wherein the housing of the energy storage power supply is provided with a first connection structure, the device housing of the electrical device is provided with a second connection structure, and the first connection structure is detachably connected to the second connection structure; and
wherein the energy storage power supply is held on the electrical device through the first connection structure and the second connection structure, and the energy storage power supply is capable of being moved along with the electrical device.

13. The power supply system as claimed in claim 9, wherein the device housing of the electrical device is provided an open bin for placing the energy storage power supply, the energy storage power supply is suitable to be placed in the open bin along a first direction, and the device mating portion is disposed on a bottom surface of the open bin, so that after the energy storage power supply enters the open bin, the DC connection output unit is directly mated with the device mating portion.

14. The power supply system as claimed in claim 13, wherein when the electrical device is in operation, the first direction is a vertical direction, so that a tight contact between the DC mating output unit and the device mating portion is achieved under the action of gravity of the energy storage power supply.

15. The power supply system as claimed in claim 14, wherein the housing of the energy storage power supply and the device housing are respectively provided with locking structures matched with each other, so as to stably hold the energy storage power supply in the open bin.

16. A power supply system of an energy storage power supply and an electrical device, comprising: the energy storage power supply as claimed in any one of claims 1-8, and an electrical device;
wherein the energy storage power supply comprises a battery module, a battery management module and a first output interface, and the battery management module is configured to controllably output electric energy stored in the battery module through the first output interface;
wherein the electrical device comprises an electric main body, an electric management module, and a first input interface, and the electric management module is configured to controllably supply the electric energy input from the first input interface to the electric main body;
wherein the first input interface is suitable to be electrically connected with the first output interface to realize conductive connection and communication connection between the battery management module and the electric management module; and
wherein the electric management module is configured to monitor a circuit state of the electrical device, and the battery management module is suitable for monitoring a circuit state of the energy storage power supply, so that when an internal circuit of the electrical device or an internal circuit of the energy storage power supply is abnormal, the electric management module and/or the battery management module disconnect/disconnects a connection between the battery module and the electric main body to prevent the electric main body from using electricity.

17. A power supply method of an energy storage power supply and an electrical device, wherein the power supply method comprises the following steps:
a connecting step, comprising: electrically connecting the energy storage power supply and the electrical device, to make a battery management module of the energy storage power supply be conductively and communicatively connected to an electric management module of the electrical device;
a power supply step, comprising: obtaining, by an electric main body of the electrical device, electric energy of the energy storage power supply to work; and
a monitoring step, comprising: monitoring, by the battery management module, a circuit state of the energy storage power supply; monitoring, by the electric management module, a circuit state of the electrical device; in response to an internal circuit of the electrical device or an internal circuit of the energy storage power supply being abnormal, disconnecting, by the electric management module and/or the battery management module, a connection between the battery module and the electric main body to prevent the electric main body from using electricity.

18. An energy storage power supply, comprising: a housing, a charging portion, a power supply main body, and a discharge portion, wherein the charging portion, the power supply main body, and the discharge portion are disposed in the housing, the charging portion is configured to provide electric energy from outside to the power supply main body, the power supply main body is configured to store the electric energy, and the discharge portion is configured to provide the electric energy stored in the power supply main body in a form of a DC or an AC to an electrical device; and
wherein the discharge portion comprises at least one first discharge interface suitable for outputting a DC, and an average discharge current of each of the at least one first discharge interface is greater than or equal to 8 amperes (A); the discharge portion further comprises at least one other discharge interface different from the at least one first discharge interface, and when the energy storage power supply is configured to output a current from one of the at least one first discharge interface, the at least one other discharge interface is configured to not output a current or is configured to be physically covered; and each of the at least one first discharge interface is suitable for cordless electrical connection with the electrical device.

19. An energy storage power supply, comprising: a housing, a charging portion, a power supply main body, and a discharge portion, wherein the charging portion, the power supply main body, and the discharge portion are disposed in the housing, the charging portion is configured to provide electric energy from outside to the power supply main body, and the power supply main body is configured to store the electric energy, the discharge portion is configured to provide the electric energy stored in the power supply main body in a form of a DC or an AC to an electrical device;
wherein the discharge portion comprises at least one first discharge interface suitable for outputting a DC, the discharge portion is configured to output a current of not less than 8 A through one of the at least one first discharge interface, and each of the at least one first discharge interface is suitable for cordless electrical connection with the electrical device;
wherein the housing is provided with at least one battery bin, the discharge portion further comprises a second discharge interface disposed in the battery bin, and a battery pack is configured to be inserted into the battery bin and electrically connected with the second discharge interface to obtain electric energy; and
wherein the discharge portion further comprises at least one other discharge interface different from the at least one first discharge interface and the second discharge interface, and when the energy storage power supply is configured to output the current through one of the at least one first discharge interface, the at least one other discharge interface does not output a current or is physically covered.

20. An energy storage power supply system of an energy storage power supply and an electrical device, comprising: the energy storage power supply as claimed in claim 18 or claim 19, and at least one electrical device;
wherein each of the at least one electrical device comprises a device housing and a device charging interface disposed on the device housing, and the device charging interface is configured for cordless electrical connection with one of the at least one first discharge interface to obtain the electrical energy from the energy storage power supply.
